# EUROPÄISCHE PATENTSCHRIFT

(11) **EP 3 681 154 B1**
(45) Veröffentlichungstag und Bekanntmachung des Hinweises auf die Patenterteilung: **06.07.2022**
(21) Anmeldenummer: 19219347.2
(22) Anmeldetag: 23.12.2019
(51) Int. Cl.: H04N 9/31

(54) **PROJEKTOR ZUM PROJIZIEREN VON BILDERN**
PROJECTOR FOR PROJECTING IMAGES
PROJECTEUR D'IMAGES

(30) Priorität: 10.01.2019 DE 102019100480
(43) Veröffentlichungstag der Anmeldung: 15.07.2020
(73) Patentinhaber: Carl Zeiss Jena GmbH, 07745 Jena (DE)
(72) Erfinder: Nieten, Christoph, 07745 Jena (DE); Geißler, Enrico, 07749 Jena (DE); Moffat, Bryce Anton, 07743 Jena (DE); Wehe, Carsten, 99427 Weimar (DE)
(74) Vertreter: Patentanwälte Geyer, Fehners & Partner mbB

(56) Entgegenhaltungen:
- DE-A1-102016 100 592
- DE-T2-602004 008 975
- US-A- 5 978 142
- US-A1- 2018 308 401

## Beschreibung

Die vorliegende Erfindung betrifft einen Projektor zum Projizieren von Bildern gemäß dem Oberbegriff des Anspruches 1.

Solche Projektoren werden eingesetzt, um die nicht zu vermeidende Untergrundhelligkeit möglichst gering zu halten, was zu einer besseren Darstellung von schwarzen Bildinhalten (mit der Helligkeit Null) führt. Jedoch besteht die Schwierigkeit, dass bei dunklen Bildinhalten die untersten Eingabe-Graustufen (also die Grauwerte, die sich an den Grauwert = Null = Schwarz anschließen) im projizierten Bild nicht mehr gegenüber der verbleibenden Untergrundhelligkeit unterscheidbar darstellbar sind. Es wird sich hier oft mit einem sogenannten zeitlichen Dithering und/oder räumlichen Dithering beholfen. Bei einem zeitlichen Dithering wird der darzustellende Grauwert nur über mehrere nacheinander projizierte Bilder (bzw. Einzelbilder oder Frames), die jeweils für eine vorbestimmte Einzelbilddauer erzeugt werden, gemittelt richtig dargestellt. Das bedeutet, dass z. B. bei fünf aufeinanderfolgenden Einzelbildern das entsprechende Pixel nur in zwei oder drei Einzelbildern eingeschaltet wird und in den anderen Einzelbildern ausgeschaltet wird. Gemittelt über die fünf Einzelbilder kann dann der gewünschte Grauwert einigermaßen gut dargestellt werden. Bei einem räumlichen bzw. örtlichen Dithering erfolgt die Mittelung über das An- und Ausschalten von benachbarten Pixeln in einem einzigen Frame. Mit einem solchen Dithering können einerseits auch nicht alle Grauwerte dargestellt werden. Gerade die Grauwerte, die sich an den Grauwert Null anschließen, sind so nicht darstellbar. Andererseits erzeugt das Dithering ein Flirren, das viele Betrachter als störend empfinden. Ferner ist es möglich, örtliches und zeitliches Dithering zu kombinieren, und diese über aufeinanderfolgende Frames zu variieren, um das "Dither-Muster" zu kaschieren - was aber auch zum Flirren führt.

Diese Schwierigkeiten führen insbesondere auch dann zu einem schlechteren Bildeindruck, wenn mehrere Projektoren zum Projizieren eines großen Gesamtbildes eingesetzt werden, wobei in diesem Fall die projizierten Bilder im Randbereich überlappend projiziert werden, um einen durchgehenden Bildeindruck bereitzustellen. Wenn nun in diesem Randbereich ein solch geringer Grauwert darzustellen ist, führt dies aufgrund der zu hoch dargestellten Helligkeit durch jeden der beiden Projektoren zu noch höheren Helligkeiten bei geringen Eingangshelligkeiten.

Für einen solchen Fall ist es bekannt (DE 10 2016 100 592 A1), Pixel mit so geringen Helligkeiten zu boosten, indem z.B. das entsprechende erste Pixel des ersten Modulators auf schwarz geschaltet wird und das zugeordnete zweite Pixel des zweiten Modulators das eigentlich unerwünschte Restlicht, das auf dieses zweite Pixel fällt, moduliert (und zwar mit einem höheren und somit geboosteten Helligkeitswert bezogen auf die Bilddaten).

Es hat sich jedoch gezeigt, dass damit zwar geringe Helligkeiten unterscheidbar darstellbar sind, jedoch die Abweichung vom idealen Helligkeitswert relativ groß sein kann. Dies führt zu unerwünschten Artefakten in der Bilddarstellung. Solche Abweichungen können z.B. im Randbereich, in dem sich die projizierten Bilder überlappen, wenn mehrere Projektoren zum Projizieren eines großen Gesamtbildes eingesetzt werden, besonders störend sein.

Die US 2018/308401 A1 und die US 5 978 142 A beschreiben jeweils einen Projektor mit zwei hintereinander geschalteten Modulatoren. Die DE 60 2004 008 975 T2 beschreibt einen Projektor, der Verzerrungen im projizierten Bild korrigieren kann.

Ausgehend hiervon ist es Aufgabe der Erfindung, einen Projektor zum Projizieren eines Bildes bereitzustellen, mit dem die beschriebenen Schwierigkeiten möglichst vollständig behoben werden können.

Die Erfindung ist im Anspruch 1 sowie im Anspruch 16 definiert. Vorteilhafte Ausgestaltungen sind in den abhängigen Ansprüchen angegeben.

Der Projektor zum Projizieren eines Bildes kann einen ersten Modulator, der mehrere erste Pixel aufweist, die mit Licht einer Lichtquelle beaufschlagbar sind, einen zweiten Modulator, der dem ersten Modulator nachgeordnet ist und mehrere zweite Pixel aufweist und eine Abbildungsoptik, die den ersten Modulator auf den zweiten Modulator abbildet, aufweisen. Die ersten und zweiten Pixel sind voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar, um das Licht zur Erzeugung des Bildes pixelindividuell zu modulieren Der Projektor umfasst ferner eine Projektionsoptik, die vom zweiten Modulator kommendes Licht auf eine Projektionsfläche abbildet, um das Bild zu projizieren, wodurch jedes zweite Pixel einem Bildpunkt des projizierten Bildes zugeordnet ist, und eine Steuereinheit, die die beiden Modulatoren anhand von zugeführten Bilddaten ansteuert, wobei die Steuereinheit die Modulatoren für den Bereich der minimal möglichen bis maximal möglichen Helligkeit der Bilddaten mit einer ersten Auflösung von NN Stufen ansteuert, wobei NN eine ganze Zahl größer als eins ist, wobei jedem zweiten Pixel mindestens ein erstes Pixel in der Art zugeordnet ist, dass die Abbildungsoptik das zweite Pixel
a) mit Licht vom jeweils zugeordneten ersten Pixel beaufschlagt, wenn das zugeordnete erste Pixel in den ersten Zustand geschaltet ist, um das zweite Pixel aktiv zu beleuchten, und
b) nicht mit Licht vom jeweils zugeordneten ersten Pixel beaufschlagt, wenn das zugeordnete erste Pixel in den zweiten Zustand geschaltet ist, um das zweite Pixel nicht aktiv zu beleuchten, so dass nur nicht zu vermeidendes Restlicht auf das zweite Pixel fällt.
   Die Steuereinheit steuert die Modulatoren so an, dass für mindestens ein zweites Pixel, das einem Bildpunkt zugeordnet ist, der basierend auf den Bilddaten einen Helligkeitswert darstellen soll, der größer als Null,
c) das mindestens eine zweite Pixel in den zweiten Zustand geschaltet wird und das bzw. die zugeordneten ersten Pixel nur während des oder der Zeitabschnitte, in denen das mindestens eine zweite Pixel in den zweiten Zustand geschaltet wird, zur Helligkeitsmodulation in den ersten Zustand geschaltet wird bzw. werden, so dass dann vom mindestens einen zweiten Pixel moduliertes Restlicht ausgeht, das zur Bilderzeugung beiträgt, wobei die Steuereinheit das bzw. die zugeordneten ersten Pixel basierend auf einem erhöhten Helligkeitswert ansteuert,
   oder
d) das bzw. die zugeordneten ersten Pixel mindestens zu den Zeitabschnitten, in denen das mindestens eine zweite Pixel in den ersten Zustand geschaltet wird, in den zweiten Zustand geschaltet ist bzw. sind, so dass keine aktive Beleuchtung erfolgt und das mindestens eine zweite Pixel das Restlicht moduliert, wobei die Steuereinheit das das Restlicht modulierende zweite Pixel basierend auf einem erhöhten Helligkeitswert ansteuert.
   Die Steuereinheit
   wendet A) eine vorgegebene Helligkeitsänderung auf den Helligkeitswert gemäß den Bilddaten für den Bildpunkt so an, dass ein geänderter Helligkeitswert mit einer zweiten Auflösung, die größer ist als die erste Auflösung, berechnet wird, und
   setzt B) den geänderten Helligkeitswert so in den erhöhten Helligkeitswert um, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten angewendet wird, so dass die Steuereinheit einen der Modulatoren im Schritt c) oder d) mit dem erhöhten Helligkeitswert mit der ersten Auflösung ansteuert.

Es wird ferner ein Projektor zum Projizieren eines Bildes, mit
einen erstem Modulator, der mehrere erste Pixel aufweist, die mit Licht einer Lichtquelle beaufschlagbar sind, einem zweiten Modulator, der dem ersten Modulator nachgeordnet ist und mehrere zweite Pixel aufweist, und einer Abbildungsoptik, die den ersten Modulator auf den zweiten Modulator abbildet, bereitgestellt,
wobei der Projektor ferner eine Projektionsoptik, die vom zweiten Modulator kommendes Licht auf eine Projektionsfläche abbildet, um das Bild zu projizieren, wodurch jedes zweite Pixel einem Bildpunkt des projizierten Bildes zugeordnet ist,
und eine Steuereinheit, die die beiden Modulatoren anhand von zugeführten Bilddaten ansteuert, aufweist,
wobei die Steuereinheit die Modulatoren für den Bereich der minimal möglichen bis maximal möglichen Helligkeit der Bilddaten mit einer ersten Auflösung von NN Stufen ansteuert, wobei NN eine ganze Zahl größer als eins ist,
wobei die Steuereinheit
   A) eine vorgegebene Helligkeitsänderung auf den Helligkeitswert gemäß den Bilddaten für den Bildpunkt so anwendet, dass ein geänderter Helligkeitswert mit einer zweiten Auflösung, die größer ist als die erste Auflösung, berechnet wird, und
   B) den geänderten Helligkeitswert so in einen erhöhten Helligkeitswert umsetzt, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten angewendet wird, so dass die Steuereinheit einen der Modulatoren für ein zu boostendes Pixel mit dem erhöhten Helligkeitswert mit der ersten Auflösung ansteuert.

Da die Steuereinheit bei zu boostenden Helligkeitswerten eine vorgegebene Helligkeitsänderung auf den Helligkeitswert gemäß den Bilddaten für das entsprechende zweite Pixel so anwendet, dass ein geänderter Helligkeitswert mit einer zweiten Auflösung bzw. zweiten Helligkeitsauflösung, die größer ist als die erste Auflösung (bzw. erste Helligkeitsauflösung), berechnet wird, und die den geänderten Helligkeitswert so in den erhöhten Helligkeitswert (geboosteten Helligkeitswert) mit der erste Auflösung umsetzt, der größer ist als ein gedachter Vergleichswert mit der ersten Auflösung, der sich ergibt, wenn die vorgegebene Helligkeitsänderung auf den Helligkeitswert gemäß den Bilddaten angewendet wird, kann der zu boostende Helligkeitsbereich feiner aufgelöst dargestellt und somit deutlich näher an der gewünschten idealen Helligkeit erzeugt werden.

Anders gesagt kann im zu boostenden Helligkeitsbereich, der z.B. 5-15% der darzustellenden Helligkeitswerte umfassen kann, eine Helligkeitsänderung berechnet und auf den gesamten Bereich der ersten Auflösung umgesetzt werden, so dass für den zu boostenden Helligkeitsbereich eine höhere Helligkeitsauflösung genutzt werden kann, die z.B. um einen Faktor 6,7 bis 20 höher ist im Vergleich zu dem Helligkeitsbereich, der Helligkeiten aufweist, die größer sind als der erste Schwellwert.

Die Steuereinheit kann zur Berechnung des geänderten Helligkeitswertes den Helligkeitswert gemäß den Bilddaten mit einem die Helligkeitsänderung bestimmenden Wert multiplizieren (oder dazu gleichwertig eine entsprechende Division durchführen). Bevorzugt wird eine prozentuale Helligkeitsänderung durchgeführt.

Bei dem Projektor kann für jeden Bildpunkt eine individuelle Helligkeitsänderung hinterlegt sein, auf die die Steuereinheit bei der Berechnung des geänderten Helligkeitswertes zugreift.

Die Helligkeitsänderung kann eine Helligkeitsreduzierung sein.

Die Helligkeitsänderung kann angewendet werden, um eine Anpassung der Helligkeit in einem Bildfeld-Überlappungsbereich mit einem weiteren Projektor und/oder ein Anpassung an die Helligkeit eines weiteren Projektors durchzuführen.

Insbesondere kann eine Mehr-Projektoren-Anordnung bereitgestellt werden, die zwei, drei, vier, fünf, ... und bis zu 20 oder mehr erfindungsgemäße Projektoren (einschließlich aller beschriebener Weiterbildungen) aufweist, um aus den Bildern der Projektoren ein Gesamtbild zu erzeugen. Die einzelnen Bilder der Projektoren können sich (bevorzugt) teilweise überlappen.

Falls die Projektoren unterschiedliche Farbräume aufweisen, können diese über ein Gamut-Mapping (z.B. im Schritt A) )auf einen gemeinsamen Farbraum gebracht werden. Auf diese Weise wird dafür gesorgt, dass zu jedem RGB-Tripel der Bilddaten, von allen Projektoren der projizierte Farbort und die Helligkeit gleich sind.

Häufig weisen die Projektoren unterschiedliche Weißpunkte auf. Alternativ zu einem Gamut-Mapping lassen sich über eine Weißpunktanpassung (die für alle Pixel des Projektors identisch sein kann, aber nicht sein muss, wenn es einen Farbverlauf über das Bild gibt) alle Projektoren auf einen gemeinsamen Weißpunkt einstellen. Die Weißpunktanpassung kann über eine 3x3-Matrix erfolgen, die einem eingehenden RGB-Wert einen ausgehenden (Weißpunkt-korrigierten) RGB-Wert zuordnet. Nun sind die Bilder aller Projektoren in sich von homogener Helligkeit und weisen den gleichen Weißpunkt auf. Diese Weißpunktanpassung kann bevorzugt im Schritt A) ausgeführt werden.

Bei dem erfindungsgemäßen Projektor kann die Helligkeitsänderung angewendet werden, um eine durch eine Variation der Größe der auf die Projektionsfläche abgebildeten zweiten Pixeln bedingte Variation der Helligkeit der abgebildeten zweiten Pixel zu kompensieren.

Der erhöhte Helligkeitswert kann mindestens das 10-fache des Helligkeitswerts des Vergleichswertes beträgt, wenn NN gleich 256 ist.

Der Faktor kann auch größer als 10 sein. Insbesondere liegt er bevorzugt im Bereich von 10 bis 50, 15 bis 45, 20 bis 40, 25 bis 45 oder 28 bis 38. Bevorzugte Werte für den Faktor sind 18, 25, 36 und 46. Insbesondere kann der Wert des Faktors in Abhängigkeit des Kontrastes des Projektors gewählt werden.

Bei einem Kontrast von 500:1 kann z.B. ein Faktor von 18 gewählt werden. Bevorzugt wird dieser Faktor für die Helligkeitswerte von 1 bis 14 angewendet.

Bei einem Kontrast von 1000:1 kann z.B. ein Faktor von 25 gewählt werden. Bevorzugt wird dieser Faktor für die Helligkeitswerte von 1 bis 10 angewendet.

Bei einem Kontrast von 2000:1 kann z.B. ein Faktor von 36 gewählt werden. Bevorzugt wird dieser Faktor für die Helligkeitswerte von 1 bis 7 angewendet.

Bei einem Kontrast von 4000:1 kann z.B. ein Faktor von 46 gewählt werden. Bevorzugt wird dieser Faktor für die Helligkeitswerte von 1 bis 5 oder von 1 bis 6 angewendet.

Es wird somit bevorzugt ein größerer Faktor mit höherem Kontrast gewählt.

Die Steuereinheit kann die beiden Modulatoren mittels pulsweitenmodulierter Steuerdaten ansteuert.

Die Steuereinheit kann
im Schritt A) eine vorgegebene Helligkeitsänderung auf den Helligkeitswert gemäß den Bilddaten für jedes zweites Pixel so anwenden, dass ein geänderter Helligkeitswert mit einer zweiten Auflösung, die größer ist als die erste Auflösung, berechnet wird, und den geänderten Helligkeitswert mit einem Boost-Schwellwert vergleichen und kann,
wenn der geänderte Helligkeitswert kleiner als der Boost-Schwellwert ist, den Schritt B) ausführen.

Wenn der geänderte Helligkeitswert gleich groß oder größer als der Boost-Schwellwert ist, kann die Steuereinheit den geänderten Helligkeitswert in einen Helligkeitswert mit der ersten Auflösung umsetzt, ohne eine zusätzliche Erhöhung durchzuführen. Solche zweite Pixel werden somit nicht geboostet.

Der Boost-Schwellwert liegt bevorzugt mit der zweiten Auflösung vor.

Wenn der geänderte Helligkeitswert gleich groß oder größer als der Boost-Schwellwert ist, kann die Steuereinheit den geänderten Helligkeitswert in einen verringerten Helligkeitswert mit der ersten Auflösung umsetzen, der das Restlicht in der Art berücksichtigt, dass der verringerten Helligkeitswert niedriger ist als der Helligkeitswert gemäß den Bilddaten und der vorgegebenen Helligkeitsänderung, wobei die Steuereinheit das bzw. die Pixel im Schritt c) oder d) basierend auf dem verringerten Helligkeitswert ansteuert.

Die Steuereinheit kann das zumindest eine zweite Pixel, das das Restlicht gemäß Schritt c) moduliert, durch folgende Schritte bestimmen:
I) es wird zumindest ein zweites Pixel ausgewählt, das einem Bildpunkt zugeordnet ist, dessen durch die Bilddaten und der vorgegebenen Helligkeitsänderung vorgegebener Helligkeitswert größer als Null und kleiner oder gleich dem Boost-Schwellwert ist, und
II) es wird ein ausgewähltes zweites Pixel als ein das Restlicht modulierendes zweites Pixel dann bestimmt, wenn alle zugeordneten ersten Pixel aufgrund der Bilddaten und der vorgegebenen Helligkeitsänderung jeweils gemäß eines Helligkeitswertes angesteuert werden, der kleiner ist als ein vorbestimmter zweiter Schwellwert,
wobei der zweite Schwellwert so gewählt ist, dass sich der bzw. die Zeitabschnitte, zu denen die ersten Pixel in den ersten Zustand zu schalten sind, nicht mit dem oder den Zeitabschnitten überlappen, zu denen das das Restlicht modulierende zweite Pixel in den ersten Zustand zu schalten ist, um das Restlicht zu modulieren.

Der Boost-Schwellwert kann dem ersten Schwellwert entsprechen.

Die Steuereinheit kann den Schritt II) für ein im Schritt I) ausgewähltes zweites Pixel nur ausführen, wenn zumindest eines von k Nachbarpixeln des ausgewählten zweiten Pixels einem Bildpunkt zugeordnet ist, dessen durch die Bilddaten und der vorgegebenen Helligkeitsänderung vorgegebenen Helligkeitswert größer als der erste Schwellwert ist, wobei k eine natürliche Zahl größer oder gleich 1 ist.

Bei dem erfindungsgemäßen Projektor sowie allen seinen Weiterbildungen können die Funktion des ersten und zweiten Modulators auch vertauscht werden. In diesem Fall steuert die Steuereinheit die ersten Pixel des ersten Projektors in der Art und Weise an, wie es für die zweiten Pixel des zweiten Projektors beschrieben ist. Entsprechendes gilt für die Ansteuerung der zweiten Pixel.

Der Projektor kann
mehrere Farbkanälen, um Farbteilbilder des zu projizierenden Bildes zu erzeugen, aufweisen, wobei ein erster Farbkanal den ersten Modulator, den zweiten Modulator und die Abbildungsoptik aufweist und wobei jeder weitere Farbkanal
- den ersten Modulator oder einen weiteren ersten Modulator, der mehrere erste Pixel aufweist, die voneinander unabhängig ansteuerbar sind, um Licht, mit dem der erste Modulator beaufschlagbar ist, zu modulieren,
- die Abbildungsoptik oder eine weitere Abbildungsoptik und
- den zweiten Modulator oder einen weiteren zweiten Modulator, der mehrere zweite Pixel aufweist, die voneinander unabhängig ansteuerbar sind, und der mit dem vom ersten Modulator modulierten Licht mittels der Abbildungsoptik beaufschlagbar ist und dieses mittels der zweiten Pixel moduliert, um ein Farbteilbild zu erzeugen, umfasst,
   wobei die Steuereinheit jeden Farbkanal so ansteuert, dass eines der Farbteilbilder erzeugt wird, und
   die Projektionsoptik die erzeugten Farbteilbilder so auf eine Projektionsfläche abbildet, dass die Farbteilbilder als ein projiziertes mehrfarbiges Bild wahrnehmbar sind,
   wobei jeder Farbkanal für die Erzeugung eines Farbteilbildes einer vorbestimmten Grundfarbe ausgebildet ist,
   wobei der Farbort der vorbestimmten Grundfarbe mit der zur erzeugenden Helligkeit variiert und
   wobei die Steuereinheit jeden Farbkanal so ansteuert, dass für mindestens einen Bildpunkt im mehrfarbigen Bild, der gemäß den Bilddaten einen vorbestimmten Zielfarbort und eine vorbestimmte Zielhelligkeit aufweisen soll, die durch den Farbkanal oder die Farbkanäle bedingte Farbortverschiebung des vorbestimmten Zielfarborts unter Beibehaltung der Zielhelligkeit kompensiert wird.

Die Steuereinheit kann bei der Ansteuerung der Farbkanäle mit abnehmender Zielhelligkeit eine größere Kompensation bewirken.

Die Steuereinheit kann für mittels des Projektors erzeugbare Zielfarborte mit zugeordneten Zielhelligkeiten vorbestimmte und abgespeicherte Korrekturwerte für die Farbkanäle aufweisen, wobei die Steuereinheit die Korrekturwerte bei der Ansteuerung der Farbkanäle zur Kompensation verwendet.

Die Steuereinheit kann die Kompensation auf den Farbort mit dem ersten Schwellwert oder dem Boost-Schwellwert als Zielhelligkeitswert anpassen. Dabei kann der erste Schwellwert bzw. der Boost-Schwellwert für jeden Farbkanal unterschiedlich sein. Es ist auch möglich, dass der erste Schwellwert bzw. der Boost-Schwellwert für mindestens zwei Farbkanäle gleich ist. Durch die Modulation des Restlichts wird quasi die Untergrundhelligkeit selbst moduliert, so dass eine unterscheidbare Darstellung von sehr geringen Grauwerten und insbesondere Grauwerten beginnend mit Werten größer Null möglich ist.

Bevorzugt moduliert das zumindest eine zweite Pixel nur das Restlicht zur Erzeugung des Bildes bzw. während einer Einzelbilddauer des zu erzeugenden Bildes.

Unter dem Helligkeitswert gemäß den Bilddaten wird hier insbesondere ein Eingabe-Grauwert bzw. Ansteuerwert für die Modulatoren verstanden, der ein Wert aus einem festgelegten Wertebereich ist. So kann der Wertebereich z.B. nur ganzzahlige Werte von 0 bis 255 aufweisen, wobei Null die geringste Helligkeit und somit schwarz und 255 die größte Helligkeit sein soll. Bei einer farbigen oder mehrfarbigen Darstellung gilt dies für jede Farbe des zu erzeugenden Farbbildes oder Farbteilbildes.

Insbesondere steuert die Steuereinheit das das Restlicht modulierende zweite Pixel basierend auf dem erhöhten Helligkeitswert an. Das das Restlicht modulierende zweite Pixel kann daher als geboostetes Pixel bezeichnet werden. Durch die Erhöhung des darzustellenden Helligkeitswertes wird der Tatsache Rechnung getragen, dass die Untergrundhelligkeit relativ gering ist. Damit ist eine gute Darstellung von kleinen Grauwerten möglich.

Es muss sich dabei um keinen festen Faktor für alle boostbaren Grauwerte (Helligkeitswerte, die größer als Null und kleiner gleich dem vorbestimmten ersten Schwellwert sind) handeln. Für jeden boostbaren Grauwert kann ein individueller Faktor festgelegt sein.

Insbesondere steuert die Steuereinheit die beiden Modulatoren mittels pulsweitenmodulierter Steuerdaten an. Damit ist eine sehr akkurate Ansteuerung möglich. Insbesondere kann die Ansteuerung der beiden Modulatoren gut synchronisiert werden.

Die Steuereinheit kann als das zumindest eine zweite Pixel ein solches zweites Pixel bestimmen, dessen durch die Bilddaten vorgegebene Helligkeitswert größer als Null und kleiner gleich dem ersten Schwellwert ist.

Ferner kann die Steuereinheit das zumindest eine zweite Pixel, das das Restlicht moduliert, durch folgende Schritte bestimmen:
I) es wird zumindest ein zweites Pixel ausgewählt, dessen durch die Bilddaten und der vorgegebenen Helligkeitsänderung vorgegebener Helligkeitswert größer als Null und kleiner gleich dem ersten Schwellwert ist, und
II) es wird ein ausgewähltes zweites Pixel als ein das Restlicht modulierendes zweites Pixel dann (bevorzugt nur dann) bestimmt, wenn alle k Nachbarpixel (bevorzugt in einer Richtung, also erstes direktes Nachbarpixel, zweites Nachbarpixel, das der direkte Nachbar zum ersten direkten Nachbarpixel ist, etc.) im Schritt a) ausgewählt werden. Dabei ist k eine natürliche Zahl größer oder gleich 1.

Die Steuereinheit kann das zumindest eine zweite Pixel, das das Restlicht moduliert, durch folgende Schritte bestimmen:
I) es wird zumindest ein zweites Pixel ausgewählt, dessen durch die Bilddaten und der vorgegebenen Helligkeitsänderung vorgegebener Helligkeitswert größer als Null und kleiner gleich dem ersten Schwellwert ist, und
II) es wird ein ausgewähltes zweites Pixel als ein das Restlicht modulierendes zweites Pixel dann (bevorzugt nur dann) bestimmt, wenn alle zugeordneten ersten Pixel aufgrund der Bilddaten und der vorgegebenen Helligkeitsänderung jeweils gemäß eines Helligkeitswertes angesteuert werden, der kleiner ist als ein vorbestimmter zweiter Schwellwert, wobei der zweite Schwellwert so gewählt ist, dass sich der bzw. die Zeitabschnitte, zu denen die zugeordneten ersten Pixel in den ersten Zustand zu schalten sind, nicht mit dem oder den Zeitabschnitten überlappen, zu denen das das Restlicht modulierende zweite Pixel in den ersten Zustand zu schalten ist, um das Restlicht zu modulieren.

Es wird somit eine zeitliche Trennung der Beleuchtung von geboosteten Pixeln und nicht geboosteten Pixeln erreicht, was an der Grenze zwischen einem boostbaren Pixel und einem nicht geboosteten Pixel in vorteilhafter Weise dazu genutzt werden kann, das geboostete Pixel, das am Rand liegt, sicher nicht zu beleuchten (mit keinem der ihm zugeordneten ersten Pixeln), und das nicht geboostete Pixel, das am Rand liegt, ausreichend zu beleuchten, obwohl zumindest ein Beleuchtungspixel des nicht geboosteten Pixels auch das geboostete Pixel beleuchtet (aber nur zu Zeiten, zu denen das geboostete Pixel in den zweiten Zustand geschaltet ist).

Der Schritt II) kann bevorzugt nur für boostbare zweite Pixel (= im Schritt I) ausgewählte Pixel) durchgeführt werden, deren k-tes Nachbarpixel (jeweils bevorzugt in einer Richtung, also erstes, direktes Nachbarpixel, zweites Nachbarpixel, das der direkte Nachbar zum ersten direkten Nachbarpixel ist, etc.) nicht boostbar ist (gemäß Schritt I)). Die ersten Nachbarpixel können das betrachtete boostbare zweite Pixel in ringförmiger Art umgeben. Die zweiten Nachbarpixel können sowohl das betrachtete boostbare zweite Pixel sowie die ersten Nachbarpixel ringförmig umgeben. Dies gilt in gleicher Weise für dritte, vierte und weitere Nachbarpixel. Dabei ist k eine natürliche Zahl größer oder gleich 1. Wenn alle 1 bis k Nachbarpixel eines boostbaren zweiten Pixels boostbar sind, kann das zweite Pixel geboostet werden (= ausgewähltes zweites Pixel). Mit der Wahl von k kann insbesondere das vom boostbaren zweiten Pixel weitest entfernte zweite Pixel festgelegt werden, bei dessen aktiver Beleuchtung noch Licht (insbesondere in einem solchen Umfang oder mit einem solchen Anteil) auf das boostbare zweite Pixel fällt, das bei der Restlichtmodulation durch das boostbare zweite Pixel störend wäre. Wenn jedem zweiten Pixel ein erstes Hauptbeleuchtungspixel und dazu (in einer Richtung) n Nachbarpixel zugeordnet sind, wobei n eine natürlich Zahl größer oder gleich 1 ist, wird k bevorzugt gleich n gesetzt.

Für die Ansteuerung der ersten Pixel kann aufgrund der Bilddaten der Helligkeitswert gewählt werden, der von allen zweiten Pixeln, dem das erste Pixel zugeordnet ist, der höchste ist.

Mit dem erfindungsgemäßen Projektor können die Bilder bevorzugt jeweils für eine vorbestimmte Einzelbilddauer projiziert werden. Insbesondere kann bzw. können das bzw. die dem zumindest einen zweiten Pixel zugeordneten erste Pixel während der gesamten Einzelbilddauer in den zweiten Zustand geschaltet sein.

Bei dem erfindungsgemäßen Projektor kann jedem zweiten Pixel genau ein erstes Pixel zugeordnet sein. Es ist jedoch auch möglich, dass jedem zweiten Pixel ein erstes Pixel sowie zumindest ein diesem ersten Pixel direkt benachbartes weiteres erstes Pixel zugeordnet ist. Ferner können jedem zweiten Pixel ein erstes Pixel sowie zumindest die diesem ersten Pixel direkt benachbarten weiteren ersten Pixel zugeordnet sein. Es können nicht nur die direkt benachbarten weiteren ersten Pixel zugeordnet sein, sondern auch die jeweils weiteren Nachbarn. Man kann auch sagen, dass jedem zweiten Pixel ein erstes Pixel sowie weitere erste Pixel, die von diesem ersten Pixel um nicht mehr als n Pixel beabstandet sind, zugeordnet sind. Bei n handelt es sich um eine natürlich Zahl von größer oder gleich 1. Die zugeordneten ersten Pixel zeichnen sich insbesondere dadurch aus, dass das von ihnen kommende Licht mittels der Abbildungsoptik zumindest zum Teil auf das zweite Pixel, dem das erste Pixel zugeordnet ist, abgebildet wird.

Ferner kann die Steuereinheit bei dem erfindungsgemäßen Projektor für zweite Pixel, die gemäß den Bilddaten und der vorgegebenen Helligkeitsänderung einen Helligkeitswert darstellen sollen, der größer ist als der erste Schwellwert, die Resthelligkeit in der Weise berücksichtigen, dass das zweite Pixel basierend auf einem verringerten Helligkeitswert, der niedriger ist als der Helligkeitswert und der vorgegebenen Helligkeitsänderung gemäß den Bilddaten, angesteuert wird. Dabei sind die zweiten Pixel bei der Erzeugung des Bildes jedoch bevorzugt zumindest zeitweise gleichzeitig mit zumindest einem zugeordneten ersten Pixel in den ersten Zustand geschaltet. Somit kann die Resthelligkeit mit berücksichtigt werden, die mittels des zweiten Pixels mitmoduliert wird, so dass genauere Grauwerte darstellbar sind. Dies ist insbesondere vorteilhaft für Helligkeitswerte, die zwar größer als der erste Schwellwert sind, die jedoch kleiner oder gleich als 20 % oder 30 % des maximalen Helligkeitswertes sind.

Bei den Modulatoren handelt es sich bevorzugt um reflektive Modulatoren. Insbesondere sind die Modulatoren als Kippspiegelmatrizen ausgebildet.

Sofern hier von Grauwerten bzw. Helligkeitswerten die Rede ist, ist dies bei einer monochromen Darstellung als Grauwert der monochromen Farbe zu verstehen. Bei mehrfarbigen Darstellungen sind die Grauwerte als Helligkeitswerte der entsprechenden dargestellten Farben zu verstehen.

Der erfindungsgemäße Projektor kann insbesondere für eine mehrfarbige Bilddarstellung ausgebildet sein. Dazu kann beispielsweise eine mehrfarbige Beleuchtung vorgesehen sein, die zeitlich nacheinander verschiedene Grundfarben auf den ersten Modulator richtet. Bei den Grundfarben kann es sich um die Farben Rot, Grün und Blau handeln. Der zeitliche Wechsel der Grundfarben wird so schnell durchgeführt, dass für einen Betrachter die zeitlich nacheinander erzeugten Farbteilbilder (z. B. in den Farben Rot, Grün und Blau) nicht zu unterscheiden sind und der Betrachter somit nur ein mehrfarbiges Bild wahrnimmt. Zur Erzeugung der zeitlich aufeinander folgenden Farben kann zwischen der Lichtquelle (die z. B. weißes Licht abgibt) des Projektors und dem ersten Modulator ein sogenanntes Farbrad angeordnet sein, das verschiedene Farbfilter nacheinander in den Strahlengang zwischen der Lichtquelle und dem ersten Modulator einbringt. Es ist jedoch auch jede andere Art der zeitsequentiellen Farberzeugung möglich.

Des Weiteren ist auch eine mehrfarbige Beleuchtung des ersten Modulators möglich, wenn z. B. drei zweite Modulatoren vorgesehen sind, die dann mit den einzelnen Farben (z. B. Rot, Grün und Blau) beleuchtet werden. Dazu können beispielsweise Farbteilwürfel eingesetzt werden. Die drei zweiten Modulatoren erzeugen dann die Farbteilbilder, die mittels der Projektionsoptik in überlagernder Weise auf die Projektionsfläche projiziert werden, um das gewünschte mehrfarbige Bild zu erzeugen. Natürlich können auch mehr oder weniger als drei zweite Modulatoren vorgesehen sein.

Es wird ferner ein Projektor zum Projizieren von Bildern gemäß der eingangs genannten Art weitergebildet, bei dem die Steuereinheit die Modulatoren so ansteuert, dass für zumindest ein zweites Pixel, das gemäß den Bilddaten und der vorgegebenen Helligkeitsänderung einen Helligkeitswert darstellen soll, der größer als Null sowie kleiner gleich einem vorbestimmten ersten Schwellwert ist, das zumindest eine zweite Pixel in den zweiten Zustand geschaltet wird und das bzw. die zugeordneten ersten Pixel nur während des bzw. der Zeitabschnitte, in denen das zweite Pixel in den zweiten Zustand geschaltet wird, in den ersten Zustand geschaltet wird bzw. werden, so dass dann vom zumindest einen zweiten Pixel moduliertes Restlicht ausgeht, das zur Bilderzeugung beiträgt.

Auch bei diesem Projektor wird das nicht zu vermeidende Restlicht moduliert, um geringe Grauwerte darzustellen. Die Modulation des Restlichtes erfolgt jedoch über den ersten Modulator. Der zweite Modulator wird nur genutzt, um das nicht zu vermeidende Restlicht, das dann moduliert ist, zur Bildprojektion bereitzustellen. Es wird also wiederum das nicht zu vermeidende Restlicht in positiver Weise für die Darstellung geringer Helligkeitswerte genutzt.

Bei dem erfindungsgemäßen Projektor kann die Steuereinheit zur Erzeugung des modulierten Restlichtes das bzw. die zugeordneten ersten Pixel basierend auf einem erhöhten Helligkeitswert, der größer ist als ein gedachter Vergleichswert mit der ersten Auflösung, der sich ergibt, wenn die vorgegebene Helligkeitsänderung auf den Helligkeitswert gemäß den Bilddaten angewendet wird, ansteuern. Das bzw. die zugeordneten ersten Pixel werden somit geboostet. Dieser erfindungsgemäße Projektor, bei dem das bzw. die zugeordneten ersten Pixel geboostet werden, kann in gleicher bzw. ähnlicher Art und Weise weitergebildet werden wie der eingangs beschriebene erfindungsgemäße Projektor.

Natürlich können auch beide beschriebenen erfindungsgemäßen Projektoren (einschließlich ihren Weiterbildungen) so kombiniert werden, dass zeitlich nacheinander zweite Pixel und erste Pixel in der beschriebenen Art und Weise geboostet werden.

Ferner wird ein Projektor zum Projizieren von Bildern der eingangs genannten Art bereitgestellt, bei dem die Steuereinheit für zweite Pixel die Resthelligkeit in der Weise berücksichtigt, dass das zweite Pixel basierend auf einem verringerten Helligkeitswert, der niedriger ist als der Helligkeitswert gemäß den Bilddaten, angesteuert wird. Insbesondere sind die zweiten Pixel, die mit dem verringerten Helligkeitswert angesteuert werden, zumindest zeitweise gleichzeitig mit zumindest einem zugeordneten ersten Pixel in den ersten Zustand geschaltet. Es wird also hauptsächlich bei aktiver Beleuchtung des zweiten Pixels moduliert. Zusätzlich wird aber die Modulation des nicht zu vermeidenden Restlichtes für die gewünschte Helligkeit berücksichtigt, was zu genaueren Helligkeitswerten führt. Dies ist insbesondere vorteilhaft für geringe Helligkeitswerte, die z. B. kleiner oder gleich 30 % des maximalen Helligkeitswertes, oder kleiner gleich 20 % des maximalen Helligkeitswertes sind.

Die Abbildungsoptik kann insbesondere als 1:1 -Abbildungsoptik ausgebildet sein. Sie kann jedoch auch als vergrößernde oder verkleinernde Abbildungsoptik ausgebildet sein. Bevorzugt wird durch die Abbildungsoptik eine 1:1-Zuordnung zwischen ersten und zweiten Pixeln bereitgestellt. Aufgrund der tatsächlichen Realisierung der Modulatoren und/oder der Abbildungsoptik kann bei der aktiven Beleuchtung auch Licht von benachbarten ersten Pixeln auf das gemäß der 1:1-Zuordnung zugeordnete zweite Pixel abgebildet werden.

Es ist jedoch auch möglich, z. B. mittels der Abmessungen der eingesetzten Modulatoren und/oder ihrer Anordnung dafür zu sorgen, dass stets das Licht von mehreren ersten Pixeln auf ein zweites Pixel abgebildet wird.

Es wird ferner ein Projektor zum Projizieren eines Bildes, mit
einen erstem Modulator, der mehrere erste Pixel aufweist, die mit Licht einer Lichtquelle beaufschlagbar sind, einem zweiten Modulator, der dem ersten Modulator nachgeordnet ist und mehrere zweite Pixel aufweist, und einer Abbildungsoptik, die den ersten Modulator auf den zweiten Modulator abbildet, bereitgestellt,
wobei die ersten und zweiten Pixel voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar sind, um das Licht zur Erzeugung des Bildes pixelindividuell zu modulieren,
wobei der Projektor ferner eine Projektionsoptik, die vom zweiten Modulator kommendes Licht auf eine Projektionsfläche abbildet, um das Bild zu projizieren, wodurch jedes erste Pixel einem Bildpunkt des projizierten Bildes zugeordnet ist,
und eine Steuereinheit, die die beiden Modulatoren anhand von zugeführten Bilddaten ansteuert, aufweist,
wobei die Steuereinheit die Modulatoren für den Bereich der minimal möglichen bis maximal möglichen Helligkeit der Bilddaten mit einer ersten Auflösung von NN Stufen ansteuert, wobei NN eine ganze Zahl größer als eins ist,
wobei jedem ersten Pixel mindestens ein zweites Pixel in der Art zugeordnet ist, dass die Abbildungsoptik,
   a) wenn das erste Pixel in den ersten Zustand geschaltet ist, das mindestens eine zweite Pixel mit Licht vom ersten Pixel beaufschlagt, um das zweite Pixel aktiv zu beleuchten, und
   b) wenn das erste Pixel in den zweiten Zustand geschaltet ist, das mindestens eine zweite Pixel nicht mit Licht vom ersten Pixel beaufschlagt, um das zweite Pixel nicht aktiv zu beleuchten, so dass nur nicht zu vermeidendes Restlicht auf das zweite Pixel fällt,
      wobei die Steuereinheit die Modulatoren so ansteuert, dass für mindestens ein erstes Pixel, das einem Bildpunkt zugeordnet ist, der basierend auf den Bilddaten einen Helligkeitswert aufweisen soll, der größer als Null ist,
   c) das mindestens eine erste Pixel in den zweiten Zustand geschaltet wird und das bzw. die zugeordneten zweiten Pixel nur während des oder der Zeitabschnitte, in denen das mindestens eine erste Pixel in den zweiten Zustand geschaltet wird, in den ersten Zustand geschaltet wird bzw. werden, so dass keine aktive Beleuchtung erfolgt und das bzw. die zugeordneten zweiten Pixel das Restlicht modulieren, wobei die Steuereinheit das bzw. die das Restlicht modulierenden zweiten Pixel basierend auf einem erhöhten Helligkeitswert ansteuert,
      oder
   d) das bzw. die zugeordneten zweiten Pixel mindestens zu den Zeitabschnitten, in denen das mindestens eine erste Pixel in den ersten Zustand geschaltet wird, zur Helligkeitsmodulation in den zweiten Zustand geschaltet ist bzw. sind, so dass dann von dem bzw. den zugeordneten zweiten Pixeln moduliertes Restlicht ausgeht, das zur Bilderzeugung beiträgt, wobei die Steuereinheit das mindestens eine erste Pixel basierend auf einem erhöhten Helligkeitswert ansteuert,
   dadurch gekennzeichnet, dass
   die Steuereinheit
   A) eine vorgegebene Helligkeitsänderung auf den Helligkeitswert gemäß den Bilddaten für den Bildpunkt so anwendet, dass ein geänderter Helligkeitswert mit einer zweiten Auflösung, die größer ist als die erste Auflösung, berechnet wird, und
   B) den geänderten Helligkeitswert so in den erhöhten Helligkeitswert umsetzt, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten angewendet wird, so dass die Steuereinheit einen der Modulatoren im Schritt c) oder d) mit dem erhöhten Helligkeitswert mit der ersten Auflösung ansteuert.

Der erfindungsgemäße Projektor (hier wird explizit jeder der oben beschriebenen
erfindungsgemäßen Projektoren gemeint) kann die Lichtquelle als Bestandteil des Projektors aufweisen. Des Weiteren kann der erfindungsgemäße Projektor dem Fachmann bekannte weitere Mittel aufweisen, die zum Betrieb des Projektors notwendig sind.

Ferner wird ein Projektionssystem bereitgestellt, bei dem zumindest zwei erfindungsgemäße Projektoren so betrieben werden, dass ihre projizierten Bilder teilweise überlappen, um ein größeres Gesamtbild zu erzeugen. Ein solches Projektionssystem kann beispielsweise für eine Kuppelprojektion (z. B. in Planetarien) oder für Flugsimulatoren oder sonstige Simulatoren (für z. B. PKW, LKW, Motorrad, etc.) eingesetzt werden.

Es wird ferner ein Verfahren zum Projizieren eines Bildes mit dem erfindungsgemäßen Projektor (einschließlich seiner Weiterbildungen) bereitgestellt. Insbesondere wird ein Verfahren zum Projizieren eines Bildes mit einem Projektor mit Doppelmodulation bereitgestellt, bei dem in einem Schritt A) eine vorgegebene Helligkeitsänderung auf den Helligkeitswert gemäß den Bilddaten für den Bildpunkt so angewendet wird, dass ein geänderter Helligkeitswert mit einer zweiten Auflösung, die größer ist als die erste Auflösung, berechnet wird, und in einem Schritt B) der geänderte Helligkeitswert so in den erhöhten Helligkeitswert umgesetzt wird, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten angewendet wird, so dass einer der Modulatoren des Projektors (bevorzugt im Schritt c) oder d)) mit dem erhöhten Helligkeitswert mit der ersten Auflösung angesteuert wird.

Es wird ferner ein Verfahren zum Projizieren von Bildern bereitgestellt, bei dem ein Projektor der eingangs genannten Art so betrieben wird, dass die Steuereinheit die Modulatoren so ansteuert, dass für zumindest ein zweites Pixel, das einem Bildpunkt zugeordnet ist, der gemäß den Bilddaten einen Helligkeitswert darstellen soll, der größer als Null sowie kleiner gleich einem vorbestimmten ersten Schwellwert (oder einem Boost-Schwellwert) ist, das bzw. die zugeordneten ersten Pixel mindestens zu den Zeitabschnitten, in denen das zweite Pixel in den ersten Zustand geschaltet wird, in den zweiten Zustand geschaltet ist bzw. sind, so dass keine aktive Beleuchtung erfolgt und das zweite Pixel das Restlicht moduliert.

Bevorzugt moduliert das zumindest eine zweite Pixel nur das Restlicht zur Erzeugung des Bildes bzw. während einer Einzelbilddauer des zu erzeugenden Bildes.

Des Weiteren wird ein Verfahren zum Projizieren eines Bildes mit einem Projektor der eingangs genannten Art bereitgestellt, bei dem die Steuereinheit die Modulatoren so ansteuert, dass für zumindest ein zweites Pixel, das einem Bildpunkt zugeordnet ist, der gemäß den Bilddaten einen Helligkeitswert darstellen soll, der größer als Null sowie kleiner oder gleich einem vorbestimmten ersten Schwellwert (oder einem Boost-Schwellwert) ist, das zumindest eine zweite Pixel in den zweiten Zustand geschaltet wird und das bzw. die zugeordneten ersten Pixel nur während des bzw. der Zeitabschnitte, in denen das zweite Pixel in den zweiten Zustand geschaltet wird, in den ersten Zustand geschaltet wird bzw. werden, so dass dann vom zumindest einen zweiten Pixel moduliertes Restlicht ausgeht, das zur Bilderzeugung beiträgt.

Des Weiteren wird ein Verfahren zum Projizieren von Bildern bereitgestellt, bei dem ein Projektor der eingangs genannten Art so betrieben wird, dass die Steuereinheit für zweite Pixel die Resthelligkeit in der Weise berücksichtigt, dass das zweite Pixel basierend auf einem verringerten Helligkeitswert, der niedriger ist als der Vergleichswert, angesteuert wird. Bevorzugt wird das zweite Pixel, das mit einem verringerten Helligkeitswert angesteuert wird, zumindest zeitweise gleichzeitig mit zumindest einem zugeordneten ersten Pixel in den ersten Zustand geschaltet. Somit wird das zweite Pixel aktiv beleuchtet und moduliert das Beleuchtungslicht, wobei gleichzeitig das nicht zu vermeidende Restlicht berücksichtigt wird.

Die erfindungsgemäßen Verfahren können in entsprechender Weise wie die erfindungsgemäßen Vorrichtungen bzw. Projektoren weitergebildet werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Darstellung einer Ausführungsform des erfindungsgemäßen Projektors;
- Fig. 2: eine schematische Darstellung zur Erläuterung der Zuordnung zwischen den ersten Pixeln des ersten Modulators 3 und den zweiten Pixeln des zweiten Modulators 5;
- Fig. 3: eine schematische Darstellung der Steuereinheit 7 von Fig. 1 zur Erläuterung der Erzeugung von pulsweitenmodulierten Muster- und Bildsteuerdaten MS, BS;
- Fig. 4: eine schematische Darstellung eines bekannten Projektors mit Einfachmodulation;
- Fig. 5: eine schematische Darstellung zum Vergleich der theoretischen γ-Kurve mit der realen γ-Kurve des Projektors gemäß Fig. 4;
- Fig. 6: eine Darstellung eines bekannten Projektors mit Doppelmodulation;
- Fig. 7: eine schematische Darstellung des Farbrads;
- Fig. 8: eine Darstellung gemäß Fig. 5, wobei zusätzlich noch die γ-Kurve des Projektors mit Doppelmodulation eingezeichnet ist;
- Fig. 9: eine Darstellung der Abweichung projizierter Grauwerte vom Sollwert für einen Projektor mit Einfachmodulation und einem Projektor mit Doppelmodulation;
- Fig. 10: eine Darstellung der Abweichung der projizierten Grauwerte vom Sollwert für die erfindungsgemäßen Varianten Boost1 und Boost2;
- Fig. 11: eine Darstellung zur Erläuterung der Zuordnung von mehreren ersten Pixeln des ersten Modulators 3 zu einem zweiten Pixel des zweiten Modulators 5;
- Fig. 12: eine schematische Darstellung zur Erläuterung der Bestimmung, ob ein zweites Pixel boostbar ist oder nicht;
- Fig. 13: eine schematische Darstellung zur Erläuterung der Ermittlung der Musterdaten M basierend auf den gegebenen Bilddaten BD;
- Fig. 14: eine schematische Darstellung zur Erläuterung der Ermittlung der Helligkeitswerte für geboostete und nicht geboostete Pixel sowie die entsprechenden Beleuchtungssteuerdaten MS;
- Fig. 15: eine Darstellung zur Erläuterung der Pulsweitenmodulation für den Beleuchtungsmodulator;
- Fig. 16: eine Darstellung zur Bestimmung der Helligkeitswerte für die geboosteten Pixel und nicht geboosteten Pixel sowie der zugeordneten Beleuchtungssteuerdaten;
- Fig. 17a - 17d: Darstellungen zur Erläuterung der Ausnutzung von Zeitabschnitten, in denen die Beleuchtungspixel ausgeschaltet sind, um mehr Bildpixel boosten zu können;
- Fig. 18: eine Darstellung gemäß Fig. 16 zur Erläuterung einer Weiterbildung des erfindungsgemäßen Projektors;
- Fig. 19: eine schematische Darstellung einer weiteren Ausführungsform des erfindungsgemäßen Projektors;
- Fig. 20: eine schematische Darstellung einer weiteren Ausführungsform des erfindungsgemäßen Projektors;
- Fig. 21: eine schematische Darstellung einer Multiprojektorvorrichtung mit zwei Projektoren P1, P2;
- Fig. 22: eine schematische Darstellung des Helligkeitsverlaufs entlang der Schnittlinie BL von Fig. 21;
- Fig. 23: eine Tabelle mit Helligkeits- und Maskenwerten für einen bekannten Projektor mit zwei Modulatoren;
- Fig. 24: eine schematische Darstellung des Helligkeitsverlaufs entlang der Schnittlinie BL von Fig. 21 für den bekannten Projektor mit den Werten gemäß Fig. 23;
- Fig. 25: eine Tabelle mit Helligkeits- und Maskenwerten für einen erfindungsgemäßen Projektor mit zwei Modulatoren;
- Fig. 26: eine Tabelle mit Helligkeits- und Maskenwerten für einen erfindungsgemäßen Projektor mit zwei Modulatoren;
- Fig. 27: eine schematische Darstellung einer Ausführungsform des erfindungsgemäßen Projektors;
- Fig. 28: eine schematische Darstellung zur Erläuterung der Zuordnung zwischen den ersten Pixeln des ersten Modulators 3 und den zweiten Pixeln des zweiten Modulators 5;
- Fig. 29: eine schematische Darstellung des Farbrades 15 von Fig. 27;
- Fig. 30: eine schematische Darstellung der Steuereinheit 7 von Fig. 27 zur Erläuterung der Erzeugung von pulsweitenmodulierten Muster- und Bildsteuerdaten MS, BS;
- Fig. 31: eine schematische Darstellung eines bekannten Projektors mit Einfachmodulation;
- Fig. 32: das auf 1 normierte Emissionsspektrum der Lichtquelle 102 von Fig. 31;
- Fig. 33: die Transmissionsspektren des roten, grünen und blauen Farbradsegmentes des Farbrades 15 sowie 115, wobei die Transmission entlang der y-Achse linear aufgetragen ist;
- Fig. 34: die Transmissionsspektren des roten, grünen und blauen Farbradsegmentes des Farbrades 15 sowie 115, wobei die Transmission entlang der y-Achse logarithmisch aufgetragen ist;
- Fig. 35: eine logarithmische Darstellung des Transmissionsspektrums der Projektionsoptik 106 sowie des Modulators 105 im ON-Zustand und im OFF-Zustand;
- Fig. 36: der resultierende Farbraum des Projektors 101 gemäß Fig. 31 in einer Normfarbtafel des CIE-Normvalenzsystems;
- Fig. 37: eine vergrößerte Darstellung eines Aufschnittes der Darstellung gemäß Fig. 36;
- Fig. 38: den Verlauf der Gamma-Kurve für den Projektor 101 gemäß Fig. 31;
- Fig. 39: eine Darstellung eines bekannten Projektors mit Doppelmodulation;
- Fig. 40: den resultierenden Farbraum des Projektors 201 gemäß Fig. 39 in gleicher Weise wie in Fig. 36;
- Fig. 41: eine vergrößerte Darstellung eines Ausschnitts des Farbraums gemäß Fig. 40;
- Fig. 42: die Gamma-Kurve für den Projektor 201 gemäß Fig. 39;
- Fig. 43: eine vergrößerte Darstellung der Darstellung von Fig. 42 für den Graustufenbereich von 1 bis 10;
- Fig. 44: einen Ausschnitt aus dem Farbraum für den erfindungsgemäßen Projektor in gleicher Weise wie die Darstellung von Fig. 36;
- Fig. 45: die Gamma-Kurve für den erfindungsgemäßen Projektor;
- Fig. 46: eine weitere Ausführungsform des erfindungsgemäßen Projektors;
- Fig. 47: eine Darstellung des Reflexionsverhaltens des Farbteilerwürfels 50 von Fig. 47;
- Fig. 48: eine weitere Darstellung des Reflexionsverhaltens des Farbteilerwürfels 50 von Fig. 46;
- Fig. 49: berechnete Grauwerte für den erfindungsgemäßen Projektor für Weiß;
- Fig. 50: berechnete Grauwerte für den Projektor für Rot;
- Fig. 51: die Darstellung eines Ausschnitts des Farbraums für den erfindungsgemäßen Projektor;
- Fig. 52: die Darstellung eines Farbraums eines bekannten Projektors mit Doppelmodulation zum Vergleich in Bezug auf Fig. 51;
- Fig. 53: den Verlauf der Gamma-Kurve des erfindungsgemäßen Projektors;
- Fig. 54: den Verlauf der Gamma-Kurve eines bekannten Projektors mit Doppelmodulation;
- Fig. 55: ein Ausschnitt aus der Normfarbtafel für den erfindungsgemäßen Projektor;
- Fig. 56: ein Ausschnitt aus der Normfarbtafel für einen bekannten Projektor mit Doppelmodulation ;
- Fig. 57: die Gamma-Kurve für Rot für den erfindungsgemäßen Projektor;
- Fig. 58: die Gamma-Kurve für Rot für einen bekannten Projektor mit Doppelmodulation;
- Fig. 59: ein weiteres Ausführungsbeispiel des erfindungsgemäßen Projektors, und
- Fig. 60: ein weiteres Ausführungsbeispiel des erfindungsgemäßen Projektors.

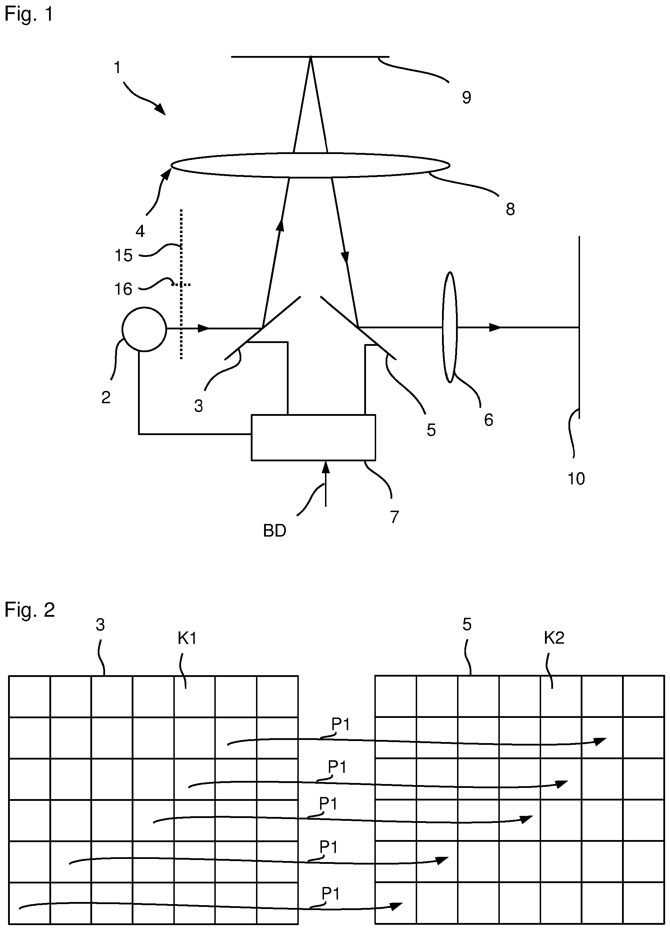

Bei der in Fig. 1 gezeigten Ausführungsform umfasst der erfindungsgemäße Projektor 1 zum Projizieren von Bildern für jeweils eine vorbestimmte Einzelbilddauer eine Lichtquelle 2, einen Beleuchtungsmodulator 3, eine Abbildungsoptik 4, einen Bildmodulator 5, eine Projektionsoptik 6 sowie eine Steuereinheit 7.

Die beiden Modulatoren 3, 5 sind jeweils als Kippspiegelmatrix (nachfolgend auch DMD genannt) ausgebildet, die mehrere in Zeilen und Spalten angeordnete Kippspiegel aufweisen, wobei die Kippspiegel voneinander unabhängig in eine erste und eine zweite Kippstellung gebracht werden können.

Beim beschriebenen Ausführungsbeispiel weist der Beleuchtungsmodulator 3 mehrere Kippspiegel K1 (nachfolgend auch Beleuchtungspixel genannt) und weist der Bildmodulator 5 mehrere Kippspiegel K2 (nachfolgend auch Bildpixel genannt) auf. In Fig. 2 sind jeweils schematisch 6 × 7 Kippspiegel K1, K2 dargestellt ist. Die Kippspiegel K1 und K2 weisen jeweils gleichen Abmessungen auf, wobei die geringe Anzahl der Kippspiegel K1 und K2 lediglich zur Vereinfachung der Darstellung angenommen wird. Natürlich können die Modulatoren 3, 5 sehr viel mehr Kippspiegel K1, K2 als dargestellt enthalten.

Die Abbildungsoptik 4 ist als 1:1-Abbildungsoptik mit einer Linse 8 und einem Spiegel 9 ausgebildet und bildet jeden Kippspiegel K1 des Beleuchtungsmodulators 3 genau auf einen Kippspiegel K2 des Bildmodulators 5 ab, wie durch die Pfeile P1 angedeutet ist. Somit ist jedem Beleuchtungspixel K1 des Beleuchtungsmodulators 3 aufgrund der Abbildung mittels der Abbildungsoptik 4 genau ein Bildpixel K2 des Bildmodulators 5 zugeordnet. Man kann auch sagen, dass jedem Bildpixel K2 genau ein Beleuchtungspixel K1 zugeordnet ist.

Die beiden Modulatoren 3 und 5 werden von der Steuereinheit 7 basierend auf zugeführten Bilddaten BD für jedes der nacheinander zu projizierenden Bilder so angesteuert, dass der Beleuchtungsmodulator 3, der mit dem Licht (z.B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 10 projiziert wird. Um die flächig modulierte Lichtquelle bereitzustellen, ist der Projektor 1 so ausgebildet, dass das Licht, das von den sich in der ersten Kippstellung befindenden Kippspiegeln K1 des Beleuchtungsmodulator 3 reflektiert wird, auf den zugeordneten Kippspiegel K2 des Bildmodulators 5 abgebildet wird. Das von den in der zweiten Kippstellung stehenden Kippspiegeln K1 des Beleuchtungsmodulators 3 reflektierte Licht wird von einer (nicht gezeigten) Strahlenfalle aufgenommen und wird somit nicht auf den Bildmodulator 5 abgebildet. Die Bilderzeugung bzw. -modulation erfolgt dann mittels der Kippstellung der Bildpixel (= Kippspiegel K2 des Bildmodulators 5), da nur das von den in der ersten Kippstellung stehenden Bildpixeln K2 reflektierte Licht über die Projektionsoptik 6 auf die Projektionsfläche 10 projiziert wird. Das von den sich in der zweiten Kippstellung befindenden Bildpixeln K2 reflektierte Licht wird nicht auf die Projektionsfläche 10 projiziert, sondern z.B. in einer (nicht gezeigten) Strahlenfalle aufgenommen. Durch die Kippstellung der Bildpixel K2 wird somit das zu projizierende Bild moduliert bzw. erzeugt, das mittels der Projektionsoptik 6 projiziert wird.

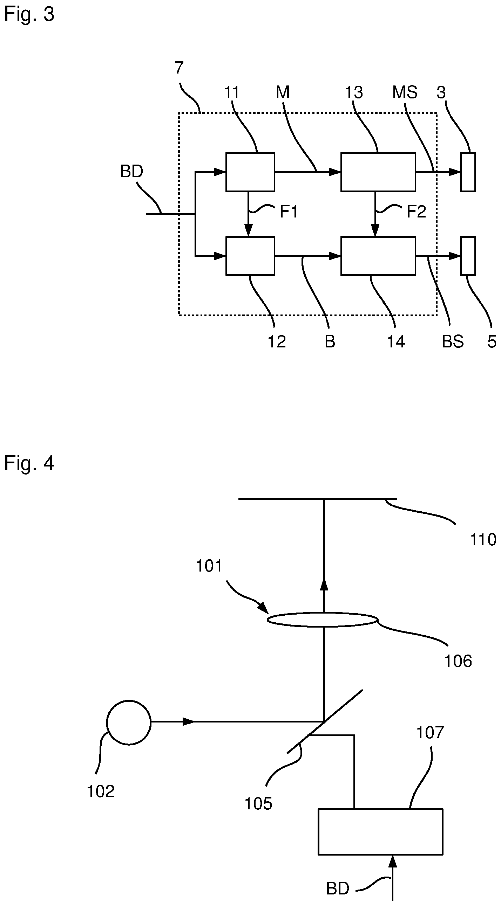

Die Bilddaten BD liegen bereits in digitaler Form mit der geeigneten Pixelauflösung für den Bildmodulator 5 vor und werden in der Steuereinheit 7, wie in Fig. 3 schematisch gezeigt ist, gleichzeitig an einen ersten und zweiten Mustergenerator 11 und 12 angelegt. Der erste Mustergenerator 11 erzeugt anhand der zugeführten Bilddaten BD Musterdaten M, die an eine erste Ansteuerelektronik 13 angelegt werden. Die erste Ansteuerelektronik 13 erzeugt basierend auf den Musterdaten M pulsweitenmodulierte Beleuchtungssteuerdaten MS und legt diese an den Beleuchtungsmodulator 3 an.

Der zweite Mustergenerator 12 erzeugt anhand der zugeführten Bilddaten BD Einzelbilddaten B, die an eine zweite Ansteuerelektronik 14 für den Bildmodulator 5 angelegt werden. Die zweite Ansteuerelektronik 14 erzeugt pulsweitenmodulierte Bildsteuerdaten BS und legt diese an den Bildmodulator 5 an.

Gemäß den Beleuchtungs- und Bildsteuerdaten MS, BS werden während der Einzelbilddauer T zur Erzeugung des Bildes die Beleuchtungs- und Bildpixel K1, K2 so in die erste und zweite Kippstellung gebracht, dass das gewünschte Bild erzeugt und projiziert wird.

Durch das Hintereinanderschalten der beiden Modulatoren 3, 5 sowie die nachfolgend beschriebenen Erzeugung der Beleuchtungs- und Bildsteuerdaten MS, BS wird beim Betrieb des Projektors 1 eine Verbesserung bei der Darstellung von niedrigen Graustufen bzw. geringen Helligkeitswerten erreicht.

### Projektor 101 mit Einfachmodulation gemäß Fig. 4

Zum besseren Verständnis des erfindungsgemäßen Projektors 1 wird nachfolgend ein Projektor 101 mit Einfachmodulation, der nur einen Modulator 105, der als Bildmodulator eingesetzt wird, aufweist, beschrieben (Fig. 4). Dieser Projektor 101 mit Einfachmodulation weist eine Lichtquelle 102 und eine Projektionsoptik 106 auf, wobei der Modulator 105, der als Kippspiegelmatrix ausgebildet sein kann, mit Licht der Lichtquelle 102 beleuchtet wird. Der Modulator 105 moduliert das Licht mittels der unabhängig voneinander ansteuerbaren Kippspiegeln des Modulators 105, um ein Bild zu erzeugen, das mittels der Projektionsoptik 106 auf eine Projektionsfläche 110 projiziert wird. Die Modulation wird durch eine Steuereinheit 107 basierend auf zugeführten Bilddaten BD gesteuert. Bei einem solchen herkömmlichen Projektor 101 liegt der Kontrast (maximale Helligkeit zu minimaler Helligkeit) in der Regel zwischen 500:1 und 2000:1. Das bedeutet, dass durch eine Verringerung eines Eingabe-Grauwertes die projizierte Helligkeit nicht gegen Null strebt, sondern sich einem endlichen Wert annähert, der für einen Eingabe-Grauwert 0 erreicht wird und sich aus dem Kontrast des Projektors 101 ergibt. Für die nachfolgende Diskussion wird angenommen, dass die Helligkeitswerte in einem 8 Bit-System mit ganzen Zahlen von 0 bis 255 dargestellt werden, wobei 0 die minimale Helligkeit (schwarz) und 255 die maximale Helligkeit darstellt.

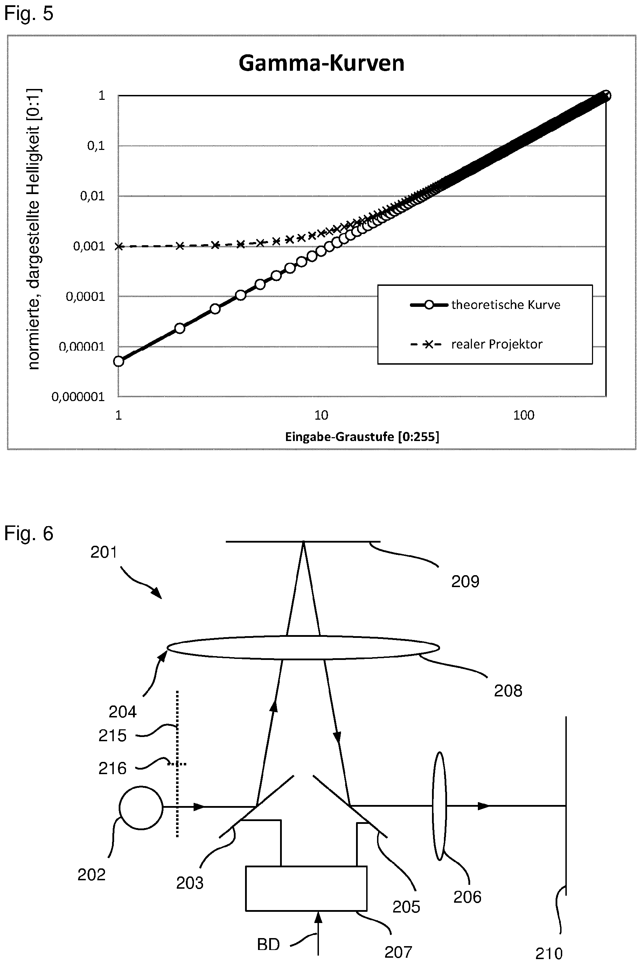

Dies ist in Fig. 5 schematisch dargestellt, wobei die theoretische γ-Kurve (hier mit γ = 2,2) als durchgezogene Linie mit der realen Kurve für den Projektor 101 mit einem Kontrast von 1000:1 als gestrichelte Linie dargestellt ist. Entlang der x-Achse sind die Eingabe-Graustufen und entlang der y-Achse die nominierte Helligkeit im Bereich von 1E-6 bis 1 dargestellt.

Mathematisch ergibt sich der Helligkeitsverlauf I_{SdT} daraus, dass der endliche Kontrast K zu einer Untergrundhelligkeit von U = 1/K zu der nachfolgenden Gleichung für I_{SdT}(g) führt. ${I}_{SdT} \left(g\right) = U + \left(1-U\right) ⋅ {\left(\frac{g}{255}\right)}^{γ}$

Dabei ist g die Eingabe-Graustufe und y ist der sogenannte γ-Wert für die Beschreibung des Helligkeitsverlaufs. Außerdem ist die maximale Helligkeit (für g = 255) auf 1 normiert. Der theoretische Helligkeitsverlauf ist wie folgt definiert. ${I}_{Theorie} \left(g\right) : = {\left(\frac{g}{255}\right)}^{γ}$

Diese nicht zu vermeidende Untergrundhelligkeit U führt dazu, dass bei dunklen Bildinhalten die untersten Eingabe-Graustufen im Bild nicht mehr zu unterscheiden sind, da sie sich gegenüber der Untergrundhelligkeit nicht mehr abheben. So ist bei dem Beispiel gemäß Fig.5 die Graustufe g = 4 gerade einmal 10% heller als der Untergrund bei Graustufe g = 0. Dadurch sinkt der tatsächlich nutzbare Bereich von Graustufen.

### Projektor 201 mit Doppelmodulation gemäß Fig. 6

Bei der Verwendung von zwei hintereinandergeschalteten Modulatoren 203 und 205, wie dies bei dem Projektor 201 mit Doppelmodulation in Fig. 6 der Fall ist, erhöht sich nicht nur der Kontrast auf jenseits von 1.000.000:1. Darüber hinaus weisen auch die dunklen Graustufen eine geringere Untergrundhelligkeit auf (da sie mit weniger Intensität beleuchtet werden).

Der Projektor 201 ist grundsätzlich gleich aufgebaut wie der Projektor 1 in Fig. 1. Daher sind gleiche bzw. ähnliche Elemente mit Bezugszeichen bezeichnet, die um 200 größer sind als die entsprechenden Bezugszeichen in Fig. 1. Nachfolgend werden lediglich die Unterschiede beschrieben, die im Wesentlichen die Steuereinheit 207 und die Ansteuerung der Modulatoren 203 und 205 betreffen. Für den Projektor 201 gemäß Fig. 6 ergibt sich der nachfolgend angegebene Intensitätsverlauf $\begin{matrix}{I}_{2 xDMD} \left({g}_{1}, {g}_{2}\right) = \frac{1}{T} {\int }_{0}^{T} \left({I}_{1}\left({g}_{1}, t\right)⋅{I}_{2}\left({g}_{2}, t\right)\right) dt \\ = \frac{1}{T} {\int }_{0}^{T} \left\{U+\left(1-U\right)⋅{i}_{1}\left({g}_{1}, t\right)\right\} ⋅ \left\{U+\left(1-U\right)⋅{i}_{2}\left({g}_{2}, t\right)\right\} dt\end{matrix}$

Dabei ist T = 1/f (Einzelbilddauer T) die Zeit, die bei einer Framerate f für die Darstellung eines Frames (Einzelbildes) benötigt wird. Die Funktionen i₁(g₁, t) und i₂(g₂, t) beschreiben in Abhängigkeit eines Eingabe-Grauwertes g₁ bzw. g₂, zu welchen Zeiten t ein Kippspiegel der Modulatoren 203, 205 Licht weiterleitet (d.h. die Funktion den Wert 1 besitzt) bzw. kein Licht weiterleitet (d.h. die Funktion den Wert 0 besitzt). Die Funktionen i₁ und i₂ nehmen zeitlich also nur die Werte 0 und 1 an. Daraus ergibt sich, dass es eine Zeit T₁≤ T gibt, für die beide Modulatoren 203, 205 auf schwarz gestellt sind. Weiterhin gibt es eine Zeit T₂≤T, für die genau einer der beiden Modulatoren 203, 205 auf schwarz gestellt ist (Funktionswert von i₁ oder i₂ ist 0), während der andere auf weiß steht (i₁ oder i₂ ist 1). Schließlich gibt es eine Zeit T₃≤T, für die beide Modulatoren 203, 205 auf weiß stehen (i₁ und i₂ ist 1). Es gilt T₁+T₂+T₃=T. Aus diesen Überlegungen folgt: $\begin{matrix}{I}_{2 xDMD} \left({g}_{1}, {g}_{2}\right) = \frac{1}{T} \left\{{\int }_{{T}_{1}} {U}^{2} dt+{\int }_{{T}_{2}} Udt+{\int }_{{T}_{3}} 1 dt\right\} \\ = \frac{1}{T} \left\{{T}_{1}\left({g}_{1}, {g}_{2}\right)⋅{U}^{2}+{T}_{2}\left({g}_{1}, {g}_{2}\right)⋅U+{T}_{3}\left({g}_{1}, {g}_{2}\right)\right\}\end{matrix}$

Dabei sind die Zeiten T₁, T₂ und T₃ Funktionen der Eingabe-Grauwerte g₁ und g₂.

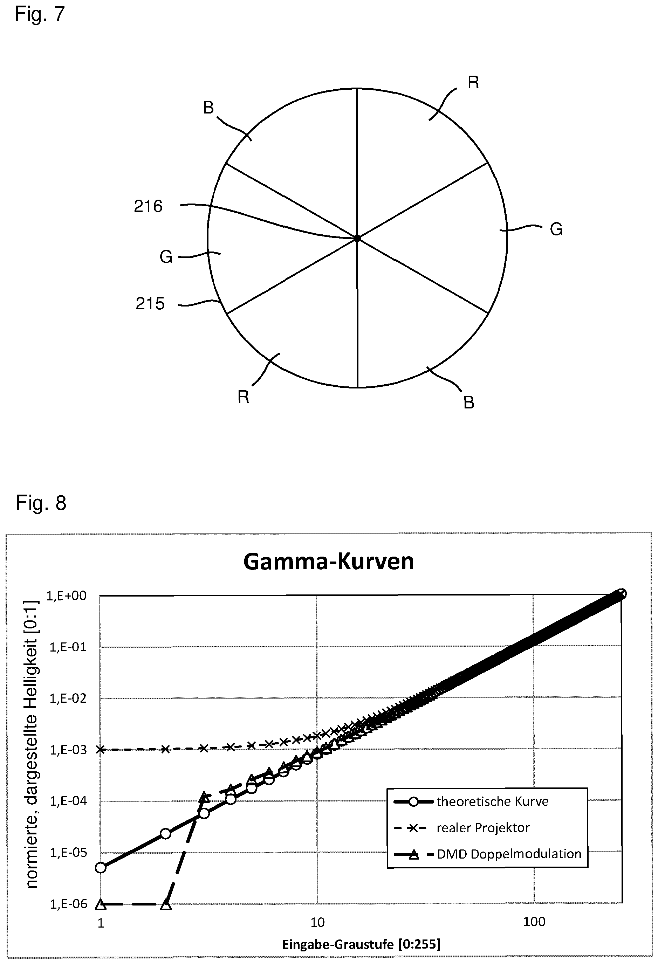

Die resultierenden, projizierten Helligkeiten eines solchen Projektors 201 werden an einem nachfolgenden Beispiel verdeutlicht. Wenn eine farbige Bilderzeugung gewünscht ist, kann ein Farbrad 215 im Strahlengang zwischen der Lichtquelle 202 und dem ersten Modulator 203 angeordnet sein, wie in Fig. 6 gestrichelt dargestellt ist. Die Farben werden dann zeitsequentiell über das Farbrad 215 erzeugt, das mit seiner Drehachse 216 schematisch dargestellt ist. In Fig. 7 ist eine Draufsicht des Farbrads 215 gezeigt, das sechs gleich große Farbsegmente (die sich somit über einen Winkelbereich von 60° erstrecken) aufweist. Die Farbsegmente sind mit den Großbuchstaben R, G und B bezeichnet. Dies soll verdeutlichen, dass das entsprechende Farbsegment nur die rote Farbe (bei R), die grüne Farbe (bei G) und die blaue Farbe (bei B) durchlässt, so dass von dem weißen Licht der Lichtquelle 202 zeitsequentiell rotes, grünes oder blaues Licht auf den Beleuchtungsmodulator 203 fällt. Somit können mittels der beiden Modulatoren 203, 205 zeitlich nacheinander rote, grüne und blaue Teilbilder projiziert werden. Diese werden zeitlich so schnell aufeinanderfolgend erzeugt, dass für einen Betrachter nur die Überlagerung und somit ein Farbbild wahrnehmbar ist. Dies kann beispielsweise bei einer Bildrate bzw. Framerate von f = 60 Hz dadurch erreicht werden, dass das Farbrad 215 mit einer Frequenz von 120 Hz dreht. Dadurch gibt es innerhalb eines Frames (Einzelbildes) vier Rot-Durchläufe, vier Grün-Durchläufe und vier Blau-Durchläufe. Für jeden Farbübergang werden 15° abgezogen, der sogenannte Spoke. Während dieser Zeitdauer wird der Beleuchtungsmodulator 203 dunkel geschaltet, um eine undefinierte Farbprojektion zu verhindern, da gerade eine Farbsegmentgrenze des Farbrades 215 das Beleuchtungslicht kreuzt. Somit verbleiben für eine Farbmodulation pro Farbe (rot, grün und blau) vier Zeit-Segmente mit einer Farbrad-Segmentgröße von 45°. Dies entspricht bei einer Framerate von 60 Hz einer Zeit von ${T}_{RGB} : = {T}_{R} = {T}_{G} = {T}_{B} = \frac{4 ∗ 45 °}{720 °} ∗ \frac{1}{60 Hz} = 4167 μs$

Die minimale Zeit, die ein Kippspiegel K1, K2 Licht weiterleiten oder nicht-weiterleiten kann (LSB, *Least Significant Bit)* wird wie folgt angenommen ${t}_{LSB} = 2 ∗ 25 μ s$

Der Faktor 2 ergibt sich daraus, dass in zwei der vier Farbumläufe eines Frames eine Zeitscheibe von 25 µs zur Darstellung des LSBs verwendet wird. Setzt man diese Zeit ins Verhältnis zur Gesamtdauer einer Farbe (T_{RGB}), so ergibt sich eine Helligkeit von 0,012, was einer Graustufe von etwa 34 entspricht (bei y = 2,2).

Mittels eines räumlichen und zeitlichen Ditherings kann dieser Wert um einen Faktor n_{Dither} weiter reduziert werden. Für den Grenzwert, unterhalb dessen alle Graustufen "gedithert" werden müssen, ergibt sich aus ${I}_{Theorie} \left(g\right) : = {\left(\frac{g}{255}\right)}^{γ}$ folgender Grauwert g_{Dither} ${g}_{Dither} = 255 ∗ {\left(\frac{{t}_{LSB}}{{T}_{RGB}}\right)}^{1 / γ}$

Über das Dither-Verfahren lassen sich für die untersten Graustufen (im Beispiel bis Graustufe 34) Helligkeiten in diskreten Abstufungen erzeugen. Die minimale effektive An-Zeit für einen Kippspiegel (gemittelt über 256 Frames/Einzelbilder) beträgt dann ${t}_{min} = {t}_{LSB} / {n}_{Dither} = 2 ∗ 25 μ s / 256 \approx 2 μ s$

Dabei wurde für dieses Beispiel eine Dither-Auflösung von 8 Bit gewählt, welche n_{Dither} = 256 ergibt. Um eine definierte Graustufe g ≤ g_{Dither} darzustellen, wird ein n-Faches der minimalen An-Zeit tₘᵢₙ benötigt, das sich wie folgt errechnet. $n \left(g\right) = 〚 {\left(\frac{g}{255}\right)}^{γ} ⋅ \frac{{T}_{RGB}}{{t}_{LSB}} 〛$

Dabei rundet der Operator 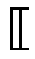 ... 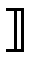 auf die nächste natürliche Zahl (inklusive der 0). In diesem Beispiel entspricht damit der kleinste darstellbare Helligkeitswert tₘᵢₙ/T_{RGB} = 4,69 · 10⁻⁵. Die nachfolgende Tabelle 1 zeigt in der Spalte *Helligkeit theoretisch,* dass dies etwa Graustufe 3 eines theoretischen Systems mit Einfachmodulation (wie beim Projektor 101 mit Einfachmodulation) entspricht. Die Spalte *Helligkeit "S.d.T."* betrifft den Projektor 101 mit Einfachmodulation und die Spalte *Helligkeit mit 2xDMD* entspricht dem Projektor 201 mit Doppelmodulation.

**Tabelle 1**

| **Graustufe Eingang** | **Helligkeit theoretisch** | **Helligkeit "S.d.T."** | **Helligkeit mit 2xDMD** |
|---|---|---|---|
| **[0:255]** | **[0:1]** | **[0:1]** | **[0:1]** |
| 0 | 0 | 1,00E-03 | 1,00E-06 |
| 1 | 5,08E-06 | 1,01E-03 | 1,00E-06 |
| 2 | 2,33E-05 | 1,02E-03 | 1,00E-06 |
| 3 | 5,69E-05 | 1,06E-03 | 1,20E-04 |
| 4 | 1,07E-04 | 1,11E-03 | 1,67E-04 |
| 5 | 1,75E-04 | 1,17E-03 | 2,60E-04 |
| 6 | 2,62E-04 | 1,26E-03 | 3,54E-04 |
| 7 | 3,67E-04 | 1,37E-03 | 4,48E-04 |
| 8 | 4,93 E-04 | 1,49E-03 | 5,88E-04 |
| 9 | 6,38E-04 | 1,64E-03 | 7,29E-04 |
| 10 | 8,05E-04 | 1,80E-03 | 8,69E-04 |
| 11 | 9,92E-04 | 1,99E-03 | 1,06E-03 |
| 12 | 1,20E-03 | 2,20E-03 | 1,29E-03 |
| 13 | 1,43E-03 | 2,43E-03 | 1,52E-03 |
| 14 | 1,69E-03 | 2,69E-03 | 1,76E-03 |
| 15 | 1,96E-03 | 2,96E-03 | 2,04E-03 |
| 16 | 2,26E-03 | 3,26E-03 | 2,32E-03 |
| 17 | 2,59E-03 | 3,58E-03 | 2,65E-03 |
| 18 | 2,93E-03 | 3,93E-03 | 3,02E-03 |
| 19 | 3,30E-03 | 4,30E-03 | 3,35E-03 |
| 20 | 3,70E-03 | 4,69E-03 | 3,77E-03 |

Es ist also mit dem Projektor 201 mit Doppelmodulation nicht möglich, die Graustufe 0, 1 und 2 darzustellen.

Wenn das Bild auf dem Bildmodulator 205 nach dem *Phased-Reset-*Verfahren (bei dem die Pixel nacheinander blockweise geschaltet werden, wie z.B. in dem Artikel "10.4: Phased Reset Timing for Improved Digital Micromirror Device (DMD) Brightness"; D. Doherty, G. Hewlett; SID Symposium Digest of Technical Papers, 29: 125-128. doi: 10.1889/1.1833710 im Detail beschrieben ist) adressiert wird und jede der 16 Reset-Zonen gegenüber der vorherigen Reset-Zone um t_{Reset} = 8 µs zeitlich versetzt wird, werden in der Zeit $\frac{{T}_{LSB}}{2} = \frac{{t}_{LSB}}{2} + 15 ∗ {t}_{Reset} = 145 μs$ die LSBs aller 16 Reset-Zonen dargestellt. Der Faktor 1/2 ergibt sich daraus, dass in einem Frame das LSB auf zwei Zeitabschnitte des Farbrades verteilt ist.

Man kann nur diese Zeit für eine Beleuchtung durch den Beleuchtungsmodulator 203 nutzen, der nach dem Global-Resetverfahren adressiert wird (bei dem alle Pixel gleichzeitig geschaltet werden, wie z.B. im gleichen SID-Artikel wie oben im Detail beschrieben ist). In diesem Beispiel wird die Beleuchtungszeit für das LSB ein wenig größer gewählt. ${τ}_{LSB} = 2 ∗ 150 μ s = 300 μs$

Der Faktor 2 ergibt sich wieder daraus, dass sich das LSB auf zwei der vier RGB-Farbdurchgänge verteilt. Das LSB, mit dem die untersten 34 Graustufen moduliert werden können (über zeitliches Dithering), wird bei Verwendung eines 4x-Farbrades 215 (vier Farbdurchgänge in einem Frame) in zwei der vier Farbdurchgänge verwendet. Für eine Darstellung von Grauwerten, die nur das LSB für eine Darstellung benötigen (über räumliches und zeitliches Dithering bis beispielsweise Graustufe 34), wird ab RGB = (3,3,3) - hier gilt im Beispiel n (g = 3) = 1, während für n (g≤3) = 0 abgerundet ist - Beleuchtungslicht über den Beleuchtungsmodulator für die Zeit $τ = 3 ∗ 300 μ s = 900 μs$ auf den Bildmodulator geleitet (drei Farben). Das bedeutet, dass während 900 µs • 60 Hz = 5,4 % der Zeit eines Frames der Beleuchtungsmodulator 203 Licht auf den Bildmodulator 205 weiterleitet. Um die projizierten Helligkeiten für Eingabe-Grauwerte 3 ≤ g ≤ g_{Dither} zu errechnen, sind die Zeiten T₁, T₂ und T₃ zu betrachten und es ergibt sich: ${T}_{1} \left(g\right) = {T}_{R} + {T}_{G} + {T}_{B} - τ = 12500 μ s - τ = 1160 μs$ ${T}_{2} \left(g\right) = τ - 3 ⋅ n \left(g\right) ⋅ {t}_{min}$ ${T}_{3} \left(g\right) = 3 ⋅ n \left(g\right) ⋅ {t}_{min}$

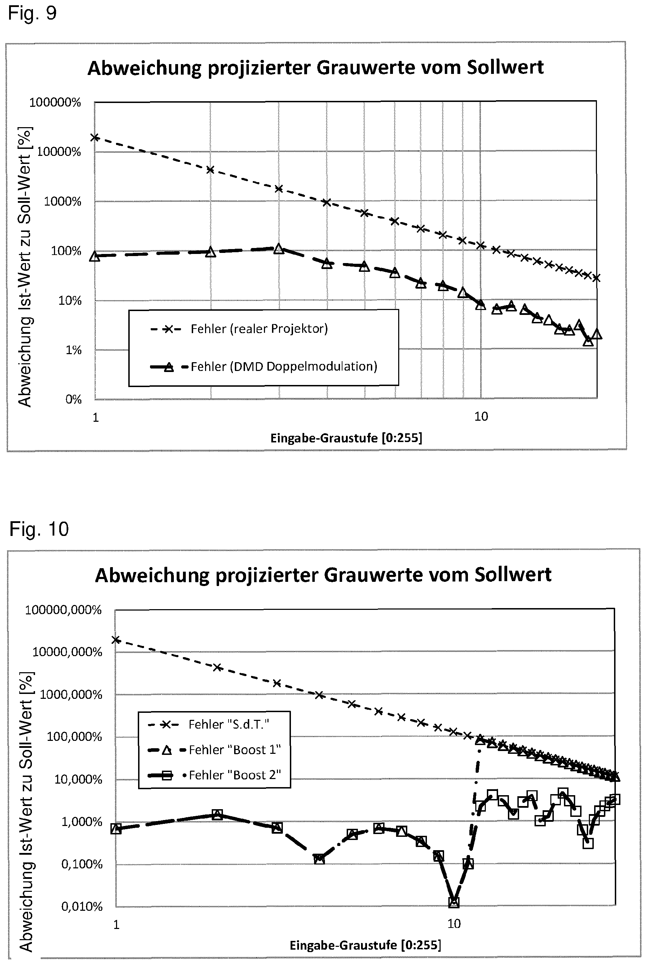

Der Faktor 3 ergibt sich aus den drei Farben rot, grün und blau. Für g < 3 gilt T₁(g) = T_{R} + T_{G} + T_{B} und T₂(g) = T₃(g) = 0. Damit lässt sich unter Verwendung der obigen Formel für I_{2DMD}(g₁, g₂) der Helligkeitsverlauf für die untersten Graustufen beim Projektor 201 mit Kippspiegelmatrizen-Doppelmodulation berechnen. Die Ergebnisse sind zusätzlich zur Tabelle 1 in den nachfolgenden Figuren 8 und 9 dargestellt. Für die dunklen Graustufen ergibt sich nach dieser Lösung eine deutliche Verbesserung gegenüber dem Stand der Technik mit Einfachmodulation (Bilderzeugung mittels eines Projektors mit Einfachmodulation).

In Fig. 8 sind zum Vergleich die theoretische γ-Kurve (im Beispiel mit y = 2,2) als durchgezogene Linie, die realen Kurve für den Projektor 101 mit Einfachmodulation für einen Kontrast K = 1000:1 als gestrichelte Linie und die reale Kurve für den Projektor 201 mit Doppelmodulation als lang-gestrichelte Linie dargestellt. Entlang der x-Achse ist dabei die Eingabe-Graustufe im Bereich von 1 bis 255 und entlang der y-Achse ist die normierte Helligkeit im Bereich von 1·10⁻⁶ bis 1 aufgetragen.

In Fig. 9 ist die prozentuale Abweichung des projizierten Grauwertes für den Projektor 101 mit Einfachmodulation als gestrichelte Linie und für den Projektor 201 mit Doppelmodulation als lang-gestrichelte Linie vom Soll-Wert für die untersten 20 Graustufen dargestellt. Dabei ist entlang der x-Achse die Eingabe-Graustufe im Bereich von 0 bis 20 und entlang der y-Achse die Abweichung des Ist-Werts zum Soll-Wert in Prozent aufgetragen (Betrag vom Ist-Wert minus Soll-Wert durch den Soll-Wert).

Es zeigt sich, dass mit dem Projektor 201 mit Doppelmodulation für niedrige Grauwerte die Abweichung der projizierten Helligkeiten von den Soll-Helligkeiten um mehr als eine Größenordnung geringer wird im Vergleich zum Projektor 101 mit Einfachmodulation. Die Abweichung vom Soll-Wert bleibt jedoch auch beim Projektor 201 mit Doppelmodulation für Graustufen kleiner als 10 über einer Wahrnehmungsschwelle für Helligkeitsabweichungen von 10%.

Ein weiterer Nachteil besteht beim Projektor 201 mit Doppelmodulation darin, dass, wie oben dargelegt, die untersten Graustufen über ein Dithering erzeugt werden müssen (im Beispiel bis Graustufe 34). Das bedeutet, dass die Helligkeit zu einem solchen Grauwert über mehrere Pixel und/oder über mehrere Frames verteilt wird. Befindet sich der Betrachter nahe an der Projektionsfläche (bzw. nehmen die Pixel eine gewisse Winkel-Größe ein), so wird ein Flirren sichtbar, das als störend empfunden wird. Darüber hinaus kann es vorkommen, dass die untersten Graustufen auch nicht mehr über ein Dithering dargestellt werden können. Beim beschriebenen Projektor 201 mit Doppelmodulation sind die Graustufen 0, 1 und 2 identisch gleich dem Untergrund und erst ab Graustufe 3 werden die Helligkeiten moduliert.

### Erfindungsgemäßer Projektor 1

Bei dem erfindungsgemäßen Projektor 1 wird die Ansteuerung der Modulatoren 3 und 5 so umgesetzt, dass ein Dithering für niedrige Graustufenwerte nicht eingesetzt werden muss. Der durch das Dithering bedingte störende Bildeindruck kann deutlich reduziert werden. Ferner können darüber hinaus auch noch die allerniedrigsten Graustufen unterscheidbar dargestellt werden.

Dies wird dadurch erreicht, dass für dunkle Graustufen (Graustufen deren Werte kleiner oder gleich einem Schwellwert und natürlich größer als Null sind) die Beleuchtungs- und Bildsteuerdaten MS, BS in der Art und Weise erzeugt werden, dass der Beleuchtungsmodulator 3 kein Licht zur Verfügung stellt und der Bildmodulator 5 trotzdem eine Helligkeits-Modulation durchführt. Die Modulation mit dem Bildmodulator 5 berücksichtigt dabei, dass eine Beleuchtung nur mit dem nicht zu vermeidenden Restlicht (Untergrundhelligkeit U des Beleuchtungsmodulators 3) erfolgt, so dass der Bildmodulator 5 so angesteuert wird, als ob er einen helleren Grauwert erzeugen soll. Somit werden durch den Bildmodulator 5 alle Helligkeiten moduliert, die geringer sind als die Untergrundhelligkeit des Beleuchtungsmodulators 3. Dabei entspricht die Ansteuerung des Bildmodulators 5 einer Helligkeit bzw. einer Graustufe, die unter Berücksichtigung des gewählten γ-Wertes um den Kontrastwert des Beleuchtungsmodulators 3 vervielfacht wird. Der Projektor 1 kann in gleicher Weise wie der Projektor 201 mit Doppelmodulation ein Farbrad 15 aufweisen, um mehrfarbige Bilder erzeugen und projizieren zu können.

Man kann auch sagen, dass zur Darstellung der geringen Graustufen (≤ dem Schwellwert) der Beleuchtungsmodulator 3 auf Schwarz gestellt wird, während die Graustufen des Bildmodulators 5 um den Kontrast des Beleuchtungsmodulators erhöht (geboostet) werden. Die Unterscheidung zwischen der normalen Darstellung und geboosteten Pixeln erfolgt auf Pixel-Ebene, wie nachfolgend noch im Detail beschrieben wird. Bei einem Projektor 1 mit Kippspiegel-Doppelmodulation müssen durch die Darstellung der dunklen Graustufen über geboostete (erhöhte) Grauwerte auf dem Bildmodulator 5 diese nicht mehr durch ein Dithering erzeugt werden, so dass alle geboostet dargestellten Helligkeiten nicht flirren und den Betrachter nicht irritieren. Darüber hinaus lassen sich selbst die niedrigsten Grauwerte unterscheidbar darstellen.

Für die nachfolgende Betrachtung wird davon ausgegangen, dass die Zwischenabbildung mittels der Abbildungsoptik 4 vom Beleuchtungsmodulator 3 auf den Bildmodulator 5 keine Bildfehler aufweist, so dass Licht eines jeden Pixels K1 des Beleuchtungsmodulators 3 auf genau das eine zugeordnete Pixel K2 (und nur dieses Pixel) des Bildmodulators 5 gelenkt wird.

Wird der Beleuchtungsmodulator 3 auf Schwarz geschaltet (Graustufe 0, g₁ = 0) und der Bildmodulator 5 auf Weiß (Graustufe 255, g₂ = 255), so ergibt sich als projizierte Helligkeit ein Wert, der dem Untergrund eines Projektors 101 mit Einzelmodulation entspricht. Im genannten Beispiel mit einem Projektor 101, dessen Bildgeber einen Kontrast von K = 1000:1 und y = 2,2 besitzt, entspricht diese Untergrund-Helligkeit (U = 1/K = 0, 001) etwa der Graustufe 11 eines idealen Projektors (vgl. Tabelle 1). Dies ergibt sich daraus, dass die Abhängigkeit der projizierten (normierten) Helligkeit Iₜₕₑₒᵣ von einer Graustufe g als ${I}_{theor} \left(g\right) : = {\left(\frac{g}{255}\right)}^{γ}$ gegeben ist. Daraus folgt für eine Grenz-Graustufe g_{Grenz} (= Schwellwert): ${g}_{Grenz} = 255 ⋅ {\left(U\right)}^{1 / γ} = 11.03 \approx 11$

Wenn beide Modulatoren 3, 5 die gleiche Untergrundhelligkeit U aufweisen, ergibt sich für den Helligkeitsverlauf in Abhängigkeit der Eingabe-Grauwerte g₁ und g₂ folgende Formel ${I}_{Doppel} \left({g}_{1}, {g}_{2}\right) = {I}_{SdT} \left({g}_{1}\right) ∗ {I}_{SdT} \left({g}_{2}\right) = \left\{U+\left(1-U\right)⋅{\left(\frac{{g}_{1}}{255}\right)}^{γ}\right\} ∗ \left\{U+\left(1-U\right)⋅{\left(\frac{{g}_{2}}{255}\right)}^{γ}\right\}$

Für g₁ = 0 ergibt sich als projizierte Helligkeit nach einer Doppelmodulation ${I}_{Doppel} \left({g}_{1}=0,{g}_{2}\right) = U ∗ \left\{U+\left(1-U\right)⋅{\left(\frac{{g}_{2}}{255}\right)}^{γ}\right\}$

Gesucht ist nun der Grauwert g₂ für den Bildmodulator 5, um eine beliebige Graustufe, die kleiner ist als die Grenz-Graustufe (g = g_{Grenz}), mit Hilfe der Doppelmodulation darzustellen. ${I}_{Doppel} \left({g}_{1}=0,{g}_{2}\right) = {I}_{theor} \left(g\right)$

Diese Gleichung lässt sich nach g₂ auflösen. ${g}_{2} = 〚 255 ⋅ {\left[\left(\frac{{\left(\frac{g}{255}\right)}^{γ}}{U}-U\right)/\left(1-U\right)\right]}^{1 / γ} 〛$

Dabei wird g₂ auf eine natürliche Zahl zwischen 0 und 255 gerundet, wie der Operator [...] anzeigt.

Um beispielsweise die Graustufe g = 3 darzustellen, wird für den Beleuchtungsmodulator 3 g₁ = 0 eingesetzt und für den Bildmodulator 5 g₂ = 69 eingestellt. Der Bildmodulator 5 verwendet also einen überhöhten (geboosteten) Wert gegenüber dem eigentlich gewünschten Grauwert (hier Graustufe g = 3).

Da die Beleuchtungs- und Bildsteuerdaten MS, BS als pulsweitenmodulierte Steuerdaten erzeugt werden, kann man sie auch anhand ihres Tastgrades (oder Tastverhältnisses) charakterisieren. Ohne das erfindungsgemäße Boosten hätten die Bildsteuerdaten BS einen Tastgradbereich von 0 bis 255, wobei bei Null (=minimaler Tastgrad) die Kippspiegel K2 während der gesamten Einzelbilddauer T in der zweiten Kippstellung stehen und bei 255 (= maximaler Tastgrad) während der gesamten Einzelbilddauer T in der ersten Kippstellung stehen. Bei Tastgradwerten zwischen 0 und 255 steht die Kippspiegel K2 während einer ersten Zeitdauer Δt1 in der ersten Kippstellung und während einer zweiten Zeitdauer Δt2 in der zweiten Kippstellung, wobei Δt1 + Δt2 = T. Somit wird die zweite Zeitdauer Δt2 umso länger je größer der Tastgradwert ist. In der Regel wird der Kippspiegel K2 bei Tastgradwerten zwischen 0 und 255 mehrmals zwischen seinen beiden Kippstellungen hin und her geschaltet, so dass sich die beiden Zeitdauern Δt1 und Δt2 aus zeitlichen Unterabschnitten zusammensetzen.

Durch das Boosten wird für die Bildsteuerdaten BS ein erster Tastgradbereich für Grauwerte größer als dem vorbestimmten Schwellwert und ein zweiter Tastgradbereich für Grauwerte, die nicht größer als der vorbestimmte Schwellwert sind, bereitgestellt. Der erste Tastgradbereich weist für Werte größer als dem vorbestimmten Schwellwert, der z.B. dem Grauwert 11 entspricht, die herkömmlichen Werte auf. Damit wäre die untere Grenze des ersten Tastgradbereiches beim Grauwert 12 und der Tastgradwert für diesen Grauwert ist 12. Der erste Tastgradbereich weist somit Werte von 12 bis 255 auf.

Der zweite Tastgradbereich hat somit seine obere Grenze beim Grauwert 11, wobei aber der Tastgradwert für den Grauwert 11 z.B. 254 beträgt. Die untere Grenze des zweiten Tastgradbereiches beträgt bei dem hier beschriebenen Beispiel 21. Der zweite Tastgradbereich weist somit Werte von 21 bis 254 auf.

Aufgrund des Boostens ist zumindest der Tastgradwert bei der oberen Grenze des zweiten Tastgradbereiches (= geboosteter Tastgradbereich) größer als der Tastgradwert an der unteren Grenze des ersten Tastgradbereiches (= ungeboosteter Tastgradbereich). Man kann auch sagen, dass sich die beiden Tastgradbereiche überlappen.

Eine Zusammenstellung der Grauwerte der beiden Modulatoren 3, 5 zur Darstellung einer gegebenen Graustufe g ist in der nachfolgenden Tabelle 2 angegeben. In der linken Spalte sind die mittels des Projektors 1 darzustellende Grauwerte g von 1-15 aus dem maximal möglichen Bereich von 0 - 255 angegeben. In der mittleren Spalte ist der Graustufenwert für den Beleuchtungsmodulator 3 und in der rechten Spalte der Graustufenwert für den Bildmodulator 5 angegeben.

**Tabelle 2**

| darzustellende Graustufe g [0:255] | Graustufenwert g1 [0:255] | Graustufenwert g2 [0:255] |
|---|---|---|
| 1 | 0 | 21 |
| 2 | 0 | 45 |
| 3 | 0 | 69 |
| 4 | 0 | 92 |
| 5 | 0 | 115 |
| 6 | 0 | 138 |
| 7 | 0 | 162 |
| 8 | 0 | 185 |
| 9 | 0 | 208 |
| 10 | 0 | 231 |
| 11 | 0 | 254 |
| 12 | 255 | 12 |
| 13 | 255 | 13 |
| 14 | 255 | 14 |
| 15 | 255 | 15 |

Daraus wird klar ersichtlich, dass im geboosteten zweiten Tastgradbereich der Beleuchtungsmodulator 3 auf schwarz geschaltet wird (Wert 0) und der Bildmodulator 5 Tastgradwerte (21- 254) aufweist, die größer sind als entsprechende Tastgradwerte für den nicht geboosten Fall (1 -11), die z.B. beim Bildmodulator 205 eingestellt werden würden. Ab Werten über dem Schwellwert g = 11 wird der Beleuchtungsmodulator 3 während der gesamten Einzelbilddauer T auf weiß oder maximale Beleuchtungsintensität geschaltet (Wert 255) und der Bildmodulator 5 wird mit den entsprechenden Grauwerten g₂ (12, 13, 14, etc.) angesteuert. Bei der hier beschriebenen Ausführungsform liegt sogar der Tastgradwert (= 21) der unteren Grenze des zweiten Tastgradbereiches über dem Tastgradwert (= 12) der unteren Grenze des ersten Tastgradbereiches. Somit liegt der zweite Tastgradbereich vollständig innerhalb des ersten Tastgradbereiches.

Des Weiteren zeigt sich, dass lediglich für den darzustellenden Graustufe g = 1 mit g₂ = 21≤34 ein Wert gedithert werden muss. Somit werden der dadurch hervorgerufenen Irritationen fast vollständig vermieden.

Diese Art der Erzeugung der Beleuchtungs- und Bildsteuerdaten MS, BS wird nachfolgend auch als Boost 1 bezeichnet.

Bei der bisherigen Beschreibung für die geboosteten Pixel wurde stets der Beleuchtungsmodulator 3 auf schwarz geschaltet, während die Helligkeitsmodulation des Untergrundlichtes des Beleuchtungsmodulators 3 durch den Bildmodulator 5 erfolgt. Selbstverständlich können die beiden Modulatoren 3, 5 zum Boosten umgekehrt angesteuert werden, so dass für ein geboostetes Pixel der zweite Modulator 5 auf schwarz gestellt ist, während die Helligkeitsmodulation über den ersten Modulator 3 erfolgt.

Um die mittels des erfindungsgemäßen Projektors 1 erreichten Verbesserungen leicht nachvollziehbar darzustellen, werden zunächst die tatsächlich projizierten Helligkeiten für verschiedene Projektoren zusammengestellt. Für einen theoretischen (normierten) Helligkeitsverlauf in Abhängigkeit einer Graustufe g gilt folgende bereits angegebene Formel. ${I}_{theor} \left(g\right) = {\left(\frac{g}{255}\right)}^{γ}$

Berücksichtigt man die Untergrundhelligkeit in einem realen System nach dem Stand der Technik (Projektor 101 mit Einfachmodulation), so gilt für den (normierten) Helligkeitsverlauf (siehe Tabelle 1, Spalte *Helligkeit "St.d.T."*), folgendes: ${I}_{SdT} \left(g\right) : = U + \left(1-U\right) ⋅ {\left(\frac{g}{255}\right)}^{γ}$

Für die oben vorgestellte erste Lösung (Boost 1) ergibt sich aufgrund der Doppelmodulation ${I}_{Boost 1} \left(g\right) = { \begin{matrix}{U}^{2} & f ü r g = 0 \to \left({g}_{1}=0,{g}_{2}=0\right) \\ U ⋅ \left\{U+\left(1-U\right)⋅{\left(\frac{{g}_{2}}{255}\right)}^{γ}\right\} & f ü r 0 < g \leq {g}_{Grenz} \to \left({g}_{1}=0,{g}_{2}=255⋅{\left[\frac{\frac{{\left(\frac{g}{255}\right)}^{γ}}{U} - U}{1 - U}\right]}^{\frac{1}{γ}}\right) \\ U + \left(1-U\right) ⋅ {\left(\frac{{g}_{2}}{255}\right)}^{γ} & f ü r g > {g}_{Grenz} \to \left({g}_{1}=255,{g}_{2}=g\right)\end{matrix}$

In Tabelle 3 ist für die untersten 30 Graustufen die resultierende, projizierende Helligkeit nach diesem Verfahren "Boost 1" zusammengestellt.

**Tabelle 3:**

| **Graustufe Eingang** | **Helligkeit theoretisch** | **Helligkeit "S.d.T."** | **Fehler "S.d.T."** | **Graustufen** | **"Boost 1"** | **Helligkeit "Boost 1"** | **Fehler "Boost 1"** |
|---|---|---|---|---|---|---|---|
| **[0:255]** | **[0:1]** | **[0:1]** | **[%]** | **g₁ [0:255]** | **g₂ [0:255]** | **[0:1]** | **[%]** |
| 0 | 0 | 1,00E-03 | | 0 | 0 | 1,00E-06 | |
| 1 | 5,08E-06 | 1,01E-03 | 19696% | 0 | 21 | 5,11E-06 | 0,7% |
| 2 | 2,33E-05 | 1,02E-03 | 4287% | 0 | 45 | 2,30E-05 | 1,4% |
| 3 | 5,69E-05 | 1,06E-03 | 1757% | 0 | 69 | 5,73E-05 | 0,7% |
| 4 | 1,07E-04 | 1,11E-03 | 933% | 0 | 92 | 1,07E-04 | 0,1% |
| 5 | 1,75E-04 | 1,17E-03 | 571% | 0 | 115 | 1,74E-04 | 0,5% |
| 6 | 2,62E-04 | 1,26E-03 | 382% | 0 | 138 | 2,60E-04 | 0,7% |
| 7 | 3,67E-04 | 1,37E-03 | 272% | 0 | 162 | 3,69E-04 | 0,6% |
| 8 | 4,93E-04 | 1,49E-03 | 203% | 0 | 185 | 4,94E-04 | 0,3% |
| 9 | 6,38E-04 | 1,64E-03 | 157% | 0 | 208 | 6,39E-04 | 0,2% |
| 10 | 8,05E-04 | 1,80E-03 | 124% | 0 | 231 | 8,05E-04 | 0,0% |
| 11 | 9,92E-04 | 1,99E-03 | 101% | 0 | 254 | 9,91E-04 | 0,1% |
| 12 | 1,20E-03 | 2,20E-03 | 83% | 255 | 12 | 2,20E-03 | 83% |
| 13 | 1,43E-03 | 2,43E-03 | 70% | 255 | 13 | 2,43E-03 | 70% |
| 14 | 1,69E-03 | 2,69E-03 | 59% | 255 | 14 | 2,69E-03 | 59% |
| 15 | 1,96E-03 | 2,96E-03 | 51% | 255 | 15 | 2,96E-03 | 51% |
| 16 | 2,26E-03 | 3,26E-03 | 44% | 255 | 16 | 3,26E-03 | 44% |
| 17 | 2,59E-03 | 3,58E-03 | 39% | 255 | 17 | 3,58E-03 | 39% |
| 18 | 2,93E-03 | 3,93E-03 | 34% | 255 | 18 | 3,93E-03 | 34% |
| 19 | 3,30E-03 | 4,30E-03 | 30% | 255 | 19 | 4,30E-03 | 30% |
| 20 | 3,70E-03 | 4,69E-03 | 27% | 255 | 20 | 4,69E-03 | 27% |
| 21 | 4,12E-03 | 5,11E-03 | 24% | 255 | 21 | 5,11E-03 | 24% |
| 22 | 4,56E-03 | 5,56E-03 | 22% | 255 | 22 | 5,56E-03 | 22% |
| 23 | 5,03E-03 | 6,02E-03 | 20% | 255 | 23 | 6,02E-03 | 20% |
| 24 | 5,52E-03 | 6,52E-03 | 18% | 255 | 24 | 6,52E-03 | 18% |
| 25 | 6,04E-03 | 7,03E-03 | 16% | 255 | 25 | 7,03E-03 | 16% |
| 26 | 6,58E-03 | 7,58E-03 | 15% | 255 | 26 | 7,58E-03 | 15% |
| 27 | 7,16E-03 | 8,15E-03 | 14% | 255 | 27 | 8,15E-03 | 14% |
| 28 | 7,75E-03 | 8,74E-03 | 13% | 255 | 28 | 8,74E-03 | 13% |
| 29 | 8,37E-03 | 9,36E-03 | 12% | 255 | 29 | 9,36E-03 | 12% |
| 30 | 9,02E-03 | 1,00E-02 | 11% | 255 | 30 | 1,00E-02 | 11% |

Es zeigt sich, dass für Graustufen, die kleiner oder gleich der Grenz-Graustufe g_{Grenz} ( = 11 ) sind, die theoretischen Helligkeiten bis auf etwa 1 % erreicht werden. Für Graustufen, die geringfügig heller sind, gibt es jedoch erhebliche Abweichungen (bis zu ca. 80% für die erste Graustufe oberhalb der Grenz-Graustufe).

Um die beschriebenen Abweichungen vom Soll-Wert für Graustufen oberhalb der Graustufen-Grenze (g > g_{Grenz}) weiter zu verkleinern, können in einer Weiterbildung der Boost 1 Variante die Grauwerte g₂ des Bildmodulators 5 derart gewählt werden, dass sie für einen realen Projektor 1 mit einer realen Untergrundhelligkeit U (aufgrund der Wahl von g₁ = 255) die theoretischen Helligkeiten erzielen (dies wird nachfolgend auch als "Boost 2" bezeichnet). Gesucht wird also ein g₂', für das die folgende Forderung gilt: ${I}_{Doppel} \left({g}_{1}=1,{g}_{2}^{′}\right) = {I}_{theor} \left(g\right)$ für alle *g_{Grenz}* < *g* ≤ 255

Dies wird erfüllt für ${g}_{2}^{′} = 〚 255 ⋅ {\left(\frac{{\left(\frac{g}{255}\right)}^{γ} - U}{1 - U}\right)}^{\frac{1}{γ}} 〛$

Dieser Wert wird auf eine natürliche Zahl zwischen 0 und 255 gerundet, wie der Operator 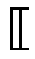 ... 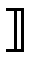 anzeigt. Für den hier betrachteten Fall mit einem Kontrast von K = 1000:1 und y = 2,2 sind die sich ergebenden Grauwerte g₂' in Tabelle 3 eingetragen.

Für die Variante "Boost 2" ergeben sich folgende Helligkeiten: ${I}_{Boost 2} \left(g\right) = { \begin{matrix}{U}^{2} & f ü r g = 0 \to \left({g}_{1}=0,{g}_{2}^{′}=0\right) \\ U ⋅ \left\{U+\left(1-U\right)⋅{\left(\frac{{g}_{2}^{′}}{255}\right)}^{γ}\right\} & f ü r 0 < g \leq {g}_{Grenz} \to \left({g}_{1}=0,{g}_{2}^{′}=255⋅{\left[\frac{\frac{{\left(\frac{g}{255}\right)}^{γ}}{U} - U}{1 - U}\right]}^{\frac{1}{γ}}\right) \\ U + \left(1-U\right) ⋅ {\left(\frac{{g}_{2}^{′}}{255}\right)}^{γ} & f ü r g > {g}_{Grenz} \to \left({g}_{1}=255,{g}_{2}^{′}=255⋅{\left[\frac{{\left(\frac{g}{255}\right)}^{γ} - U}{1 - U}\right]}^{\frac{1}{γ}}\right)\end{matrix}$

Diese Werte sind in der nachfolgenden Tabelle 4 eingetragen.

**Tabelle 4:**

| **Graustufe Eingang** | **Helligkeit theoretisch** | **Helligkeit "S.d.T."** | **Fehler "S.d.T."** | **Graustufen "Boost 2"** | | **Helligkeit "Boost 2"** | **Fehler "Boost 2"** |
|---|---|---|---|---|---|---|---|
| | | | | **g₁** | **g₂'** | | |
| **[0:255]** | **[0:1]** | **[0:1]** | **[%]** | **[0:255]** | **[0:255]** | **[0:1]** | **[%]** |
| 0 | 0 | 1,00E-03 | | 0 | 0 | 1,00E-06 | |
| 1 | 5,08E-06 | 1,01E-03 | 19696% | 0 | 21 | 5,11E-06 | 0,7% |
| 2 | 2,33E-05 | 1,02E-03 | 4287% | 0 | 45 | 2,30E-05 | 1,4% |
| 3 | 5,69E-05 | 1,06E-03 | 1757% | 0 | 69 | 5,73E-05 | 0,7% |
| 4 | 1,07E-04 | 1,11E-03 | 933% | 0 | 92 | 1,07E-04 | 0,1% |
| 5 | 1,75E-04 | 1,17E-03 | 571% | 0 | 115 | 1,74E-04 | 0,5% |
| 6 | 2,62E-04 | 1,26E-03 | 382% | 0 | 138 | 2,60E-04 | 0,7% |
| 7 | 3,67E-04 | 1,37E-03 | 272% | 0 | 162 | 3,69E-04 | 0,6% |
| 8 | 4,93E-04 | 1,49E-03 | 203% | 0 | 185 | 4,94E-04 | 0,3% |
| 9 | 6,38E-04 | 1,64E-03 | 157% | 0 | 208 | 6,39E-04 | 0,2% |
| 10 | 8,05E-04 | 1,80E-03 | 124% | 0 | 231 | 8,05E-04 | 0,0% |
| 11 | 9,92E-04 | 1,99E-03 | 101% | 0 | 254 | 9,91E-04 | 0,1% |
| 12 | 1,20E-03 | 2,20E-03 | 83% | 255 | 5 | 1,17E-03 | 2,2% |
| 13 | 1,43E-03 | 2,43E-03 | 70% | 255 | 8 | 1,49E-03 | 4,1% |
| 14 | 1,69E-03 | 2,69E-03 | 59% | 255 | 9 | 1,64E-03 | 2,9% |
| 15 | 1,96E-03 | 2,96E-03 | 51% | 255 | 11 | 1,99E-03 | 1,4% |
| 16 | 2,26E-03 | 3,26E-03 | 44% | 255 | 12 | 2,20E-03 | 2,8% |
| 17 | 2,59E-03 | 3,58E-03 | 39% | 255 | 14 | 2,69E-03 | 3,8% |
| 18 | 2,93E-03 | 3,93E-03 | 34% | 255 | 15 | 2,96E-03 | 1,0% |
| 19 | 3,30E-03 | 4,30E-03 | 30% | 255 | 16 | 3,26E-03 | 1,3% |
| 20 | 3,70E-03 | 4,69E-03 | 27% | 255 | 17 | 3,58E-03 | 3,1% |
| 21 | 4,12E-03 | 5,11E-03 | 24% | 255 | 19 | 4,30E-03 | 4,5% |
| 22 | 4,56E-03 | 5,56E-03 | 22% | 255 | 20 | 4,69E-03 | 2,9% |
| 23 | 5,03E-03 | 6,02E-03 | 20% | 255 | 21 | 5,11E-03 | 1,7% |
| 24 | 5,52E-03 | 6,52E-03 | 18% | 255 | 22 | 5,56E-03 | 0,6% |
| 25 | 6,04E-03 | 7,03E-03 | 16% | 255 | 23 | 6,02E-03 | 0,3% |
| 26 | 6,58E-03 | 7,58E-03 | 15% | 255 | 24 | 6,52E-03 | 1,0% |
| 27 | 7,16E-03 | 8,15E-03 | 14% | 255 | 25 | 7,03E-03 | 1,7% |
| 28 | 7,75E-03 | 8,74E-03 | 13% | 255 | 26 | 7,58E-03 | 2,2% |
| 29 | 8,37E-03 | 9,36E-03 | 12% | 255 | 27 | 8,15E-03 | 2,7% |
| 30 | 9,02E-03 | 1,00E-02 | 11% | 255 | 28 | 8,74E-03 | 3,1% |

Bei der Variante "Boost 2" läuft der erste Tastgradbereich von 5 bis 255 und läuft der zweite Tastgradbereich von 21 bis 254. Auch bei der Variante "Boost 2" ist der Tastgradwert der oberen Grenze des zweiten Tastgradbereiches größer als der Tastgradwert der unteren Grenze des ersten Tastgradbereiches. Insbesondere liegt der zweite Tastgradbereich vollständig im ersten Tastgradbereich.

Mit der Variante "Boost 2" werden somit die Abweichung der projizierten Helligkeiten gegenüber den theoretischen Werten nicht mehr größer als 5%. Dies wird dadurch erreicht, dass der erste Tastgradbereich (insbesondere für Grauwerte, die nur etwas größer als der Schwellwert sind) entsprechend angepasst wurde. Der zweite Tastgradbereich der Variante "Boost 2" ist identisch zum zweiten Tastgradbereich der Variante "Boost 1".

In den Tabellen 3 und 4 sind die Helligkeiten des erfindungsgemäßen Projektors in Abhängigkeit der darzustellenden Graustufen bis 30 (für y = 2,2) gezeigt. Verglichen werden die Helligkeiten für ein perfektes (theoretisches) System, für den Projektor 101 mit Einfachmodulation nach dem Stand der Technik ("S.d.T."), der nur einen einzigen Bildmodulator 105 aufweist und einen Kontrast von K = 1000:1, sowie für die erfindungsgemäßen Varianten "Boost 1" und "Boost 2". Zusätzlich ist die Abweichung der Lösungen vom Soll-Wert angegeben.

In Fig. 10 sind die prozentualen Abweichungen des projizierten Grauwertes für den Projektor 101 mit Einfachmodulation nach dem Stand der Technik (gestrichelt), dem erfindungsgemäßen Projektor 1 gemäß Variante "Boost 1" (Punkt-Strich-Linie) und dem erfindungsgemäßen Projektor 1 gemäß "Boost 2" (lang-gestrichelt) vom Soll-Wert für die untersten 30 Graustufen gezeigt.

Aus Fig. 10 ist ersichtlich, dass die Varianten "Boost1" und "Boost2" für die geboosteten Grauwerte (= Grauwerte 1 bis 11) identische Ergebnisse liefern, was natürlich daraus resultiert, dass der zweite Tastgradbereich für beide Varianten identisch ist. Für Grauwerte größer als dem Schwellwert (als Grauwerte 12 und größer) liefert die Variante "Boost2" bessere Ergebnisse, die mit größer werdendem Grauwert abnehmen. Diese Verbesserung wird dadurch erreicht, dass ab dem Eingangs-Grauwert 12 das Restlicht, das nicht zu vermeiden ist, mit berücksichtigt wird. Dies führt zu einer Ansteuerung der zweiten Pixel mit einer geringeren Helligkeit als die Eingangshelligkeit (bei der Eingangshelligkeit 12 wird das zweite Pixel z. B. mit dem Helligkeitswert 6 angesteuert; Tabelle 3). Im Ergebnis führt dies zu der beschriebenen Verbesserung.

In einer weiteren Weiterbildung der Variante "Boost1 ", die als "Boost 3" bezeichnet wird, kann wie folgt vorgegangen werden. Dabei wird die Tatsache berücksichtigt, dass die Kippspiegelmatrizen eine feine Abstimmung der synchronen Schaltung der Kippspiegel K1, K2 erlauben. Ferner werden die Grauwerte bzw. Helligkeitswerte für jede der drei Grundfarben rot, grün und blau angegeben, was aus der Verwendung von T_{RGB} := T_{R} = T_{G} = T_{B} ersichtlich ist.

Da die beiden Modulatoren 3, 5 mit Pulsweitenmodulation angesteuert werden, ist für die Berechnung der projizierten Helligkeiten folgende Formel anzuwenden: ${I}_{2 xDMD} \left({g}_{1}, {g}_{2}^{∗}\right) = \frac{{T}_{1} \left({g}_{1}, {g}_{2}^{∗}\right) ⋅ {U}^{2} + {T}_{2} \left({g}_{1}, {g}_{2}^{∗}\right) ⋅ U + {T}_{3} \left({g}_{1}, {g}_{2}^{∗}\right)}{T}$

Dabei gibt es diskrete Helligkeitsschritte, die über eine Pulsweitenmodulation dargestellt werden können. Für die nachfolgenden Betrachtungen wird angenommen, dass tₘᵢₙ die minimale effektive An-Zeit eines Kippspiegels K1, K2 ist (= Zeitdauer, zu der der Kippspiegel in seiner ersten Kippstellung steht) und dass alle Helligkeiten über Vielfache n dieser Zeit gegeben sind.

Die Bestimmung der dargestellten Grauwerte wird wie folgt durchgeführt:
Der Grauwert 0 wird dadurch dargestellt, dass beide DMDs auf Schwarz gestellt sind, d.h. *g*₁ = ${g}_{2}^{∗} = 0 bzw . {n}_{1} = {n}_{2} = 0$.

Für die geboosteten Grauwerte mit 0 < *g* ≤ *g_{Grenz}* wird einer der Modulatoren 3, 5 auf Schwarz gesetzt (z.B. *g*₁ = 0 bzw. *n*₁ = 0), während der andere Modulator einen Grauwert ${g}_{2}^{∗}$ darstellt (bzw. ein Vielfaches *n*₂ der minimalen effektiven An-Zeit 3 · *tₘᵢₙ* für alle drei Farben), um der theoretischen Helligkeit zu genügen. Es ergibt sich also die Forderung: ${I}_{theor} \left(g\right) = {I}_{2 xDMD} \left({g}_{1}=0,{g}_{2}^{∗}\right)$

Da einer der Modulatoren 3, 5 stets auf Schwarz gestellt ist, ergibt sich hier *T*₃ = 0. Für die Zeit *T*₂, in der nur einer der Modulatoren 3, 5 auf Weiß steht, gilt: ${T}_{2} = 3 ⋅ {n}_{2} ⋅ {t}_{min}$

Somit folgt für die Zeit, in der beide Modulatoren 3, 5 auf Schwarz gestellt sind: ${T}_{1} = 3 ⋅ {T}_{RGB} - {T}_{2} = 3 ⋅ {T}_{RGB} - 3 ⋅ {n}_{2} ⋅ {t}_{min}$

Aus Iₜₕₑₒᵣ(g) folgt somit: ${\left(\frac{g}{255}\right)}^{γ} = \frac{1}{T} \left\{{T}_{1}⋅{U}^{2}+{T}_{2}⋅U+{T}_{3}\right\} = \frac{3 ⋅ {n}_{2} ⋅ {t}_{min} ⋅ U ⋅ \left(1-U\right)}{3 ⋅ {T}_{RGB}} + {U}^{2}$

Daraus folgt: ${n}_{2} \left(0<g\leq {g}_{Grenz}\right) = 〚 \frac{{T}_{RGB} ⋅ \left({\left(\frac{g}{255}\right)}^{γ}-{U}^{2}\right)}{{t}_{min} ⋅ U ⋅ \left(1-U\right)} 〛$

Dies entspricht einem Eingabe-Grauwert ${g}_{2}^{∗}$ für den zweiten Modulator 3, 5 von: ${g}_{2}^{∗} \left(0<g\leq {g}_{Grenz}\right) = 〚 255 ⋅ {\left(\frac{{n}_{2} \left(g\right) ⋅ {t}_{min}}{{T}_{RGB}}\right)}^{1 / γ} 〛$

Für Grauwerte, die nicht geboostet aber noch gedithert werden (*g_{Grenz}* < *g* ≤ *g_{Dither}*) und somit innerhalb einer minimalen Beleuchtungszeit τ (pro Farbe) des ersten DMDs beleuchtet werden, ergibt sich eine analoge Forderung zu ${I}_{theor} \left(g\right) = {I}_{2 xDMD} \left({g}_{1}=0,{g}_{2}^{∗}\right)$, nämlich ${I}_{theor} \left(g\right) = {I}_{2 xDMD} \left({g}_{1}=1,{g}_{2}^{∗}\right)$

Hierbei soll der Grauwert *g*₁ = 1 des ersten Modulators 3 die Beleuchtungszeit *τ* bereitstellen. Es ergibt sich: ${T}_{1} = 3 ⋅ {T}_{RGB} - 3 ⋅ τ$ ${T}_{2} = 3 ⋅ τ - 3 ⋅ {n}_{2} ⋅ {t}_{min}$ ${T}_{3} = 3 ⋅ {n}_{2} ⋅ {t}_{min}$

Daraus folgt: ${\left(\frac{g}{255}\right)}^{γ} = \frac{1}{T} \left\{{T}_{1}⋅{U}^{2}+{T}_{2}⋅U+{T}_{3}\right\} = \frac{\left({T}_{RGB}-τ\right) ⋅ {U}^{2} + \left(τ-{n}_{2}⋅{t}_{min}\right) ⋅ U + {n}_{2} ⋅ {t}_{min}}{{T}_{RGB}}$

Somit ergibt sich: ${n}_{2} \left({g}_{Grenz}<g\leq {g}_{Dither}\right) = 〚 \frac{{T}_{RGB} ⋅ {\left(\frac{g}{255}\right)}^{γ} - \left({T}_{RGB}-τ\right) ⋅ {U}^{2} - τ ⋅ U}{{t}_{min} ⋅ \left(1-U\right)} 〛$

Die resultierenden Eingabe-Grauwerte für den zweiten Modulator 5 ergeben sich genauso wie oben: ${g}_{2}^{*} \left({g}_{Grenz}<g\leq {g}_{Dither}\right) = 〚 255 ⋅ {\left(\frac{{n}_{2} \left(g\right) ⋅ {t}_{min}}{{T}_{RGB}}\right)}^{1 / γ} 〛$

Für Graustufen *g* > *g_{Dither}* folgt man dem bereits beschriebenen Vorgehen für eine Doppelmodulation, bei dem von einem ersten der beiden Modulatoren 3, 5 die benötigten Zeitscheiben zu Verfügung gestellt werden, die für die Modulation mit dem zweiten Modulator 3, 5 benötigt werden, um die gesuchte Graustufe zu erzeugen.

Führt man dies zusammen, so ergibt sich: $\begin{matrix}{I}_{Boost 3} \left(g\right) \\ = { \begin{matrix}{U}^{2} & für g = 0 \to \left({g}_{1}={g}_{2}^{*}=0\right) \\ \frac{{n}_{2} ⋅ {t}_{min} ⋅ U ⋅ \left(1-U\right)}{{T}_{RGB}} + {U}^{2} & für 0 < g \leq {g}_{Grenz} \to \left({g}_{1}=0,{n}_{2}=〚 \frac{{T}_{RGB} ⋅ \left({\left(\frac{g}{255}\right)}^{γ}-{U}^{2}\right)}{{t}_{min} ⋅ U ⋅ \left(1-U\right)} 〛\right) \\ \frac{\left({T}_{RGB}-τ\right) ⋅ {U}^{2} + \left(τ-{n}_{2}⋅{t}_{min}\right) ⋅ U + {n}_{2} ⋅ {t}_{min}}{{T}_{RGB}} & für {g}_{Grenz} < g \leq {g}_{Dither} \to \left({g}_{1}=1,{n}_{2}=〚 \frac{{T}_{RGB} ⋅ {\left(\frac{g}{255}\right)}^{γ} - \left({T}_{RGB}-τ\right) ⋅ {U}^{2} - τ ⋅ U}{{t}_{min} ⋅ \left(1-U\right)} 〛\right) \\ Normale DMD - Doppelmodulation & für {g}_{Dither} < g \leq 255\end{matrix}\end{matrix}$

In der nachfolgenden Tabelle 5 sind die Ergebnisse nach dieser Berechnungsvorschrift zusammengestellt. Es zeigt sich, dass mit dieser Methode die geboosteten Werte noch einmal genauer dargestellt werden können.

**Tabelle 5**

| **g₁ [0:255]** | **g₂^{∗} [0:255]** | **n₂** | **T₁ [µs]** | **T₂ [µs]** | **T₃ [µs]** | **[0:1]** | **[%]** |
|---|---|---|---|---|---|---|---|
| 0 | 0 | 0 | 0 | 0 | 0 | 1,00E-06 | |
| 0 | 21 | 87 | 12449 | 51 | 0 | 5,07E-06 | 0,059% |
| 0 | 45 | 477 | 12221 | 279 | 0 | 2,33E-05 | 0,039% |
| 0 | 69 | 1194 | 11800 | 700 | 0 | 5,69E-05 | 0,016% |
| 0 | 92 | 2268 | 11171 | 1329 | 0 | 1,07E-04 | 0,018% |
| 0 | 115 | 3718 | 10321 | 2179 | 0 | 1,75E-04 | 0,010% |
| 0 | 138 | 5564 | 9240 | 3260 | 0 | 2,62E-04 | 0,003% |
| 0 | 162 | 7819 | 7919 | 4581 | 0 | 3,67E-04 | 0,003% |
| 0 | 185 | 10496 | 6350 | 6150 | 0 | 4,93E-04 | 0,001% |
| 0 | 208 | 13607 | 4527 | 7973 | 0 | 6,38E-04 | 0,001% |
| 0 | 231 | 17162 | 2444 | 10056 | 0 | 8,05E-04 | 0,001% |
| 0 | 254 | 21170 | 96 | 12404 | 0 | 9,92E-04 | 0,002% |
| 1 | 12 | 24 | 11600 | 885,9 | 14,1 | 1,20E-03 | 0,411% |
| 1 | 13 | 29 | 11600 | 883,0 | 17,0 | 1,43E-03 | 0,153% |
| 1 | 14 | 34 | 11600 | 880,1 | 20,0 | 1,67E-03 | 1,294% |
| 1 | 15 | 40 | 11600 | 876,6 | 23,4 | 1,95E-03 | 0,884% |
| 1 | 16 | 47 | 11600 | 872,5 | 27,5 | 2,27E-03 | 0,482% |
| 1 | 17 | 54 | 11600 | 868,5 | 31,6 | 2,60E-03 | 0,612% |
| 1 | 18 | 61 | 11600 | 864,3 | 35,7 | 2,93E-03 | 0,098% |
| 1 | 19 | 69 | 11600 | 859,6 | 40,4 | 3,30E-03 | 0,041% |
| 1 | 20 | 77 | 11600 | 854,9 | 45,1 | 3,68E-03 | 0,502% |
| 1 | 21 | 86 | 11600 | 849,6 | 50,4 | 4,10E-03 | 0,389% |
| 1 | 22 | 96 | 11600 | 843,8 | 56,3 | 4,57E-03 | 0,190% |
| 1 | 23 | 106 | 11600 | 837,9 | 62,1 | 5,04E-03 | 0,169% |
| 1 | 24 | 116 | 11600 | 832,0 | 68,0 | 5,50E-03 | 0,303% |
| 1 | 25 | 127 | 11600 | 825,6 | 74,4 | 6,02E-03 | 0,339% |
| 1 | 26 | 139 | 11600 | 818,6 | 81,4 | 6,58E-03 | 0,044% |
| 1 | 27 | 151 | 11600 | 811,5 | 88,5 | 7,14E-03 | 0,155% |
| 1 | 28 | 164 | 11600 | 803,9 | 96,1 | 7,75E-03 | 0,022% |
| 1 | 29 | 177 | 11600 | 796,3 | 103,7 | 8,36E-03 | 0,139% |
| 1 | 30 | 191 | 11600 | 788,1 | 111,9 | 9,02E-03 | 0,049% |

Bei den bisherigen Betrachtungen wurde davon ausgegangen, dass die Abbildungsoptik 4 jeden Kippspiegel K1 auf genau einen zugeordneten Kippspiegel K2 (und nur auf diesen) abbildet. Dies ist bei einem realen System jedoch praktisch kaum realisierbar, so dass ein Kippspiegel K2 Licht von dem direkt zugeordneten Kippspiegel K1 (der auch als Hauptbeleuchtungspixel bezeichnet werden kann, da von ihm der Hauptteil des auf den Kippspiegel treffenden Lichtes stammt) sowie Licht von dazu benachbarten Kippspiegeln K1 empfängt.

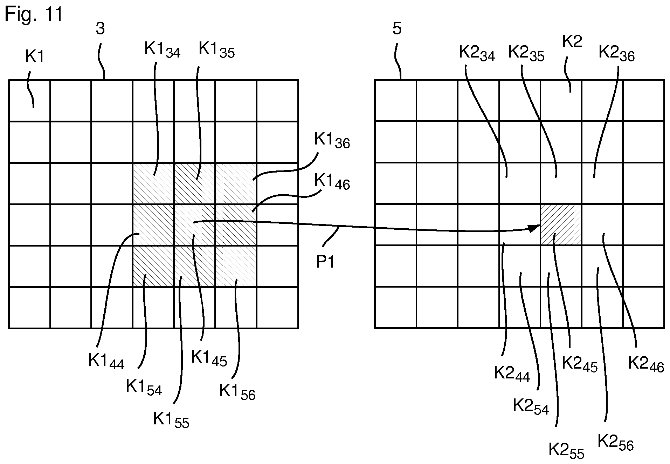

Dies ist schematisch in Fig. 11 dargestellt. Es sei der schraffiert dargestellte Kippspiegel K2₄₅ des Bildmodulators 5 betrachtet. Dieser wird hauptsächlich mit dem Licht des direkt zugeordneten Kippspiegels K1₄₅ (= Hauptbeleuchtungspixel) des Beleuchtungsmodulators 3 beleuchtet, wie durch den Pfeil P1 angedeutet ist. Jedoch trifft auch Licht von den zum Kippspiegel K1₄₅ unmittelbar benachbarten Kippspiegeln K1₃₄, K1₃₅, K1₃₆, K1₄₄, K1₄₆, K1₅₄, K1₅₅, K1₅₆ auf den Kippspiegel K2₄₅ des Bildmodulators 5. Somit sind in diesem Fall dem Kippspiegel K2₄₅ des Bildmodulators 5 die Kippspiegel K1₄₅, K1₃₄, K1₃₅, K1₃₆, K1₄₄, K1₄₆, K1₅₄, K1₅₅, K1₅₆ des Beleuchtungsmodulators 3 zugeordnet.

Man kann diese Zuordnung auch ausgehend von einem Kippspiegel K1 des Beleuchtungsmodulators 3 formulieren. So trifft Licht vom Kippspiegel K1₄₅ hauptsächlich auf den Kippspiegel K2₄₅. Zusätzlich trifft Licht vom Kippspiegel K1₄₅ noch auf die benachbarten Kippspiegel K2₃₄, K2₃₅, K2₃₆, K2₄₄, K2₄₆, K2₅₄, K2₅₅ und K2₅₆, so dass der Kippspiegel K1₄₅ neun Kippspiegeln K2₃₄, K2₃₅, K2₃₆, K2₄₄, K2₄₅, K2₄₆, K2₅₄, K2₅₅ und K2₅₆ zugeordnet ist.

Wenn der Kippspiegel K2₄₅ einen Grauwert darstellen soll, der kleiner oder gleich dem Schwellwert *g_{Grenz}* ist, und der benachbarte Kippspiegel K2₄₄ einen Grauwert darstellen soll, der über dem Schwellwert liegt, würde dies dazu führen, dass das Beleuchtungspixel K1₄₅ zum Boosten des Bildpixels K2₄₅ auf schwarz geschaltet wird und das Beleuchtungspixel K1₄₄ für den Kippspiegel K2₄₄ auf weiß geschaltet wird. Damit würde das zu boostende Beleuchtungspixel K2₄₅ mehr Licht als gewünscht erhalten (z.B. wegen des vom Beleuchtungspixel K1₄₄ stammenden Lichtes), was zu einem zu hellen geboosteten Pixel führen würde.

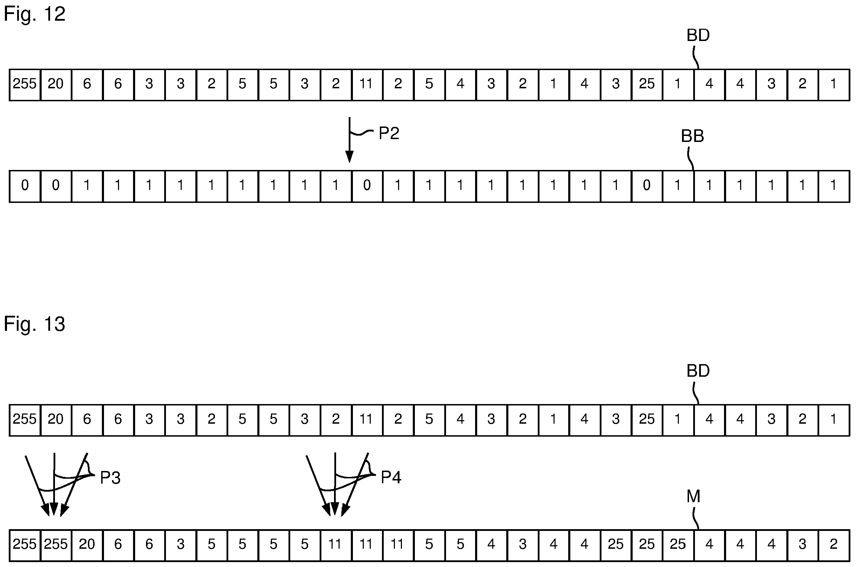

Für die nachfolgende Beschreibung wird zur Vereinfachung der Darstellung von einer darzustellenden Pixelzeile mit 27 Pixeln ausgegangen, wie in Fig. 12 gezeigt ist. Jedes dargestellte Quadrat steht für ein Pixel, wobei in jedem Pixel der darzustellende Grauwert als Zahl angegeben ist ( = Bilddaten BD). Als Schwellwert *g_{Grenz}* wird der Grauwert 10 festgelegt. Basierend auf den gegebenen Bilddaten BD kann für jedes Pixel ermittelt werden (Pfeil P2), ob es boostbar ist (sein Grauwert ist kleiner oder gleich dem Schwellwert 10) oder nicht (sein Grauwert ist größer als der Schwellwert 10). Dadurch werden Boostdaten BB ermittelt, die wiederum für jedes Pixel dargestellt sind. Wenn der Wert des Pixels 1 ist, liegt ein boostbares Pixel vor. Bei einem Wert von 0 ist das Pixel nicht boostbar.

Ferner werden basierend auf den gegebenen Bilddaten BD die Musterdaten M erzeugt. Dazu wird für jedes Pixel der Maximalwert von den Werten der Bilddaten für das Pixel und seinen direkten Nachbarpixeln ermittelt und dieser Maximalwert wird in das entsprechende Pixel der Musterdaten M geschrieben, wie durch die Pfeile P3 und P4 in Fig. 13 für zwei Pixel der Musterdaten M angedeutet ist. Damit wird sichergestellt, dass jedes Pixel des Bildmodulators 5 gleichmäßig oder ausreichend ausgeleuchtet wird, selbst wenn aufgrund der pulsweitenmodulierten Beleuchtungssteuerdaten MS die Beleuchtungspixel während einer Einzelbilddauer zeitweise ausgeschaltet sind.

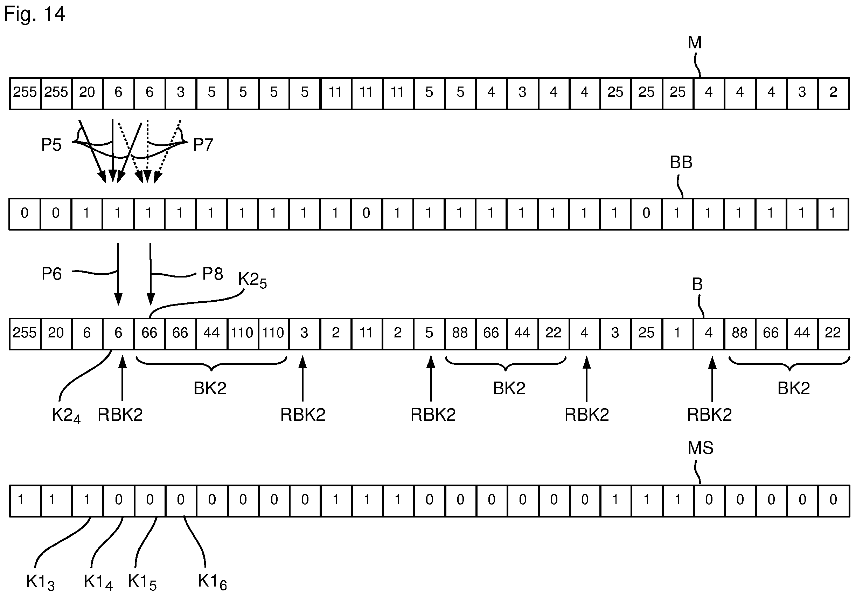

Wie in Fig. 14 gezeigt ist, wird für jedes boostbare Pixel (Pixel mit dem Wert 1 in den Boostdaten BB) ermittelt, ob die Beleuchtungspixelwerte der jeweils zugeordneten drei Pixel der Musterdaten M alle jeweils einen Wert von kleiner oder gleich dem Schwellwert aufweisen. Wenn dies nicht der Fall ist, wird der Grauwert in den Einzelbilddaten B nicht geboostet und somit unverändert übernommen. Dies ist durch die Pfeile P5 und P6 angedeutet. Der linke Pfeil der drei Pfeile P5 zeigt, dass der Wert 20 in den Musterdaten M dem boostbaren Pixel zugeordnet ist, so dass der Grauwert nicht geboostet wird.

Bei dem boostbaren Pixel, dessen zugeordnete Pixelwerte der Musterdaten M durch die Pfeile P7 hervorgehoben sind, sind alle Pixelwerte kleiner oder gleich dem Schwellwert, so dass der entsprechende Grauwert in den Einzelbilddaten B von 6 auf 66 geboostet wird (Peil P8). Es wird hier angenommen, dass der Grauwert eines geboosteten Pixels ausgehend von dem ursprünglichen Grauwert durch Multiplikation mit einem Boostfaktor (der hier 22 beträgt) ermittelt wird.

Die Beleuchtungssteuerdaten MS werden basierend auf den Musterdaten M bei dem hier beschriebenen Ausführungsbeispiel so erzeugt, dass sie für Werte größer als dem Schwellwert 10 gemäß dem Grauwert in den Bilddaten auf ein bzw. Weiß und für Werte kleiner oder gleich dem Schwellwert 10 auf aus bzw. Schwarz gesetzt werden. Somit werden alle geboosteten Pixel BK2 sicher nur mit der nicht zu vermeidenden Untergrundhelligkeit beleuchtet, die entsprechende der geboosteten Werte moduliert wird. So wird z.B. das Pixel K2₅ durch Licht von den Pixeln K1₄, K1₅ und K1₆ beleuchtet, die alle auf aus (= 0) gesetzt sind Alle nicht geboosteten Pixel werden hingegen beleuchtet.

Jedoch kann bei einigen der nicht geboosteten Pixeln die Helligkeit der Beleuchtung etwas geringer als bisher ausfallen. Dies betrifft die Randpixel RBK2, deren jeweils zugeordnetes Hauptbeleuchtungspixel auf schwarz geschaltet ist, da dieses Hauptbeleuchtungspixel wegen eines geboosteten Pixels auf schwarz geschaltet ist. Jedoch ist ein Nachbarbeleuchtungspixel nicht auf schwarz geschaltet, so dass von diesem Nachbarbeleuchtungspixel Licht auf das boostbare Randpixel RBK2 fällt. Da das boostbare Randpixel RBK2 jedoch keinen geboosteten Grauwert, sondern den ursprünglichen Grauwert aufweist, kann dadurch ein zu heller Rand sicher vermieden werden. Dies trifft z.B. auf das Pixel K2₄ zu, dessen Hauptbeleuchtungspixel K1₄ zwar auf aus geschaltet ist. Jedoch liegt eine Restbeleuchtung über das Beleuchtungspixel K1₃ vor.

Dieses Vermeiden des zu hellen Randes kann jedoch dazu führen, dass der Rand zu dunkel erscheint, da das Randpixel RBK2 mit der beschriebenen Restbeleuchtung beleuchtet wird.

Dieser unerwünschte Effekt kann durch Ausnutzung der Pulsweitenmodulation zur Ansteuerung der Beleuchtungs- und Bildpixel K1 und K2 verringert werden. Des Weiteren kann die Anzahl der geboosteten Pixel erhöht werden, wie nachfolgend im Detail beschrieben wird.

Es wird von den gleichen Bilddaten BD gemäß Fig. 12 ausgegangen. Aus diesen werden die Boostdaten BB erzeugt, wie bereits in Verbindung mit Fig. 12 beschrieben wurde.

Des Weiteren werden anhand der Bilddaten BD in gleicher Weise wie in Fig. 13 Musterdaten M erzeugt. Diese werden dann in einem weiteren Schritt hinsichtlich der daraus folgenden Pulsweitenmodulation für den Beleuchtungsmodulator 3 ausgewertet.

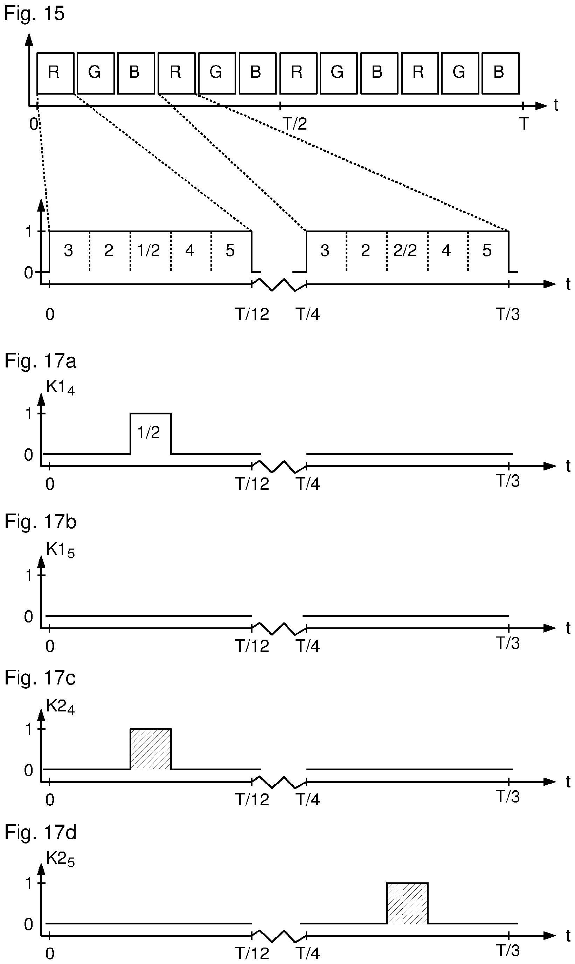

Die Pulsweitenmodulation für den Beleuchtungsmodulator 3 hat für jede der drei Farben rot, grün und blau während der Einzelbilddauer T verschiedene Zeitabschnitte, die in Verbindung mit Fig. 15 erläutert werden. Aufgrund der angenommenen Drehfrequenz von 120 Hz für das Farbrad 15, ergeben sich für jede der drei Farben rot, grün und blau vier Farbdurchgänge pro Einzelbilddauer T, wie schematisch in Fig. 15 gezeigt ist. Die Farbdurchgänge werden mit R für rot, G für grün und B für blau bezeichnet. Nachfolgend wird im Detail auf die Farbe rot eingegangen. Gleiches gilt jedoch für die Farben grün und blau.

Da die einzelnen Zeitabschnitte (die auch als Zeitslots bezeichnet werden können), für die erste und zweite vollständige Umdrehung des Farbrades 15 während einer Einzelbilddauer T gleich verteilt sind, wird nur die erste Umdrehung des Farbrades 15 im Detail beschrieben.

Im unteren Teil von Fig. 15 ist daher der erste und zweite Farbdurchgang für rot mit einer vergrößerten zeitlichen Skala dargestellt. Daraus ist ersichtlich, dass jeder Farbdurchgang in fünf gleich lange Zeitabschnitte aufgeteilt ist, die mit 1/2, 2, 3, 4 und 5 bzw. 2/2, 2, 3, 4 und 5 bezeichnet sind. Es gibt während eines Farbdurchgangs somit sechs unterschiedliche Zeitabschnitte (1/2, 2/2, 2, 3, 4 und 5). Für jeden Zeitabschnitt kann anhand der Beleuchtungssteuerdaten BS für jedes Beleuchtungspixel individuell eingestellt werden, ob es eingeschaltet ist (= 1 und entspricht der Beleuchtung der zugeordneten Bildpixel) oder ob es ausgeschaltet ist (=0 und entspricht keiner aktiven Beleuchtung der zugeordneten Bildpixel). Ferner wird angenommen, dass die Beleuchtungssteuerdaten MS die Werte 0, 1/2, L oder H aufweisen können.

Dabei bedeutet 0, dass das entsprechende Beleuchtungspixel während der gesamten Einzelbilddauer T ausgeschaltet ist. Der Wert 1/2 bedeutet, dass nur der Zeitabschnitt 1/2 zur Beleuchtung benutzt wird, wobei damit Grauwerte von 1 bis 12 darstellbar sind. Der Wert L bedeutet, dass nur die Zeitabschnitte 2/2, 2, 3, 4 und 5 zur Beleuchtung benutzt werden, wobei damit Grauwerte von 13 bis 229 darstellbar sind. Der Wert H bedeutet, dass alle Zeitabschnitte 1/2, 2/2, 2, 3, 4 und 5 zur Beleuchtung benutzt werden, wobei damit Grauwerte von größer oder gleich 230 darstellbar sind.

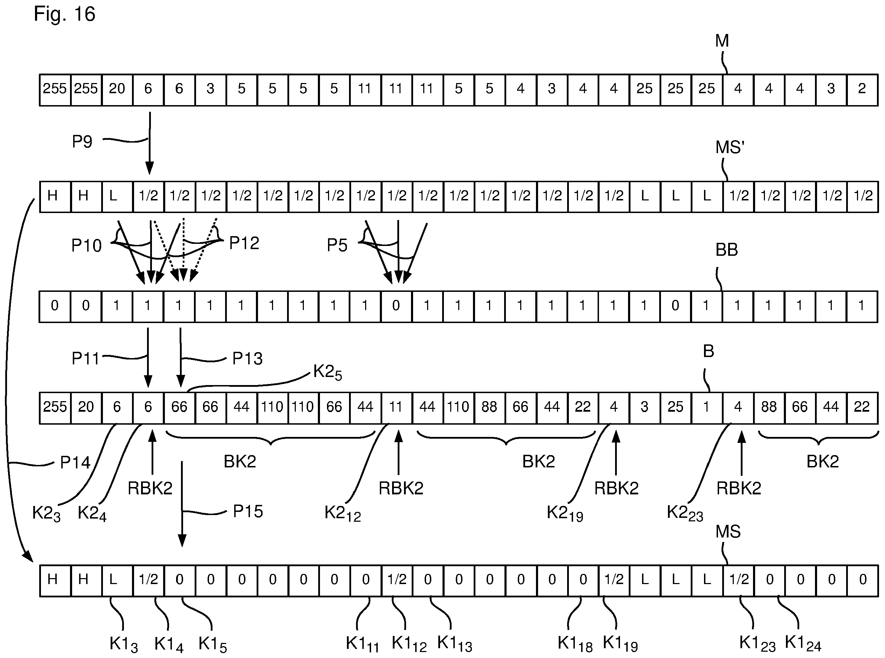

Wie nun in Fig. 16 gezeigt ist, werden aus den Musterdaten M vorläufige Beleuchtungssteuerdaten MS' erzeugt, wobei die beschriebenen möglichen Werte der Beleuchtungssteuerdaten MS den einzelnen Pixeln zugewiesen werden (Pfeil P9).

Dann wird für jedes boostbare Pixel (Pixel mit dem Wert 1 in den Boostdaten BB) ermittelt, ob die Werte der vorläufigen Beleuchtungssteuerdaten MS' der jeweils zugeordneten drei Pixeln keine anderen Werte außer 0 und 1/2 aufweisen. Wenn dies nicht der Fall ist, wird der Grauwert in den Einzelbilddaten B nicht geboostet und somit unverändert übernommen. Dies ist durch die Pfeile P10 und P11 angedeutet, wobei der linke Pfeil der Pfeile P10 zeigt, dass der Wert L in den vorläufigen Beleuchtungssteuerdaten MS' dem boostbaren Pixel zugeordnet ist, so dass der Grauwert nicht geboostet wird.

Bei dem boostbaren Pixel, dessen zugeordneten Pixelwerte der vorläufigen Beleuchtungssteuerdaten MS' durch die Pfeile P12 hervorgehoben sind, sind alle Pixelwerte aus der Gruppe, die die Werte 0 und 1/2 umfasst. Daher ist der entsprechende Grauwert von 3 gemäß den Bilddaten BD auf 66 (aufgrund des Boostfaktors 22) erhöht.

Die Beleuchtungssteuerdaten MS werden dann basierend auf den vorläufigen Beleuchtungssteuerdaten MS' und den Bilddaten B so erzeugt, dass für geboostete Pixel das zugeordnete Hauptbeleuchtungspixel auf 0 gesetzt wird und die restlichen Beleuchtungspixel den gleichen Wert wie in den vorläufigen Beleuchtungssteuerdaten MS' aufweisen, wie durch die Pfeile P14 und P15 angedeutet ist.

Wie ein Vergleich der Bilddaten B gemäß Fig. 16 mit den Bilddaten B gemäß Fig. 14 zeigt, können mehr boostbare Pixel geboostet werden. Ferner kann z.B. das linke Randpixel K2₄ über sein zugeordnetes Hauptbeleuchtungspixel K1₄ normal beleuchtet werden (Beleuchtungssteuerdatenwert 1/2), da das direkt benachbarte geboostete Bildpixel K2₅ mit dem geboosteten Grauwert von 66 nur zu solchen Zeiten in seinen An-Zustand geschaltet wird, die nicht mit dem Zeitslot 1/2 zusammenfallen. Dies ist für die Kippspiegel K1₄, K1₅, K2₄ und K2₅ schematisch in den vier Darstellungen Fig. 17a, 17b, 17c und 17d für die Farbe rot in gleicher Weise wie in der unteren Darstellung von Fig. 15 gezeigt.

Fig. 17a und 17 b zeigen die Zeiten, zu denen die Kippspiegel K1₄ und K1₅ zur Beleuchtung eingeschaltet (= 1) und ausgeschaltet (= 0) sind. Der Kippspiegel K1₄ ist während des Zeitslots 1/2 eingeschaltet und während der restlichen Zeitslots ausgeschaltet. Der Kippspiegel K1₅ ist durchgehend ausgeschaltet.

Der Kippspiegel K2₄ (= Bildpixel K2₄) wird während des Zeitslots 1/2 eingeschaltet, um den Grauwert 6 zu modulieren. Dies ist durch eine Schraffur angedeutet, da der Kippspiegel K2₄ nicht während des gesamten Zeitslots 1/2 im Ein-Zustand (= 1) stehen muss. Während der anderen Zeitslots 2/2, 2, 3, 4 und 5 ist der Kippspiegel K2₄ dauernd im Aus-Zustand (= 0).

Der Kippspiegel K2₅ (= Bildpixel K2₅) wird während des Zeitslots 2/2 eingeschaltet, um den Grauwert 66 zu modulieren. Dies ist durch eine Schraffur angedeutet, da der Kippspiegel K2₅ nicht während des gesamten Zeitslots 2/2 im Ein-Zustand (= 1) stehen muss. Während der anderen Zeitslots 1/2, 2, 3, 4 und 5 ist der Kippspiegel K2₅ dauernd im Aus-Zustand (= 0).

Wie diesen Darstellungen in Fig. 17a- 17d entnommen werden kann, beeinflusst das nicht zu vermeidende Beleuchtungsstreulicht des Kippspiegels K1₄ (bzw. weitergeleitetes Beleuchtungsrestlicht, obwohl der Kippspiegel K1₄ im Aus-Zustand steht), das während des Zeitslots 1/2 auf den Kippspiegel K2₅ fällt, nicht die Modulation des Kippspiegels K2₅ für den geboosteten Grauwert 66, da das Streulicht nur während eines Zeitabschnitts auf den Kippspiegel K2₅ fällt, in dem der Kippspiegel K2₅ auf aus steht und nicht zur Modulation in den Ein-Zustand geschaltet wird. Es liegt somit eine zeitliche Trennung der Beleuchtung am Rand des geboosteten Bereiches vor, wodurch mehr boostbare Pixel geboostet werden können und die Helligkeit des Randpixels K2 besser an die Helligkeit der benachbarten ungeboosteten Pixel (z.B. Pixel K2₃) angepasst ist (siehe Fig. 16) im Vergleich zu der Ausführungsform gemäß Fig. 12-14.

Bei der Variante gemäß Fig. 16 werden die Randpixel RBK2 zumindest mittels des zugeordneten Hauptbeleuchtungspixels K1₄, K1₁₂, K1₁₉ und K1₂₃ beleuchtet. Jedoch ist die Beleuchtung (Pixel K1₅, K1₁₁, K1₁₃, K1₁₈ sowie K1₂₄) für das unmittelbar benachbarte geboostete Pixel K2₅, K2₁₁, K2₁₃, K2₁₈ und K2₂₄ auf Null gesetzt, was zu einer nicht optimalen Beleuchtung der Randpixel RBK2 (K2_{4,}, K2₁₂, K2₁₉ und K2₂₃) führt.

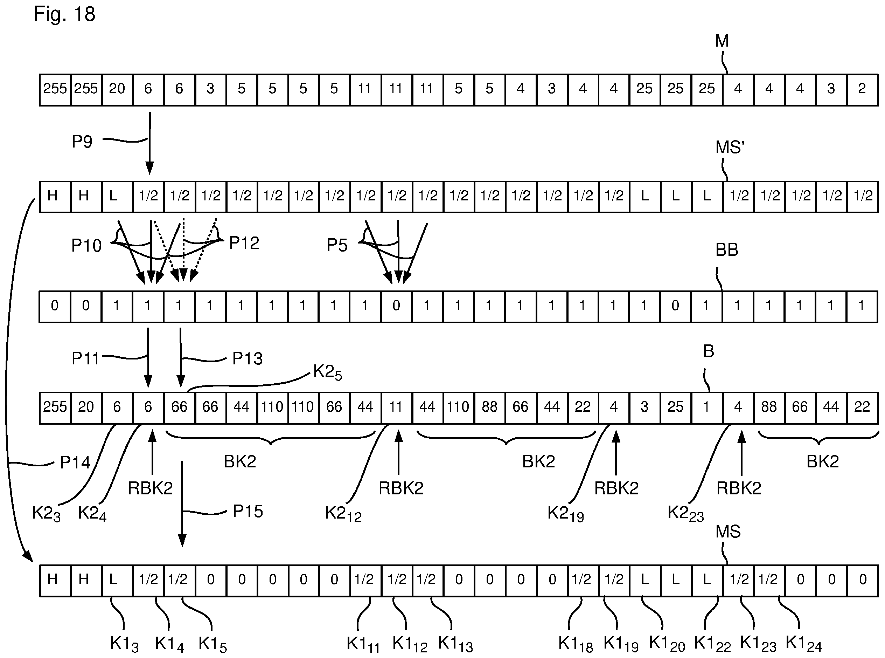

Da bei der hier beschriebenen Ausführungsform der Schwellwert 10 und der Boostfaktor 22 beträgt, ist der maximale Helligkeitswert eines geboosteten Pixels 220. Dieser Helligkeitswert lässt sich mit den Zeitabschnitten 2/2, 2, 3, 4 und 5 für den Beleuchtungsmodulator 3 darstellen, so dass der Zeitabschnitt 1/2 nicht benötigt wird. Das bedeutet aber, dass der Zeitabschnitt 1/2 auch für Hauptbeleuchtungspixel von geboosteten Bildpixeln gesetzt werden kann. Dies wird in einer Weiterbildung der in Verbindung mit Fig. 16 beschriebenen Ausführungsform in der Art genutzt, dass alle drei zugeordneten Beleuchtungspixel eines jeden Randpixels RBK2 zumindest auf 1/2 gesetzt werden. Dies ist in Fig. 18 gezeigt, die im Wesentlichen Fig. 16 entspricht. Es wird daher zur Beschreibung von Fig. 18 auf die obigen Ausführungen verwiesen. Im Unterschied zu der Ausführungsform von Fig. 16 sind jedoch die Beleuchtungspixel K1₅, K1₁₁, K1₁₃, K1₁₈ sowie K1₂₄ auf 1/2 gesetzt, so dass die entsprechenden Randbildpixel K2₄, K2₁₂, K2₁₉ und K2₂₃ jeweils durch alle drei zugeordneten Beleuchtungspixel beleuchtet werden und somit eine ausreichende Beleuchtung sichergestellt werden kann. Die Anpassung der Helligkeit der beleuchtete Randpixel RBK2 an die Helligkeit der benachbarten ungeboosteten Pixel ist somit im Vergleich zur Ausführungsform gemäß Fig. 16 nochmals verbessert.

Wie bereits beschrieben wurde, sind der Schwellwert und der Boostfaktor so gewählt, dass der maximale Helligkeitswert eines geboosteten Pixels 220 beträgt, damit alle Boostwerte ohne den Zeitabschnitt 1/2 dargestellt werden können. Es ist jedoch auch möglich, den Schwellwert und/oder den Boostfaktor so festzulegen, dass für geboostete Pixel Helligkeitswerte vorliegen, die größer als 220 sind und für die somit der Zeitabschnitt 1/2 benötigt werden würde. In diesem Fall kann man beispielsweise Boostwerte von größer als 220 nur mit dem Helligkeitswert 220 darstellen. Der Unterschied bei der hohen Helligkeit ist für einen Betrachter nicht wahrnehmbar. Ferner oder alternativ ist es möglich, auch Boostwerte von größer als 220 unter Einsatz des Zeitabschnitts 1/2 darzustellen, wenn alle zugeordneten ersten Pixel während der gesamten Einzelbilddauer in den zweiten Zustand geschaltet sind. Dies trifft insbesondere für geboostete Pixel zu, deren Nachbarn und eventuell weitere Nachbarn auch alle geboostete Pixel sind.

Bei der bisherigen Beschreibung wurden nur die direkten Nachbarpixel des Hauptbeleuchtungspixel des ersten Modulators 3 berücksichtigt, so dass bei den Darstellungen gemäß Fig. 12-14, 16, 17a -17d und 18 stets drei erste Pixel (K1₃, K1₄ und K1₅) für ein zweites Pixel (K2₄) bei der Zeilendarstellung betrachtet werden, was gemäß Fig. 11 bei Berücksichtigung der flächigen Ausbildung der Modulatoren 3, 5 neun ersten Pixeln des Bildmodulators 5 (K1₃₄, K1₃₅, K1₃₆, K1₄₄, K1₄₅, K1₄₆, K1₅₄, K1₅₅, K1₅₆) für ein zweites Pixel (K2₄₅) entspricht. Natürlich können auch weitere Nachbarpixel berücksichtigt werden, so dass z.B. die zwei nächsten Nachbarn berücksichtigt werden. Bei der Zeilendarstellung gemäß Fig. 12-14, 16, 17a - 17d und 18 entspricht dies dann fünf ersten Pixeln und bei Berücksichtigung der flächigen Ausbildung der Modulatoren 3, 5 gemäß Fig. 11 sind dies dann 25 erste Pixel.

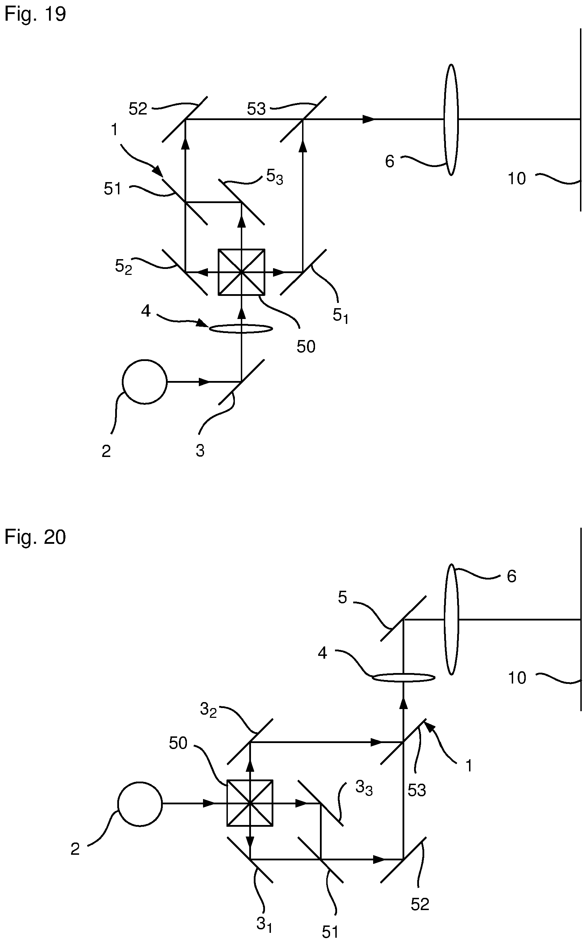

In Fig. 19 ist eine Abwandlung des erfindungsgemäßen Projektors 1 gemäß Fig. 1 gezeigt, wobei gleiche Elemente mit gleichen Bezugszeichen bezeichnet sind. Zur Vereinfachung der Darstellung wurde die Steuereinheit 7 nicht eingezeichnet. Im Unterschied zu dem Projektor gemäß Fig. 1 sind bei dem Projektor von Fig. 19 drei Bildmodulatoren 5₁, 5₂ und 5₃ und ein Farbteilerwürfel 50 vorgesehen. So kann der Bildmodulator 5₁ mit rotem Licht, der Bildmodulator 5₂ mit grünem Licht und der Bildmodulator 5₃ mit blauem Licht beaufschlagt werden. Die Modulation der Bildmodulatoren 5_{1,} 5₂ und 5₃ und des Beleuchtungsmodulators 3 findet in gleicher Weise wie beim Projektor 1 gemäß Fig. 1 statt. Das von den Bildmodulatoren 5₁, 5₂ und 5₃ modulierte Licht für die Projektion wird über die beiden Farbteiler 51 und 53 und den Umlenkspiegel 52 zu einem gemeinsamen Strahlenbündel überlagert, das mittels der Projektionsoptik 6 auf die Projektionsfläche 10 abgebildet wird.

Die Lichtquelle 2 kann beispielsweise weißes Licht abgeben, das mittels des Beleuchtungsmodulators 3 moduliert wird und dann aufgrund des Farbteilerwürfels 50 wellenlängenabhängig so aufgeteilt wird, dass, wie beschrieben, der Bildmodulator 5₁ mit rotem Licht, der Bildmodulator 5₂ mit grünem Licht und der Bildmodulator 5₃ mit blauem Licht beleuchtet wird. Die Beleuchtung der Bildmodulatoren 5₁ - 5₃ kann dabei entweder zeitsequenziell oder gleichzeitig durchgeführt werden. Die Zuordnung der Pixel des Beleuchtungsmodulators 3 zu den Pixeln jedes Bildmodulators 5₁, 5₂, 5₃ kann in gleicher Weise vorliegen wie bei den bereits beschriebenen Ausführungsformen des erfindungsgemäßen Projektors 1.

In Fig. 20 ist eine Abwandlung des erfindungsgemäßen Projektors 1 in gleicher Weise wie in Fig. 19 dargestellt. Im Unterschied zum Projektor gemäß Fig. 19 sind beim Projektor gemäß Fig. 20 drei Beleuchtungsmodulatoren 3₁, 3₂ und 3₃ vorgesehen, die z.B. für rotes Beleuchtungslicht (Beleuchtungsmodulator 3₁), grünes Beleuchtungslicht (Beleuchtungsmodulator 3₂) und blaues Beleuchtungslicht (Beleuchtungsmodulator 3₃) vorgesehen sind und jeweils die entsprechende Farbe modulieren. Die Beaufschlagung der Beleuchtungsmodulatoren 3₁-3₃ mit rotem, grünem und blauem Licht kann über den Farbteilerwürfel 50 erfolgen, der von der Lichtquelle 2 mit weißem Licht beaufschlagt wird. Über die Farbteiler 51 und 53 und den Umlenkspiegel 52 werden das rote, grüne und blaue Beleuchtungslicht, das moduliert ist, auf den Bildmodulator 5 gerichtet. Das vom Bildmodulator 5 modulierte Licht wird über die Projektionsoptik 6 auf die Projektionsfläche 10 abgebildet.

Die Beleuchtungsmodulatoren 3₁-3₃ können so angesteuert werden, dass der Bildmodulator 5 zeitsequenziell mit dem modulierten grünen, blauen und roten Beleuchtungslicht beaufschlagt wird. Alternativ ist es möglich, dass modulierte grüne, blaue und rote Beleuchtungslicht gleichzeitig auf den Bildmodulator 5 zu richten. Die Zuordnung der Pixel jedes Beleuchtungsmodulators 3₁ - 3₃ zu den Pixeln des Bildmodulators 5 kann in gleicher Weise vorliegen wie bei den bereits beschriebenen Ausführungsformen des erfindungsgemäßen Projektors 1.

Der erfindungsgemäße Projektor 1 kann somit ausgebildet sein, dass N erste Modulatoren (wobei N eine ganze Zahl größer als 1 ist) auf einen zweiten Modulator abgebildet werden (bei Fig. 19 ist N=3) oder dass ein erster Modulator auf M zweite Modulatoren (wobei M eine ganze Zahl größer als 1 ist) abgebildet wird (bei Fig. 20 ist M=3). Ferner kann der erfindungsgemäße Projektor 1 so ausgebildet sein, dass N1 erste Modulatoren auf M1 zweite Modulatoren abgebildet werden, wobei N1 und M1 jeweils ganze Zahlen größer oder gleich 1 sind (N1 und M1 können gleich oder verschieden sein).

Mit den beschriebenen unterschiedlichen Arten des Boostens können niedrige Grau- bzw. Helligkeitswerte gut dargestellt werden. Es können jedoch Schwierigkeiten auftreten, wenn Helligkeitsanpassungen durchgeführt werden müssen, um einen gute Bilddarstellung zu gewährleisten.

Dabei kann es sich z.B. um ein sogenanntes Shading handeln, das eingesetzt wird, wenn die einzelnen Pixel auf der Projektionsfläche unterschiedliche Größen aufweisen und somit einem Betrachter unterschiedlich hell erscheinen. Dies kann bei gekrümmten Projektionsflächen auftreten oder bei Projektionsanordnungen mit mindestens zwei Projektoren, deren Bilder auf der Projektionsfläche zu einem größeren Gesamtbild zusammengesetzt werden. In diesem Fall werden die Bilder der einzelnen Projektoren häufig verzerrt, um den Inhalt des jeweiligen Bildes an den tatsächlich vom jeweiligen Projektor ausgeleuchtete Ausschnitt der Projektionsfläche, die in der Regel nicht mehr rechtwinklig ist, anzupassen (sogenanntes Warping).

Beim Shading wird der Bildinhalt an Orten von Pixeln, die auf der Projektionsfläche klein projiziert werden, abgedunkelt (unter Beibehaltung der Farbe), während der Bildinhalt an Orten von Pixeln, die auf der Projektionsfläche groß projiziert werden, nicht oder nur wenig abgedunkelt wird. Das Shading kann über eine (digitale) Maske realisiert werden, die jedem Pixel des jeweiligen Projektors eine (farbneutrale) Abschwächung zuordnet. Somit kann das Bild eines einzelnen Projektors eine homogene Helligkeit über den projizierten Ausschnitt aufweisen.

Bei Projektionsanordnungen mit mindestens zwei Projektoren können die Bildfelder der verschiedenen Projektoren ungleich hell sein. Um die Helligkeiten anzupassen, können den einzelnen Projektoren Helligkeitskorrekturen zugeordnet werden, um die entsprechenden Bilder als Ganzes zu dimmen (nicht ortsaufgelöst). Jeder RGB-Wert kann dazu mit einem Wert zwischen 0 und 1 multipliziert werden; dieser Wert ist pro Projektor fest und kann zwischen verschiedenen Projektoren variieren.

Typischerweise überlappen Bildbereiche von einzelnen Projektoren. Würden die Projektoren in diesen Überlappungsbereichen mit voller Helligkeit betrieben, so würde der Bildinhalt dort als zu hell erscheinen. Daher erfolgt innerhalb der Überlappungsbereiche eine Abdunkelung der Teilbilder, die von den einzelnen Projektoren beigesteuert werden. Dies wird Blending genannt. Das Blending wird für jeden Projektor in der Regel über eine digitale Blendmaske realisiert. Diese Maske weist jedem Pixel des Projektors einen Wert zu, welcher Anteil der Helligkeit (bei Beibehaltung der Farbe) dargestellt werden soll.

Die Modulatoren 3, 5 werden, wie bereits beschrieben, mit einer Bit-Tiefe von 8 Bit angesteuert (eine Ansteuerung mit 10 Bit ist auch schon möglich).

Sollen Helligkeitswerte für dunkle Bildinhalte (z.B. mit Werten kleiner als 5 in 8-Bit) aufgrund der beschriebenen Schwierigkeiten nur um wenige Prozent geändert werden (z.B. 5%), so ist dies sowohl in 8-Bit als auch in 10-Bit nicht abbildbar, wie am nachfolgenden Beispiel deutlich wird.

Ein Grauwert 5 in einem 8-Bit-System entspricht bei einem Gamma von 2.2 gerade 0.0175% der maximalen Helligkeit bei Grauwert 255. Eine Abschwächung um 5% entspricht mit einer Helligkeit von 0.0166% einer Graustufe 4.88 und bleibt somit sowohl in einem 8-Bit-System als auch in einem 10-Bit-System beim Wert 5 als Graustufe. Die Abschwächung ist daher nicht darstellbar und somit nicht wirksam.

Je höher der Grauwert und somit die Helligkeit eines Pixels ist, um so geringer ist dieser negative Effekt wahrnehmbar. Aber gerade bei geringen Helligkeitswerten führt dieser Effekt zu deutlich sichtbaren Artefakten und ist für einen Betrachter störend.

Im Überlappungsbereich bzw. Blendbereich der Bildfelder von zwei Projektoren werden dann Flächen zu hell oder zu dunkel (oder ggf. sogar farblich verändert, wenn die Rundungsfehler für die einzelnen Werte eines RGB-Tripels unterschiedlich ausfallen) dargestellt. Dies kann insbesondere in bewegten Szenen irritierend sein, da die Bewegungen der Szene von einem ortsfesten "Muster" in den Blendbereichen überlagert werden. Insbesondere in der Flugsimulation mit schnellen Rollbewegungen ist dies kritisch und führt dazu, dass der Betrachter die simulierte Situation nicht so wie in der Realität wahrnimmt.

Handelt es sich bei dem Projektor um ein System, bei dem der einzelne Modulator einen Kontrast von etwa 1000:1 liefert, so können Werte bis Graustufe 11 (in 8-Bit) geboostet werden, wie ausführlich oben beschrieben ist. Somit lassen sich die Helligkeiten bis hinab zu Graustufe 0 nicht in 11 Abstufungen (wie in einem 8-Bit-System) oder in 44 Abstufungen (wie in einem 10-Bit-System), sondern vielmehr in 256 Abstufungen (wenn der Modulator 3, 5 in 8-Bit angesteuert werden kann) oder in 1024 Abstufungen (10-Bit-Ansteuerung) unterteilen. Das bedeutet, dass die Steuereinheit 7 die beiden Modulatoren 3, 5 zwar lediglich mit 8-Bit oder 10-Bit ansteuern kann, dass aber die darstellbaren dunklen Helligkeiten um ein Vielfaches feiner abgestuft werden können. Somit ist die Steuereinheit 7 in der Lage, in der Realität für die unteren Graustufen eine höhere Bit-Tiefe zu realisieren. Wird also in der Steuereinheit 7 zusätzlich die beschriebene Helligkeitsanpassung übernommen, so kann diese ohne (oder mit deutlich geringerem Verlust durch Diskretisierung) an die Modulatoren 3, 5 übertragen werden und erzeugen somit feinere Helligkeitsabstufungen, als es mit bekannten Lösungen möglich wäre.

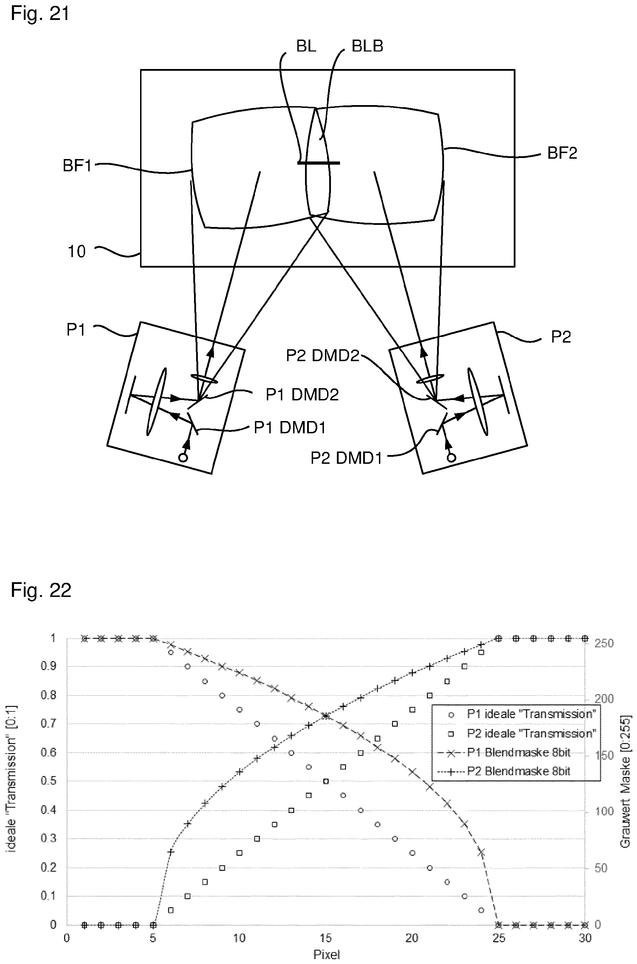

Betrachtet wird der Blendbereich BLB zwischen zwei Bildfeldern BF1 und BF2 der Projektoren P1 und P2, wie dies schematisch in Fig. 21 dargestellt ist. Jeder der Projektoren P1, P2 ist dabei so aufgebaut, wie z.B. in Fig. 1 gezeigt ist. Die beiden Bildfelder BF1 und BF2 der Projektoren P1, P2 überlappen sich auf der Projektionsfläche 10 im Blendbereich BB. Nachfolgend wird der Helligkeitsverlauf entlang der eingezeichneten Schnittlinie BL betrachtet.

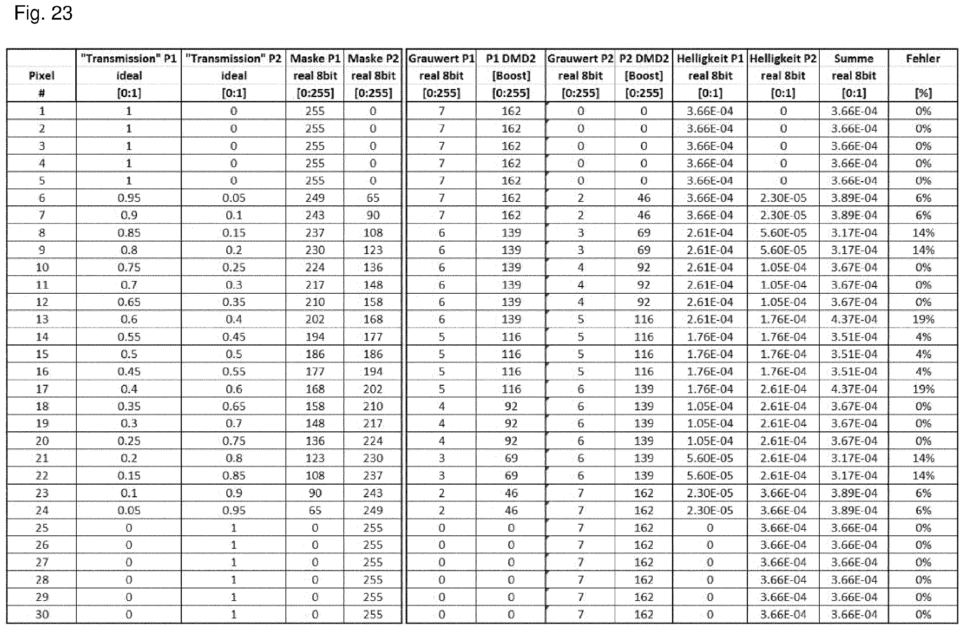

Der Blendbereich BLB erstreckt sich entlang der Schnittlinie BL über 20 Pixel, so dass jeder Projektor P1, P2 sein dargestelltes Bild über diese 20 Pixel von voller Helligkeit auf Schwarz herunter dimmen muss. Fig. 22 zeigt für die exemplarische Schnittlinie BL (Blendkante) einen idealen Helligkeitsabfall über die projizierten Pixel der zwei Projektoren P1 bzw. P2 (Kreise = ideale Transmission für den Projektor P1 bzw. Quadrate = ideale Transmission für den Projektor P2). Dieser räumliche Verlauf einer "Transmission" der Blendmaske ist von einer digitalen Blendmaske nachzubilden. Es werden Projektoren P1, P2 mit einem Gamma von 2.2 (y = 2,2) angenommen. Die Blendmaske wird in 8-Bit kodiert. Dabei entspricht ein Wert von 255 einer "Transmission" von 100%, d.h. die Helligkeit der Pixel bleibt unverändert. Für Werte der Blendmaske von 0 beträgt die "Transmission" 0%, so dass die Helligkeit des entsprechenden Pixels auf Schwarz gesetzt wird. Entsprechend einem Gamma von 2.2 beträgt die "Transmission" für einen Masken-Wert von 186 gerade 50%.Die entsprechenden Werte der idealen Transmission für die beiden Projektoren sind auch in Fig. 23 in den Spalten " "Transmission" P1 ideal" und " "Transmission" P2 ideal" für die Pixel 1-30 angegeben. Ferner sind in den Spalten "Maske P1 real 8bit" und "Maske P2 real 8bit" die Maskenwerte für die Pixel 1 -30 des Blendbereiches BLB dargestellt, wobei die Spalte "Maske P1 real 8bit" die Maske für den Projektor P1 und die Spalte "Maske P2 real 8bit" die Maske für den Projektor P2 ist.

Möchte man z.B. einen Grauwert von 7 (in 8-Bit) in dem Gesamtbild der Projektionsanordnungen mit mindestens zwei Projektoren (bzw. der Multiprojektor-Anordnung) darstellen, so muss der Grauwert im Blendbereich BLB der Projektoren P1 und P2 mit den digitalen Blendmasken verrechnet werden.

Bei bekannten Lösungen werden diese verrechneten Bilddaten an die Projektor von bekannten Multiprojektor-Anordnungen übertragen - hier im Beispiel in 8-Bit (siehe Fig. 23). Um überhaupt so dunkle Bildinhalte entsprechend einer idealen Gamma-Kurve darstellen zu können, müssen die Projektoren so ausgebildet sein, dass sie eine Doppelmodulation mit Boosten aufweisen.

In unserem Beispiel beträgt der Kontrast eines einzelnen Modulators 1000:1. Für die Darstellung von Graustufe 7 im Blendbereich BLB werden in beiden Projektoren P1, P2 jeweils einer der beiden Modulatoren 3, 5 auf Schwarz gestellt (im Beispiel ist dies jeweils der erste Modulator 3, der in Fig. 21 mit "P1 DMD1" bzw. "P2 DMD1" bezeichnet ist). Der jeweilige zweite Modulator 5 (hier "P1 DMD2" bzw. "P2 DMD2") moduliert das "Restlicht". Die entsprechenden Eingangsgrauwerte sind in Fig. 23 für die Pixel 1-30 in der Spalte "Grauwerte P1 real 8bit" für den Modulator "P1 DMD2" und in der Spalte "Grauwerte P2 real 8bit" für den Modulator "P2 DMD2" angegeben. Die Grauwerte auf dem jeweiligen zweiten Modulator 5 ("P1 DMD2" und "P2 DMD2") sind jeweils etwa einen Faktor 23 höher als die Eingangswerte (bzw. Eingangsgrauwerte) in den entsprechenden Projektor P1, P2 (der "Boost-Faktor" beträgt etwa 23), wie auch in Fig. 23 aus der Spalte "P1 DMD2 [Boost]" für den zweiten Modulator "P1 DMD2" des ersten Projektors P1 und aus der Spalte "P2 DMD2 [Boost]" für den zweiten Modulator "P2 DMD2" des zweiten Projektors P1 entnommen werden kann.

Die resultierenden Helligkeiten für die beiden Projektoren sind in Fig. 23 in den Spalten "Helligkeit P1 real 8bit" und "Helligkeit P2 real 8bit" gezeigt. Die Summe der Helligkeiten der beiden Projektoren P1, P2 ist in der Spalte "Summe real 8bit" in Fig. 23 dargestellt.

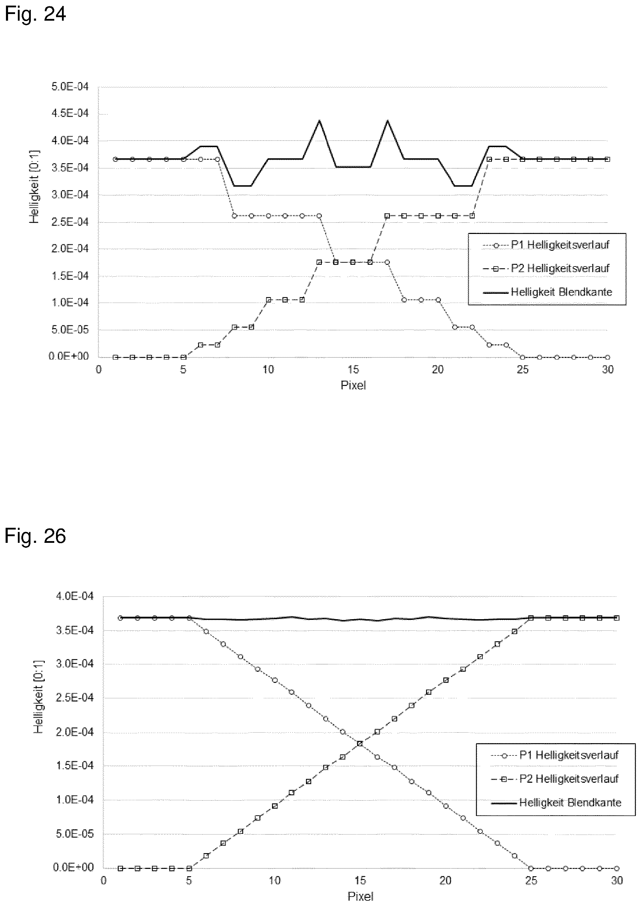

In Fig. 24 zeigt die durchgezogene Linie den resultierenden Helligkeitsverlauf über die Blendkante BL, der sich aus dem Helligkeitsverlauf des ersten Projektors P1 (Kreise) und dem Helligkeitsverlauf des zweiten Projektors P2 (Quadrate) ergibt.

Das Beispiel zeigt, dass unerwünschte Variationen der Helligkeit über die Blendkante BL (zwischen -14% und +19%) deutlich sichtbar sind und somit den Ansprüchen eines "unsichtbaren" Überblendens zwischen zwei Projektoren nicht gerecht werden. Dieser Fehler in der dargestellten Helligkeit ist ferner in der Spalte "Fehler" in Fig. 23 für die Pixel 1-30 angegeben.

Nach dem Stand der Technik ist es also selbst mit Boost-fähigen Projektoren nicht möglich, einen "unsichtbaren" Blendübergang zweier Projektoren für einen Grauwert von 7 zu realisieren.

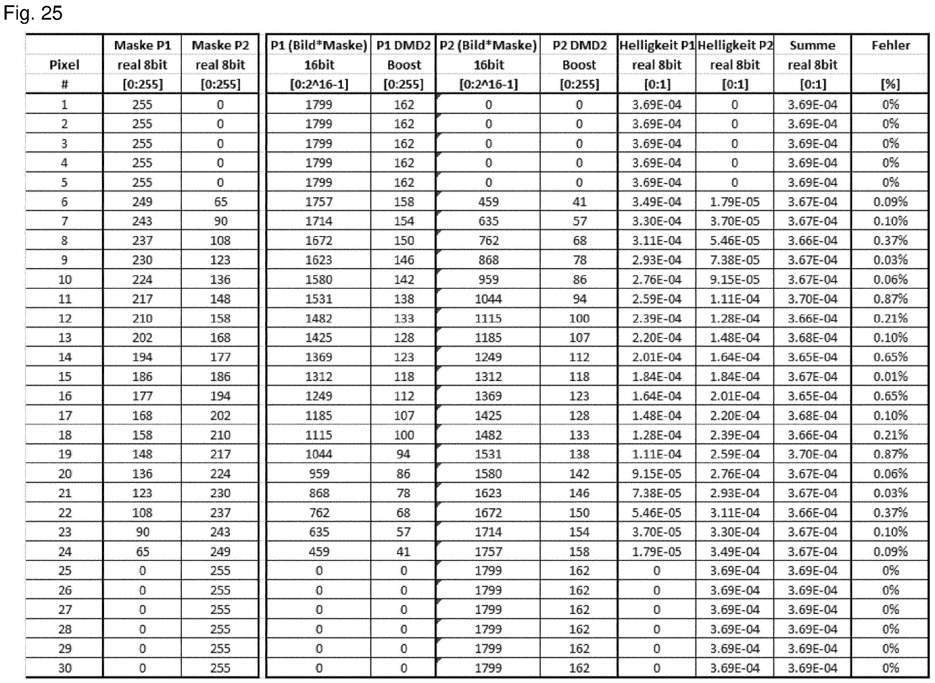

Werden erfindungsgemäß die Verrechnung der Blendmaske und die Berechnung des Boostens in einer Recheneinheit (z.B. in der Steuereinheit 7) zusammengeführt und erst von dort Bilddaten an die beiden Bildgeber (bzw. Modulatoren) 3, 5 eines Projektors P1, P2 transferiert, so lässt sich eine in der Recheneinheit verwendete höhere Bit-Tiefe dafür nutzen, die dunklen Graustufen mit höherer Genauigkeit als 8-Bit (oder 10-Bit) nachzubilden. Im Beispiel wird Graustufe 7 (in 8-Bit = erste Auflösung mit NN Stufen, wobei NN=256) wiederum mit einer Blendmaske (in 8-Bit) verrechnet. Jedem Pixel des Projektors P1, P2 kann dann ein Wert in einer Genauigkeit der internen Bit-Tiefe (im Beispiel 16-Bit = zweite Auflösung mit MM Stufen, wobei MM=1800) zugeordnet werden, wie dies in Fig. 25 für die Pixel 1-30 des Blendbereiches BLB dargestellt ist.

Die Spalten "Maske P1 real 8bit" und "Maske P2 real 8bit" beinhalten dieselben Werte für die Pixel 1-30 des Blendbereiches BLB wie in Fig. 23. In den Spalten "P1 (Bild*Maske) 16bit" und "P2 (Bild*Maske) 16bit" sind die verrechneten Werte mit 16-Bit Auflösung angegeben.

Da es sich bei dem darzustellenden Grauwert 7 um einen "boostbaren" Grauwert handelt, wird auch hier wieder für jeden Projektor P1, P2 einer der beiden Modulatoren 3, 5 auf Schwarz gestellt. Das Signal der jeweiligen zweiten Modulatoren 5, 3 wird wieder in 8-Bit ausgegeben (jedoch wieder mit einem Boost-Faktor von etwa 23 vergrößert). Im Gegensatz zum Stand der Technik wird somit nicht ein 8-Bit Grauwert zwischen 0 und 7 (gemäß den Bilddaten BD) einem Grauwerte von 0 bis 255 (des zweiten Modulators 5) zugewiesen, sondern vielmehr ein 16-Bit Grauwert (aus den Spalten "P1 (Bild*Maske) 16bit" und "P2 (Bild*Maske) 16bit") zwischen 0 und 1799 (Graustufe 7 in 16-Bit-Darstellung) einem Grauwerte 0 bis 255 (des zweiten Modulators 5) zugewiesen. Die so bestimmten Grauwerte sind in den Spalten "P1 DMD2 Boost" und "P2 DMD2 Boost" für die Pixel 1-30 des Blendbereiches BLB angegeben.

Es werden also nicht mehr 8 Werte auf 256 sondern vielmehr 1800 Werte auf 256 abgebildet. Auf diese Weise ist eine bessere Reproduktion der tatsächlich erforderlichen Helligkeiten möglich. Das Ergebnis eines solchen Blendübergangs ist in Fig. 26 dargestellt. Dabei zeigt die durchgezogene Linie den resultierenden Helligkeitsverlauf über die Blendkante, der sich aus den Helligkeitsverläufen des ersten Projektors (Kreise in Fig. 26) und des zweiten Projektors P2 (Quadrate in Fig. 26) ergibt.

Die resultierenden Helligkeiten für die beiden Projektoren (Spalten "Helligkeit P1 real 8bit" und "Helligkeit P2 real 8bit") sowie die Summe der Helligkeiten der beiden Projektoren P1, P2 (Spalte "Summe real 8bit") sind auch in Fig. 25 dargestellt.

Der maximale Fehler der Helligkeiten für einen Blendbereich BLB mit den erfindungsgemäßen Projektoren P1, P2 ist kleiner als 1%, wie insbesondere der Spalte "Fehler" in Fig. 25 zu entnehmen ist.

Für einen Blendbereich, an dem mehr als zwei Projektoren bei bekannten Multiprojektor-Anordnungen beteiligt sind, ist die Störung im Blendbereich für dunkle Szenen noch deutlich dramatischer und der Vorteil durch die erfindungsgemäße Lösung wird noch deutlicher.

Die Ausführungen wurden für Projektoren P1, P2 dargestellt, die 8-Bit aufnehmen und verarbeiten können. Die Effekte bleiben jedoch auch für 10-Bit-Systeme sichtbar (sowohl die beschriebenen Artefakte als auch erzielbaren Verbesserungen).

Es ist ferner möglich, die Verrechnungen direkt in einer Recheneinheit (z.B. in einem ASIC) eines der beiden Modulatoren 3, 5 durchzuführen - beispielsweise in dem, der boostet. In dem Fall muss die Recheneinheit lediglich noch einen Ausgang aufweisen, der dem anderen Modulator die entsprechenden Bildinformationen (z.B. wieder in 8-Bit oder 10-Bit mit ganz normalen Videodatenleitungen) zu Verfügung stellt. Vorteilhaft wäre hier, dass direkt die hohe Bit-Tiefe der Recheneinheit genutzt werden kann (die typischerweise bei 16-Bit oder mehr liegt).

Bevorzugt wird die Entscheidung, ob ein Pixel geboostet wird oder nicht, anhand des in den Spalten "P1 (Bild*Maske) 16bit" und "P2 (Bild*Maske) 16bit" angegebenen verrechneten Wertes mit 16-Bit Auflösung getroffen. Dieser Wert wird mit einem entsprechenden Boost-Schwellwert in 16-Bit-Auflösung (der dem ersten Schwellwert nach der bisherigen Beschreibung entspricht, nur mit höherer Auflösung) verglichen. Wenn der Wert größer als Null und kleiner als der Boost-Schwellwert (der z.B. 2816 in 16-Bit-Auflösung sein kann) ist, wird der Wert geboostet. Er wird also in einen 8-Bit-Wert umgesetzt bzw. gemappt, der höher ist als der 8-Bit-Wert, der sich ergibt, wenn die Helligkeitsverringerung der entsprechenden Maske P1, P2 in 8-Bit berechnet wird. Wenn der Wert größer als der Boost-Schwellwert ist, wird der Wert nicht geboostet und ohne zusätzliche Erhöhung in den entsprechenden 8-Bit-Wert umgesetzt bzw. gemappt.

**Als Überlappungsbereich** können gleiche Flächenanteile der Projektionsfläche 10 bezeichnet werden, die von mehr als einem Projektor beleuchtet werden. Als **Blendbereich** kann der Bereich bezeichnet werden, in dem ein Projektor über die Blendmaske von 100% auf 0% gedimmt wird. Häufig sind beide Bereiche identisch (muss aber nicht sein, wenn aufgrund sehr schräger Projektion des projizierte Bilds stark verzerrt ist). Als Blendbereich werden z.B. 100-150 Pixel entlang der Blendkante BL angenommen. Man wird allerdings häufig den Kompromiss aus erzielbarere Gesamthelligkeit des Systems (kleiner Blendbereich) und möglichst "glattem" Blendbereich (viele Pixel) wählen. Daher kann der Blendbereich entlang der Blendkante BL 10-200 Pixel, 20-180 Pixel oder 30-150 Pixel betragen.

Nachfolgend wird das erfindungsgemäße Boosten mit der höheren Auflösung für eine möglichst farbtreue Darstellung auch für geringe Helligkeiten beschrieben. Sofern dabei ein Boosten beschrieben wird, kann dies in der bereits beschriebenen Art und Weise mit der der höheren Auflösung durchgeführt werden, wenn eine Helligkeitsänderung durchgeführt werden soll, um z.B. ein Shading und/oder ein Blending zu realisieren. Ein solches Shading und/oder Blending oder eine sonstige zusätzliche Helligkeitsänderung wird nachfolgend jedoch nicht nochmal detailliert beschrieben, da die gleichen Nachteile wie bereits beschrieben auftreten und die gleichen Vorteile, wie bereits beschrieben, erreicht werden.

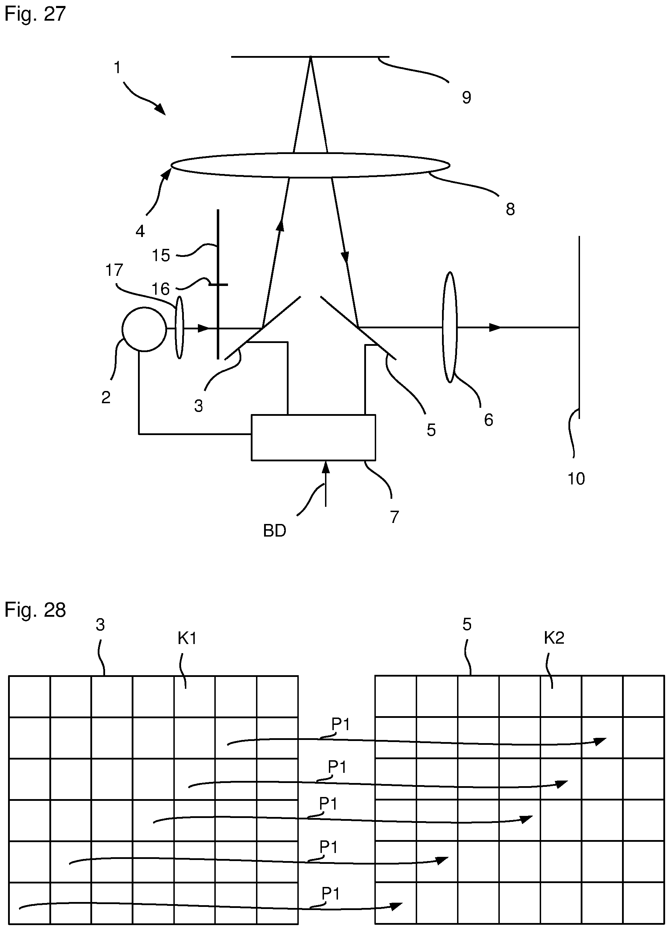

Bei der in Fig. 27 gezeigten Ausführungsform umfasst der erfindungsgemäße Projektor 1 zum Projizieren von Bildern für jeweils eine vorbestimmte Einzelbilddauer eine Lichtquelle 2, eine Beleuchtungsoptik 17, einen Beleuchtungsmodulator 3, eine Abbildungsoptik 4, einen Bildmodulator 5, eine Projektionsoptik 6 sowie eine Steuereinheit 7.

Die beiden Modulatoren 3, 5 sind jeweils als Kippspiegelmatrix (nachfolgend auch DMD genannt) ausgebildet, die mehrere in Zeilen und Spalten angeordnete Kippspiegel aufweisen, wobei die Kippspiegel voneinander unabhängig in eine erste und eine zweite Kippstellung gebracht werden können.

Beim beschriebenen Ausführungsbeispiel weist der Beleuchtungsmodulator 3 mehrere Kippspiegel K1 (nachfolgend auch Beleuchtungspixel genannt) und weist der Bildmodulator 5 mehrere Kippspiegel K2 (nachfolgend auch Bildpixel genannt) auf. In Fig. 28 sind jeweils schematisch 6 × 7 Kippspiegel K1, K2 dargestellt ist. Die Kippspiegel K1 und K2 weisen jeweils gleichen Abmessungen auf, wobei die geringe Anzahl der Kippspiegel K1 und K2 lediglich zur Vereinfachung der Darstellung angenommen wird. Natürlich können die Modulatoren 3, 5 sehr viel mehr Kippspiegel K1, K2 als dargestellt enthalten.

Die Abbildungsoptik 4 ist als 1:1-Abbildungsoptik mit einer Linse 8 und einem Spiegel 9 ausgebildet und bildet jeden Kippspiegel K1 des Beleuchtungsmodulators 3 genau auf einen Kippspiegel K2 des Bildmodulators 5 ab, wie durch die Pfeile P1 angedeutet ist. Somit ist jedem Beleuchtungspixel K1 des Beleuchtungsmodulators 3 aufgrund der Abbildung mittels der Abbildungsoptik 4 genau ein Bildpixel K2 des Bildmodulators 5 zugeordnet. Man kann auch sagen, dass jedem Bildpixel K2 genau ein Beleuchtungspixel K1 zugeordnet ist.

Die beiden Modulatoren 3 und 5 werden von der Steuereinheit 7 basierend auf zugeführten Bilddaten BD für jedes der nacheinander zu projizierenden Bilder so angesteuert, dass der Beleuchtungsmodulator 3, der mit dem Licht (z. B. weißem Licht) der Lichtquelle 2 beaufschlagt wird, eine flächig modulierte Lichtquelle für den Bildmodulator 5 ist, mit dem das zu projizierende Bild erzeugt bzw. moduliert wird, das dann mittels der Projektionsoptik 6 auf eine Projektionsfläche 10 projiziert wird. Um die flächig modulierte Lichtquelle bereitzustellen, ist der Projektor 1 so ausgebildet, dass das Licht, das von den sich in der ersten Kippstellung befindenden Kippspiegeln K1 des Beleuchtungsmodulator 3 reflektiert wird, auf den zugeordneten Kippspiegel K2 des Bildmodulators 5 abgebildet wird. Das von den in der zweiten Kippstellung stehenden Kippspiegeln K1 des Beleuchtungsmodulators 3 reflektierte Licht wird von einer (nicht gezeigten) Strahlenfalle aufgenommen und wird somit nicht auf den Bildmodulator 5 abgebildet. Die Bilderzeugung bzw. -modulation erfolgt dann mittels der Kippstellung der Bildpixel (= Kippspiegel K2 des Bildmodulators 5), da nur das von den in der ersten Kippstellung stehenden Bildpixeln K2 reflektierte Licht über die Projektionsoptik 6 auf die Projektionsfläche 10 projiziert wird. Das von den sich in der zweiten Kippstellung befindenden Bildpixeln K2 reflektierte Licht wird nicht auf die Projektionsfläche 10 projiziert, sondern z. B. in einer (nicht gezeigten) Strahlenfalle aufgenommen. Durch die Kippstellung der Bildpixel K2 wird somit das zu projizierende Bild moduliert bzw. erzeugt, das mittels der Projektionsoptik 6 projiziert wird. Die erste Kippstellung kann auch als Ein-Zustand oder On-Zustand bezeichnet werden und die zweite Kippstellung kann auch als Aus-Zustand oder Off-Zustand bezeichnet werden.

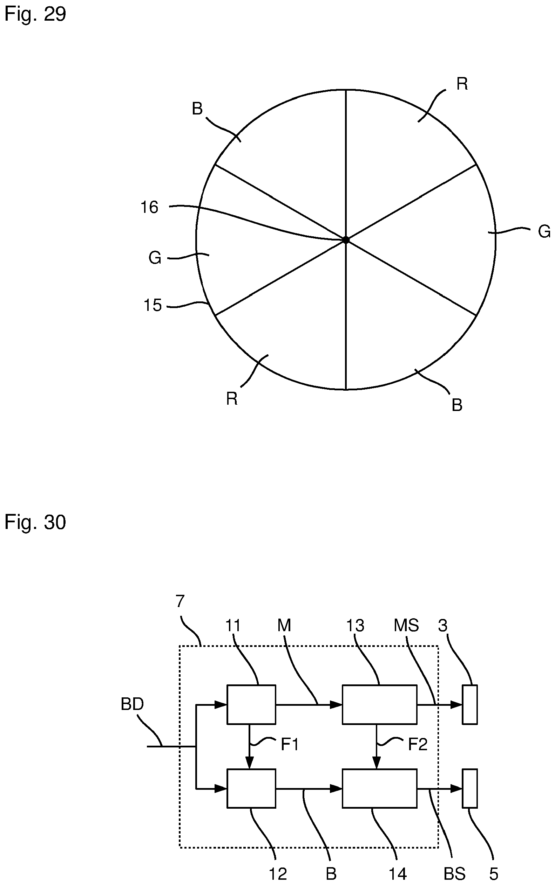

Für eine farbige Bilderzeugung ist ein Farbrad 15 im Strahlengang zwischen der Lichtquelle 2 und dem ersten Modulator 3 angeordnet sein. Die Farben werden zeitsequentiell über das Farbrad 15 erzeugt, das mit seiner Drehachse 16 schematisch dargestellt ist. In Fig. 29 ist eine Draufsicht des Farbrads 15 gezeigt, das sechs gleich große Farbsegmente (die sich somit über einen Winkelbereich von 60° erstrecken) aufweist. Die Farbsegmente sind mit den Großbuchstaben R, G und B bezeichnet. Dies soll verdeutlichen, dass das entsprechende Farbsegment nur die rote Farbe (bei R), die grüne Farbe (bei G) und die blaue Farbe (bei B) durchlässt, so dass von dem weißen Licht der Lichtquelle 2 zeitsequentiell rotes, grünes oder blaues Licht auf den Beleuchtungsmodulator 3 fällt. Somit können mittels der beiden Modulatoren 3, 5 zeitlich nacheinander rote, grüne und blaue Teilbilder projiziert werden. Diese werden zeitlich so schnell aufeinanderfolgend erzeugt, dass für einen Betrachter nur die Überlagerung und somit ein Farbbild wahrnehmbar ist. Dies kann beispielsweise bei einer Bildrate bzw. Framerate von f = 60 Hz dadurch erreicht werden, dass das Farbrad 15 mit einer Frequenz von 120 Hz dreht. Dadurch gibt es innerhalb eines Frames (Einzelbildes) vier Rot-Durchläufe, vier Grün-Durchläufe und vier Blau-Durchläufe. Für jeden Farbübergang werden 15° abgezogen, der sogenannte Spoke. Während dieser Zeitdauer werden beide Modulatoren 3, 5 dunkel geschaltet, um eine undefinierte Farbprojektion zu verhindern, da gerade eine Farbsegmentgrenze des Farbrades 15 das Beleuchtungslicht kreuzt. Somit verbleiben für eine Farbmodulation pro Farbe (rot, grün und blau) vier Zeit-Segmente mit einer Farbrad-Segmentgröße von 45°.

Die Bilddaten BD liegen bereits in digitaler Form mit der geeigneten Pixelauflösung für den Bildmodulator 5 vor und werden in der Steuereinheit 7, wie in Fig. 30 schematisch gezeigt ist, gleichzeitig an einen ersten und zweiten Mustergenerator 11 und 12 angelegt. Der erste Mustergenerator 11 erzeugt anhand der zugeführten Bilddaten BD Musterdaten M, die an eine erste Ansteuerelektronik 13 angelegt werden. Die erste Ansteuerelektronik 13 erzeugt basierend auf den Musterdaten M pulsweitenmodulierte Beleuchtungssteuerdaten MS und legt diese an den Beleuchtungsmodulator 3 an.

Der zweite Mustergenerator 12 erzeugt anhand der zugeführten Bilddaten BD Einzelbilddaten B, die an eine zweite Ansteuerelektronik 14 für den Bildmodulator 5 angelegt werden. Die zweite Ansteuerelektronik 14 erzeugt pulsweitenmodulierte Bildsteuerdaten BS und legt diese an den Bildmodulator 5 an.

Gemäß den Beleuchtungs- und Bildsteuerdaten MS, BS werden während der Einzelbilddauer T zur Erzeugung des Bildes die Beleuchtungs- und Bildpixel K1, K2 so in die erste und zweite Kippstellung gebracht, dass das gewünschte Bild erzeugt und projiziert wird.

Durch das Hintereinanderschalten der beiden Modulatoren 3, 5 sowie die nachfolgend beschriebenen Erzeugung der Beleuchtungs- und Bildsteuerdaten MS, BS wird beim Betrieb des Projektors 1 eine Verbesserung bei der möglichst korrekten Farbdarstellung bei geringen Helligkeitswerten erreicht.

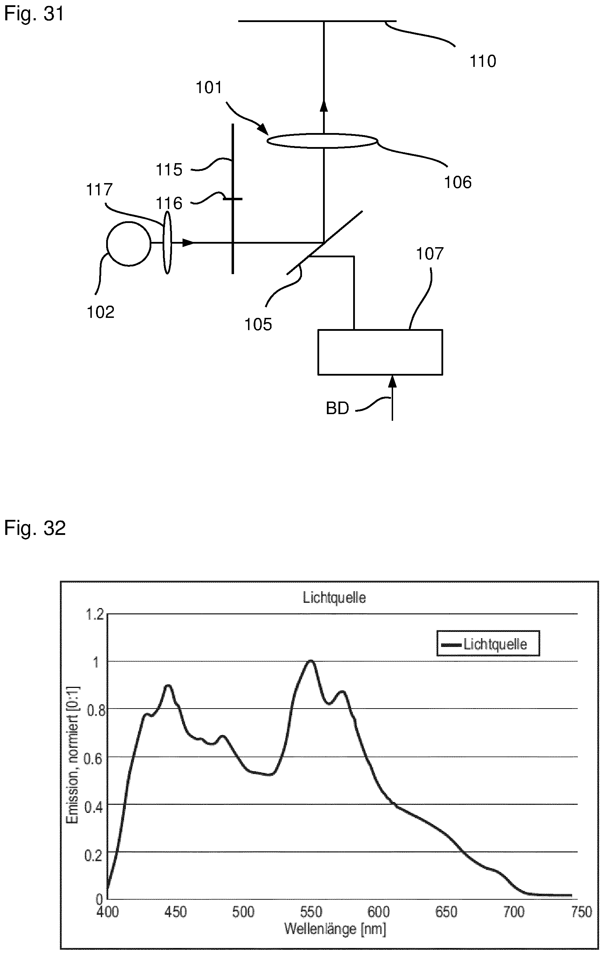

### Projektor 101 mit Einfachmodulation gemäß Fig. 31

Zum besseren Verständnis des erfindungsgemäßen Projektors 1 wird nachfolgend ein Projektor 101 mit Einfachmodulation, der nur einen Modulator 105, der als Bildmodulator eingesetzt wird, aufweist, beschrieben (Fig. 31). Dieser Projektor 101 mit Einfachmodulation (wird nachfolgend auch als 1 x DMD SdT bezeichnet) weist eine Lichtquelle 102, eine Beleuchtungsoptik 117 und eine Projektionsoptik 106 auf, wobei der Modulator 105, der als Kippspiegelmatrix ausgebildet sein kann, mit Licht der Lichtquelle 102 beleuchtet wird, das durch ein Farbrad 115 gelaufen ist. Das Farbrad 115 kann wie das Farbrad 15 ausgebildet sein, so dass der Modulator 105 zeitsequentiell mit rotem, grünem und blauem Licht beleuchtet wird. Der Modulator 105 moduliert das rote, grüne und blaue Licht zeitlich nacheinander mittels der unabhängig voneinander ansteuerbaren Kippspiegel des Modulators 105, um Farbteilbilder zu erzeugen, die mittels der Projektionsoptik 106 auf eine Projektionsfläche 110 projiziert werden und von einem Betrachter nur zusammen als ein Farbbild wahrnehmbar sind. Die Modulation wird durch eine Steuereinheit 107 basierend auf zugeführten Bilddaten BD so gesteuert, dass für jedes Pixel eine gewünschte Helligkeit und Farbe erzielt werden. Somit wird das Licht von der Lichtquelle 102 zur Projektionsfläche 110 nur einmal über den Modulator 105 geleitet.

Das Spektrum *S*(*λ*) nach einer Einfachmodulation lässt sich wie folgt beschreiben: $\begin{matrix}{S}_{1} \left(λ, {g}_{1}\right) = {\int }_{Ω} d Ω {\int }_{Frame} d t {\sum }_{Farben c ∈ \left(r, g, b\right)} I \left(Ω, t, λ\right) ⋅ {T}_{B} \left(Ω, λ\right) ⋅ {T}_{C} \left(Ω, c, λ\right) ⋅ {D}_{1} \left(Ω, t, c, λ, {g}_{1}\right) ⋅ \\ {T}_{P} \left(Ω, λ\right)\end{matrix}$

Mit
- *c*: Farbe; beispielsweise Rot, Grün und Blau (*r,g,b*)
- *g₁*: Grauwert, der am Bildgeber bzw. Modulator 105 dargestellt wird, kann Zahlentripel sein für r, g, b
- *D₁* (*Ω,t,c, λ,g₁*): Transmission bzw. Reflexion des Bildgebers 105
- *I*(*Ω,t, λ*): Intensität der Lichtquelle 102
- *t*: Zeitvariable
- *T_{B}*(*Ω,λ*): Transmission der Beleuchtungsoptik 117
- *T_{C}*(*Ω,c,λ*): Transmission aller Farbteiler und -vereiniger (hier Farbrad 115)
- *T_{P}*(*Ω,λ*): Transmission der Projektionsoptik 116
- *λ*: Wellenlänge; beispielsweise 400 nm bis 700 nm
- Ω: Raumwinkel

Typischerweise kann man die Winkelabhängigkeit der einzelnen optischen Elemente dadurch eliminieren, dass man einen Mittelwert über den Raumwinkel Ω in den Rechnungen verwendet. Weiterhin kann man die Transmissionen der abbildenden Optiken (Beleuchtung, Projektion) zu einer einzigen Funktion zusammenfassen: *Tₒ*(*λ*) (bereits gemittelt über die Raumwinkel). Damit ergibt sich: ${S}_{1} \left(λ, {g}_{1}\right) = {\int }_{Frame} d t {\sum }_{c ∈ \left(r, g, b\right)} I \left(t, λ\right) ⋅ {T}_{O} \left(λ\right) ⋅ {T}_{C} \left(c, λ\right) ⋅ {D}_{1} \left(t, c, λ, {g}_{1}\right)$

Um das dargestellte Spektrum eines Pixels in Farbe und Helligkeit zu überführen, verwendet man die Normspektralwertfunktionen x̅(*λ*), *y̅*(*λ*) und *z̅*(*λ*), wie sie z. B. in DIN EN ISO 11664-1 beschrieben sind. Diese multipliziert man jeweils mit den Spektren S(λ,g₁) und integriert über die Wellenlängen λ, um die Farbwerte *X, Y* und *Z* zu bestimmen: $X \left({g}_{1}\right) = {\int }_{λ} dλ {S}_{1} \left(λ, {g}_{1}\right) ⋅ \overline{x} \left(λ\right)$ $Y \left({g}_{1}\right) = {\int }_{λ} dλ {S}_{1} \left(λ, {g}_{1}\right) ⋅ \overline{y} \left(λ\right)$ $Z \left({g}_{1}\right) = {\int }_{λ} dλ {S}_{1} \left(λ, {g}_{1}\right) ⋅ \overline{z} \left(λ\right)$

Häufig werden die Farbwerte in einem Vektor zusammengefasst: $\vec{X} \left({g}_{1}\right) = \left(\begin{matrix}X \left({g}_{1}\right) \\ Y \left({g}_{1}\right) \\ Z \left({g}_{1}\right)\end{matrix}\right)$

Der Farbort (x,y)(g₁) eines Pixels (in Abhängigkeit des Grauwertes g₁) ergibt sich dann als: $x \left({g}_{1}\right) = \frac{X \left({g}_{1}\right)}{X \left({g}_{1}\right) + Y \left({g}_{1}\right) + Z \left({g}_{1}\right)}$ $y \left({g}_{1}\right) = \frac{Y \left({g}_{1}\right)}{X \left({g}_{1}\right) + Y \left({g}_{1}\right) + z \left({g}_{1}\right)}$

Die Helligkeit des Pixels wird durch *Y*(*g₁*) beschrieben. Häufig werden Helligkeit und Farbort wiederum als Vektor beschrieben: $\vec{L} \left({g}_{1}\right) = \left(\begin{matrix}Y \left({g}_{1}\right) \\ x \left({g}_{1}\right) \\ y \left({g}_{1}\right)\end{matrix}\right)$

Die Spektren der einzelnen Komponenten des Projektors 101 gemäß Fig. 31 sind in den Figuren 32 bis 35 dargestellt. Dabei wurde angenommen, dass der DMD 105 im Weißen einen Kontrast von 1500:1 aufweist.

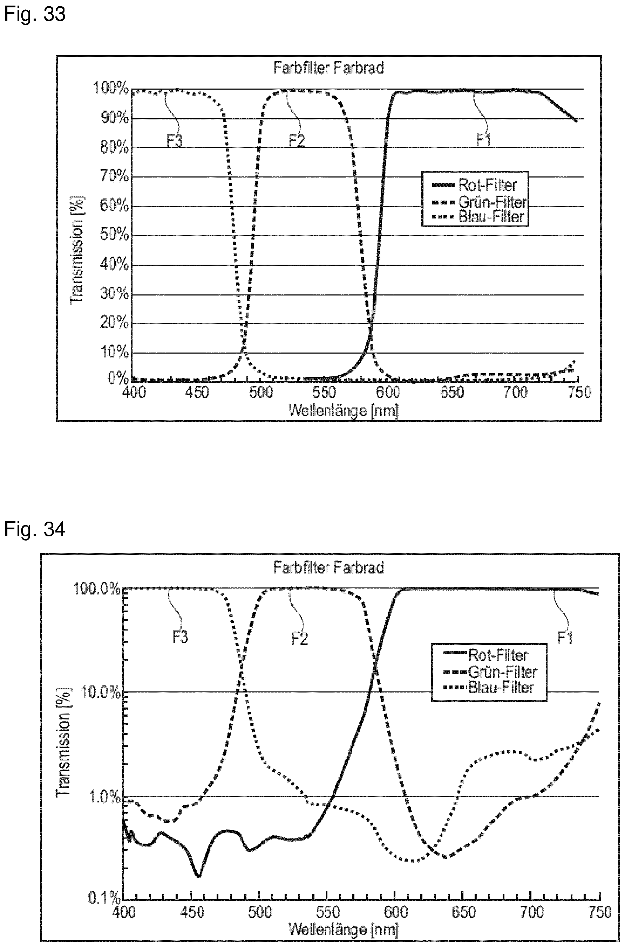

In Fig. 32 ist das auf 1 normierte Emissionsspektrum der Lichtquelle 102 gezeigt, wobei entlang der x-Achse die Wellenlänge in nm und entlang der y-Achse die Emission auf 1 normiert aufgetragen ist. In Fig. 33 und 34 sind jeweils die Transmissionsspektren des roten Farbradsegmentes (durchgezogene Linie F1), des grünen Farbradsegmentes (gestrichelte Linie F2) und des blauen Farbradsegmentes (gepunktete Linie F3) des Farbrades 15 sowie 115 gezeigt, wobei in Fig. 33 die Transmission entlang der y-Achse linear aufgetragen und in Fig. 34 die Transmission entlang der y-Achse logarithmisch aufgetragen ist. Entlang der x-Achse ist jeweils die Wellenlänge in nm aufgetragen.

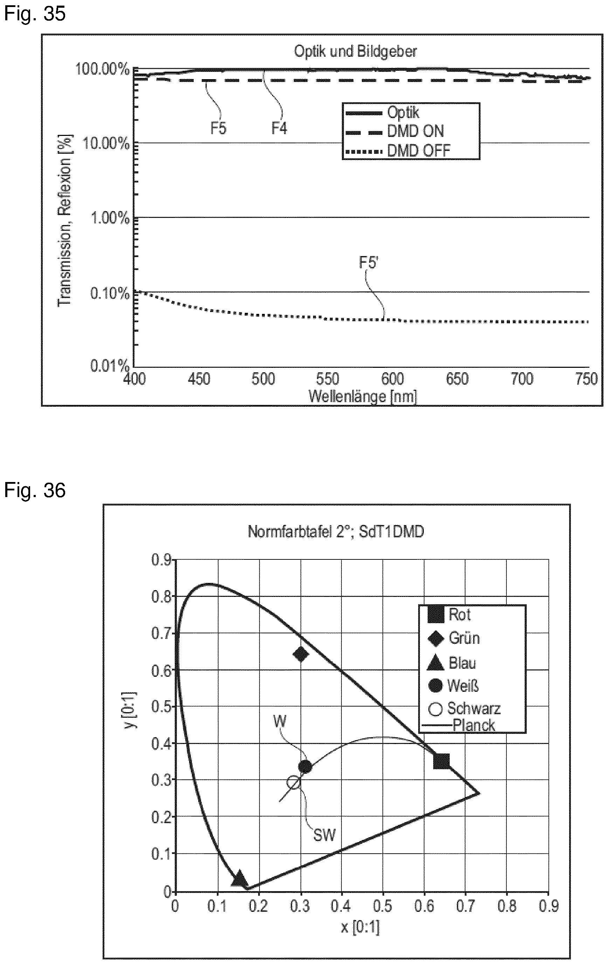

In Fig. 35 ist in einer logarithmischen Darstellung das Transmissionsspektrum der Projektionsoptik 106 als durchgezogene Linie F4 sowie das Reflexionsspektrum des Modulators 105 im On-Zustand als gestrichelte Linie F5 und im Off-Zustand als gepunktete Linie F5' entlang der y-Achse in Abhängigkeit der Wellenlänge in nm entlang der x-Achse aufgetragen.

Für ein solches System lässt sich das Spektrum in Abhängigkeit der Grauwerte *gᵣ, g_{g}* und *g_{b}* wie folgt bestimmen: ${S}_{1 DMD} \left(λ, {g}_{r}, {g}_{g}, {g}_{b}\right) = {\int }_{Frame} d t {\sum }_{Farben c ∈ \left(r, g, b\right)} I \left(λ\right) ⋅ {T}_{T} \left(c, λ\right) ⋅ {D}_{1} \left(t, λ, {g}_{r}, {g}_{g}, {g}_{b}\right) ⋅ {T}_{O} \left(λ\right)$

Dabei kann das Spektrum für *D*₁ dem für den ON-Zustand oder für den OFF-Zustand entsprechen, je nach den gewählten Grauwerten für die einzelnen Farben.

Mit Hilfe der oben aufgezeigten Formeln lässt sich für die einzelnen Farben das Spektrum bestimmen und daraus die Farborte. Der resultierende Farbraum des Projektors 101 mit Einfachmodulation ist in Fig. 36 in einer Normfarbtafel (für einen Betrachter, der auf ein Sichtfeld von 2° blickt) des CIE-Normvalenzsystems dargestellt, wobei der Farbraum des Projektors 101 alle Farborte in einem Dreieck mit den Eckpunkten Rot, Grün und Blau abdeckt. Zusätzlich ist in Fig. 36 noch die Kurve der Strahlung eines Schwärzen-Körpers (mit Planck bezeichnet) eingezeichnet. Nimmt man an, dass die Anteile des roten, grünen und blauen Segmentes 41 %, 29 % und 30 % betragen, so ergibt sich der eingezeichnete Weißpunkt W. Zusätzlich ist der Farbort SW eingetragen, der sich ergibt, wenn der Modulator 105 die ganze Zeit eines Frames auf Schwarz (OFF-Zustand) steht.

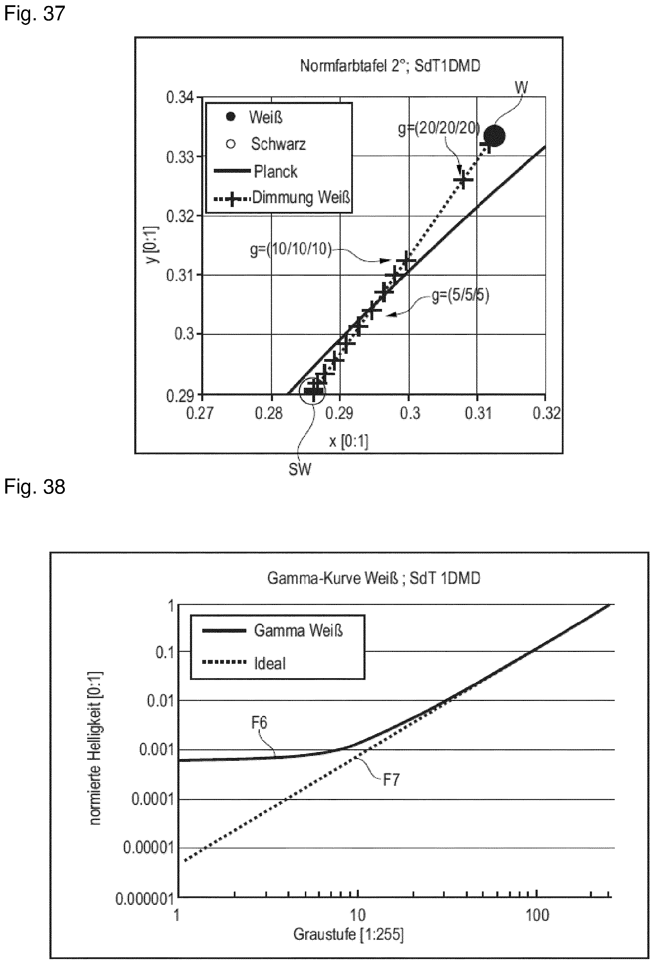

Mit der angegeben Formel lässt sich berechnen, welche Farborte und Helligkeiten sich für eine Dimmung des Weißtripels (255/255/255) ergeben. Idealerweise ändert sich der Farbort bei Dimmung nicht. Bei Weiß (255/255/255) müsste der Farbort stets der Weißpunkt sein. In Fig. 37 ist aus dem Farbraum von Fig. 36 der Bereich für 0,29 ≤ y ≤ 0,34 und 0,27 ≤ x ≤ 0,32 vergrößert dargestellt, wobei die Farborte für die Grautripel für g (20/20/20) bis g (0/0/0) (also die bis auf Null gedimmten Weißwerte) als "+"-Zeichen eingezeichnet sind. Daraus ergibt sich jedoch, dass bereits für eine Grautripel (20/20/20) die Farbabweichung (*Δxy*) in x und y größer als eine typischerweise angenommenen Wahrnehmungsschwelle von 0,003 ist (bei einem Gamma von 2,2; Formel zum Gamma ist weiter unten in der Beschreibung angegeben, z. B. Formel 15; $Δxy = \sqrt{{x}^{2} + {y}^{2}}$).

Fig. 38 zeigt die mit obiger Formel ermittelten Helligkeiten für das beispielhafte Projektionssystem nach dem Stand der Technik als γ-Kurve F6 (Gamma-Kurve F6) für weiß, wobei entlang der x-Achse die Grauwerte, die Werte von 1 bis 255 annehmen können, und entlang der y-Achse die auf 1 maximierte Helligkeit aufgetragen ist. Die Gamma-Kurve F6 ist die durchgezogene Linie und die ideale Gamma-Kurve F7 als gepunktete Linie eingezeichnet.

Die gezeigten Farborte g (20/20/20), g (10/10/10), g (5/5/5) für die Dimmung in Fig. 37 sowie der Verlauf der Gamma-Kurve F6 in Fig. 38 zeigen, dass der Projektor 101 mit Einfachmodulation z.B. nicht für eine Mehr-Projektor-Anordnung geeignet ist, da eine "unsichtbare" Überlagerung von zwei Randbereichen der projizierten Bilder von zwei (oder mehr) Projektoren nicht möglich ist.

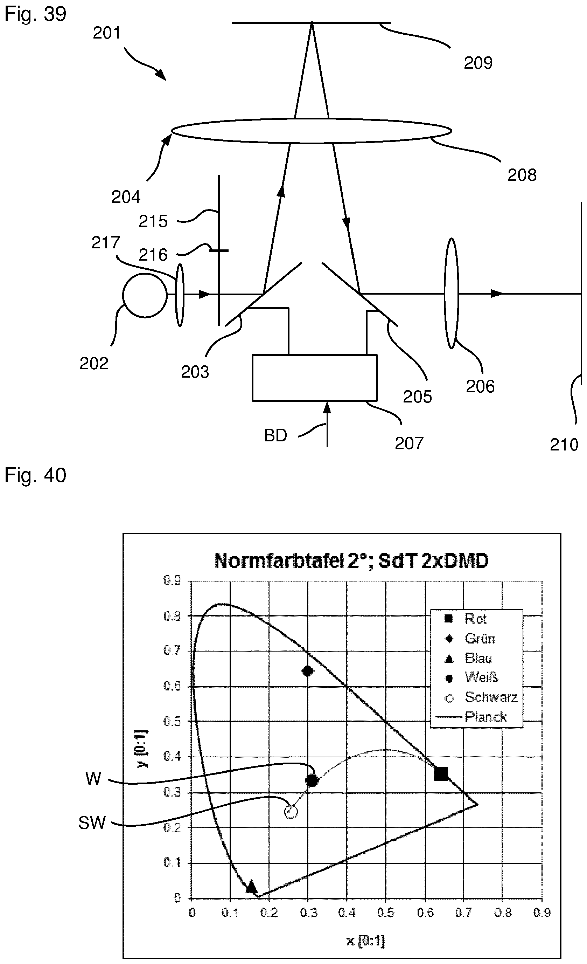

### Projektor 201 mit Doppelmodulation gemäß Fig. 39

Bei der Verwendung von zwei hintereinander geschalteten Modulatoren 203, 205, wie dies bei dem Projektor 201 mit Doppelmodulation in Fig. 39 der Fall ist, erhöht sich der Kontrast.

Der Projektor 201 (wird nachfolgend auch als 2x DMD SdT bezeichnet) ist grundsätzlich gleich aufgebaut wie der Projektor 1 in Fig. 27. Daher sind gleiche bzw. ähnliche Elemente mit Bezugszeichen bezeichnet, die um 200 größer sind als die entsprechenden Bezugszeichen in Fig. 27. Nachfolgend werden lediglich die Unterschiede beschrieben, die im Wesentlichen die Steuereinheit 207 und die Ansteuerung der Modulatoren 203, 205 betreffen.

Das Spektrum *S*(*λ*) nach einer Doppelmodulation mittels des Projektors 201 lässt sich wie folgt beschreiben: $\begin{matrix}S \left(λ, {g}_{1}, {g}_{2}\right) = {\int }_{Ω} d Ω {\int }_{Frame} d t {\sum }_{Farben c ∈ \left(r, g, b\right)} I \left(Ω, t, λ\right) ⋅ {T}_{B} \left(Ω, λ\right) ⋅ {T}_{C} \left(Ω, c, λ\right) ⋅ \\ {D}_{1} \left(Ω, t, c, λ, {g}_{1}\right) ⋅ {T}_{Z} \left(Ω, λ\right) ⋅ {D}_{2} \left(Ω, t, c, λ, {g}_{2}\right) ⋅ {T}_{P} \left(Ω, λ\right)\end{matrix}$

Mit
- *c*: Farbe; beispielsweise Rot, Grün und Blau *(r,g,b)*
- *g*₁: Grauwert, der am ersten Bildgeber 203 dargestellt wird, kann Zahlentripel sein für r, g, b
- *D*₁(Ω*,t,c,λ,g*₁): Transmission bzw. Reflexion des ersten Bildgebers 203
- *I*(Ω, *t,λ*): Intensität der Lichtquelle 202
- *t*: Zeitvariable
- *T_{B}*(*Ω, λ*): Transmission der Beleuchtungsoptik 217
- *T_{C}*(Ω,*c,λ*): Transmission aller Farbteiler und -vereiniger sowie Farbräder 215
- *T_{P}*(Ω*, λ*): Transmission der Projektionsoptik 206
- *λ*: Wellenlänge; beispielsweise 400 nm bis 700 nm
- Ω: Raumwinkel
- *g*₂: Grauwert, der am zweiten Bildgeber 205 dargestellt wird, kann Zahlentripel sein für r, g, b
- *D*₂(Ω*,t,c,λ,g*₂): Transmission bzw. Reflexion des zweiten Bildgebers 205
- *T_{z}*(Ω*,λ*): Transmission der Zwischenabbildung 204 zwischen erstem und zweitem Modulator 203, 205

Auch hier kann man typischerweise die Winkelabhängigkeit der einzelnen optischen Elemente dadurch eliminieren, dass man einen Mittelwert über den Raumwinkel Ω in den Rechnungen verwendet. Weiterhin kann man die Transmissionen der abbildenden Optiken (Beleuchtung, Projektion, Zwischenabbildung) zu einer einzigen Funktion zusammenfassen: *Tₒ*(*λ*) (bereits gemittelt über die Raumwinkel). Damit ergibt sich: $S \left(λ, {g}_{1}, {g}_{2}\right) = {\int }_{Frame} d t {\sum }_{c ∈ \left(r, g, b\right)} I \left(t, λ\right) ⋅ {T}_{O} \left(λ\right) ⋅ {T}_{C} \left(c, λ\right) ⋅ {D}_{1} \left(t, c, λ, {g}_{1}\right) ⋅ {D}_{2} \left(t, c, λ, {g}_{2}\right)$

Analog zu den obigen Ausführungen zur Einfachmodulation (Formeln (3) bis (9)) lassen sich für das oben ermittelte Spektrum eines dargestellten Pixels über die Normspektralwertfunktionen *x̅*(*λ*)*, y̅*(λ) und *z̅*(*λ*) die Farbwerte *̅X̅*̅(*g*₁*,g*₂) und der Farbort (*x,y*)(*g*₁*,g*₂) ermitteln.

Die Spektren der einzelnen Komponenten sind bereits in den Abbildungen der Fig. 32 bis 35 dargestellt. Dabei wurde angenommen, dass die beiden Modulatoren 203, 205 im Weißen einen Kontrast von 1500:1 aufweisen.

Analog zu Gleichung (2) lässt sich allgemein das Spektrum in Abhängigkeit der Grauwerte *g*_{1*r*}, *g*_{1*g*} und *g*_{1*b*} des ersten Modulators 203 und der Grauwerte *g*_{2*r*}, *g*_{2*g*} und *g*_{2*b*} des zweiten Modulators 205 nach einer Doppelmodulation beschreiben als (die Winkelabhängigkeit aus (1) wurde bereits eliminiert): $\begin{matrix}{S}_{Doppel} \left(λ, {g}_{1 r}, {g}_{1 g}, {g}_{1 b}, {g}_{2 r}, {g}_{2 g}, {g}_{2 b}\right) = {\int }_{Frame} d t {\sum }_{Farben c ∈ \left(r, g, b\right)} I \left(λ\right) ⋅ {T}_{C} \left(c, λ\right) ⋅ \\ {D}_{1} \left(t, λ, {g}_{1 r}, {g}_{1 g}, {g}_{1 b}\right) ⋅ {D}_{2} \left(t, λ, {g}_{2 r}, {g}_{2 g}, {g}_{2 b}\right) ⋅ {T}_{O} \left(λ\right)\end{matrix}$

Für eine Doppelmodulation nach dem oben beschriebenen Beispiel mit zwei DMDs lässt sich der Ausdruck vereinfachen zu: $\begin{matrix}{S}_{2 xDMD , Sdt} \left(λ, {t}_{00 , r}, {t}_{01 , r}, {t}_{10 , r}, {t}_{00 , r}, {t}_{01 , g}, {t}_{10 , g}, {t}_{00 , b}, {t}_{01 , b}, {t}_{10 , b}\right) = \frac{1}{{τ}_{r} + {τ}_{g} + {τ}_{b}} ⋅ {\sum }_{c ∈ \left(r, g, b\right)} {τ}_{c} ⋅ I \left(λ\right) ⋅ \\ {T}_{C} \left(c, λ\right) ⋅ {T}_{0} \left(λ\right) ⋅ \left\{\begin{matrix}{t}_{00 , c} ⋅ {D}_{1} \left(λ,"black"\right) ⋅ {D}_{2} \left(λ,"black"\right) + {t}_{01 , c} ⋅ {D}_{1} \left(λ,"black"\right) ⋅ \\ {D}_{2} \left(λ,"white"\right) + {t}_{10 , c} ⋅ {D}_{1} \left(λ,"white"\right) ⋅ {D}_{2} \left(λ,"black"\right) + \left({τ}_{c}-{t}_{00 , c}-{t}_{01 , c}-{t}_{10 , c}\right) ⋅ \\ {D}_{1} \left(λ,"white"\right) ⋅ {D}_{2} \left(λ,"white"\right)\end{matrix}\right\}\end{matrix}$

Bei Bildgebern 203, 205 mit Pulsweitenmodulation ergibt sich aus der Zeit *t,* die ein Pixel das Licht weiterleitet (ON-Zustand) zur Gesamtzeit eines Frames τ, wieviel Prozent des Lichtes (für eine Farbe) zur Leinwand 210 gelangt. In den obigen Formeln bezeichnet "white" den ON-Zustand und "black" den OFF-Zustand des entsprechenden Pixels. Über den Gamma-Wert y lässt sich einer solchen Zeit eine Graustufe *g* zuordnen. Für eine Darstellung in 8-bit ergibt sich: $g = 255 ⋅ {\left(\frac{t}{τ}\right)}^{1 / γ}$

Für die beiden Modulatoren *i* ∈ {1,2} und die Farben *c* ∈ {*r,g,b*} gilt: ${g}_{i , c} = 255 ⋅ {\left(\frac{{t}_{i , c}}{{τ}_{c}}\right)}^{1 / γ}$

Dabei wird davon ausgegangen, dass die Framezeit τ*_{c}* für beide DMDs gleich ist.

Mit Hilfe der oben aufgezeigten Formel (14) lässt sich für die einzelnen Farben das Spektrum bestimmen und daraus die Farborte. Der resultierende Farbraum ist in Fig. 40 in gleicher Weise wie in Fig. 36 dargestellt. Nimmt man an, dass die Anteile des roten, grünen und blauen Segmentes 41 %, 29 % und 30 % betragen, so ergibt sich der eingezeichnete Weißpunkt W. Zusätzlich ist der Farbort SW eingetragen, der sich ergibt, wenn die DMDs (bzw. das bzw. die entsprechende(n) Pixel) die ganze Zeit eines Frames auf Schwarz (OFF-Zustand) stehen. Zur Vereinfachung der Beschreibung wird nachfolgend nur auf die Modulatoren Bezug genommen. Natürlich betrifft dies stets auch die einzelnen Pixel bzw. Kippspiegel der Modulatoren.

Bei einer Doppelmodulation können pro Farbe *c* beide Modulatoren 203, 205 für eine Zeit *t*_{00,*c*} auf Schwarz geschaltet sein; es kann für eine Zeit *t*_{01,*c*} der erste Modulator 203 auf Schwarz und der zweite Modulator 205 auf Weiß geschaltet sein; es kann für eine Zeit *t*_{10,*c*} umgekehrt der erste Modulator 203 auf Weiß und der zweite Modulator 205 auf Schwarz geschaltet sein; schließlich können für eine Zeit *t*_{11*,c*} beide Modulatoren 203, 205 auf Weiß geschaltet sein. Dabei gilt: ${t}_{00 , c} + {t}_{01 , c} + {t}_{10 , c} + {t}_{11 , c} = {τ}_{c} mit c ∈ \left\{r, g, b\right\}$

In diesem Beispiel dient der erste Modulator 203 als Beleuchtung des zweiten Modulators 205. Das bedeutet, dass der (erste) Beleuchtungsmodulator 203 stets dann Licht bereitstellt, wenn der (zweite) Abbildungsmodulator 205 Licht benötigt. Daraus ergibt sich, dass *t*_{01,*c*} = 0 ist für alle Farben. Weiterhin sollte der Beleuchtungsmodulator 203 möglichst selten Licht weiterleiten, wenn der Abbildungsmodulator 205 auf Schwarz steht (*t*_{10,*c*} << τ*_{c}*). Der Beleuchtungsmodulator 203 kann beispielsweise ein feste (konstante) Zeit länger auf Weiß stehen als der Abbildungsmodulator 205; alternativ kann der Beleuchtungsmodulator 203 zu festen Zeiten zwischen Schwarz und Weiß geschaltet werden (so dass wiederum die benötigte Beleuchtung des Abbildungsmodulators 205 abgedeckt wird). In diesem Beispiel ist ${t}_{10 , c} = min \left\{0.012⋅{τ}_{c};{τ}_{c}-{t}_{11 , c}\right\}$

Dies trägt bei einem DMD mit *phased reset* für die Modulatoren 203, 205 Rechnung und einer Zwischenabbildung, bei zwar eine Pixel-zu-Pixel Zuordnung sichergestellt ist, die Reset-Zonen der beiden DMDs 203, 205 jedoch nicht identisch sind.

Ferner gibt es einen funktionalen Zusammenhang zwischen der Zeit *t*_{10,*c*}, die der Beleuchtungsmodulator 203 auf Weiß steht, wenn der Abbildungsmodulator 205 auf Schwarz steht; es gilt somit: *t*_{10,*c*} = *t*_{10,*c*}(*t*_{11,*c*}). Obiger Ausdruck vereinfacht sich somit zu: ${t}_{00 , c} + {t}_{10 , c} \left({t}_{11 , c}\right) + {t}_{11 , c} = {τ}_{c} mit c ∈ \left\{r, g, b\right\}$

Über Formel (15) lassen sich also die Zeiten *t*_{11,*c*} berechnen (der korrespondierenden Pixel beider DMDs 203, 205 stehen auf ON), die für einen darzustellenden Grauwert *(r,g,b)* erforderlich sind. Die Zeiten, bei denen lediglich der erste DMD 203 auf ON steht, ergeben sich aus (17). Die verbleibende Zeit für eine Farbe (τ*_{c}*) errechnet sich nach (18).

Gleichung (14) lässt sich somit umformen zu: ${S}_{2 xDMD , SdT} \left(λ, {t}_{11 , r}, {t}_{11 , g}, {t}_{11 , b}\right) = \frac{1}{{τ}_{r} + {τ}_{g} + {τ}_{b}} ⋅ {\sum }_{c ∈ \left(r, g, b\right)} {τ}_{c} ⋅ I \left(λ\right) ⋅ {T}_{C} \left(c, λ\right) ⋅ {T}_{O} \left(λ\right) ⋅ \left\{\begin{matrix}\left(\begin{matrix}{τ}_{c} - {t}_{11 , c} - \\ {t}_{10 , c} \left({t}_{11 , c}\right)\end{matrix}\right) ⋅ {D}_{1} \left(λ,"black"\right) ⋅ {D}_{2} \left(λ,"black"\right) + {t}_{10 , c} \left({t}_{11 , c}\right) ⋅ {D}_{1} \left(λ,"white"\right) ⋅ {D}_{2} \left(λ,"black"\right) + \\ {t}_{11 , c} ⋅ {D}_{1} \left(λ,"white"\right) ⋅ {D}_{2} \left(λ,"white"\right)\end{matrix}\right\}$

Dabei beschreibt *T_{c}*(*c,λ*) die Transmission durch die verschiedenen Filter *c* des Farbrades und die Zustände "black" und "white" entsprechen dem Schwarz- bzw. Weiß-Zustand der beiden DMDs.

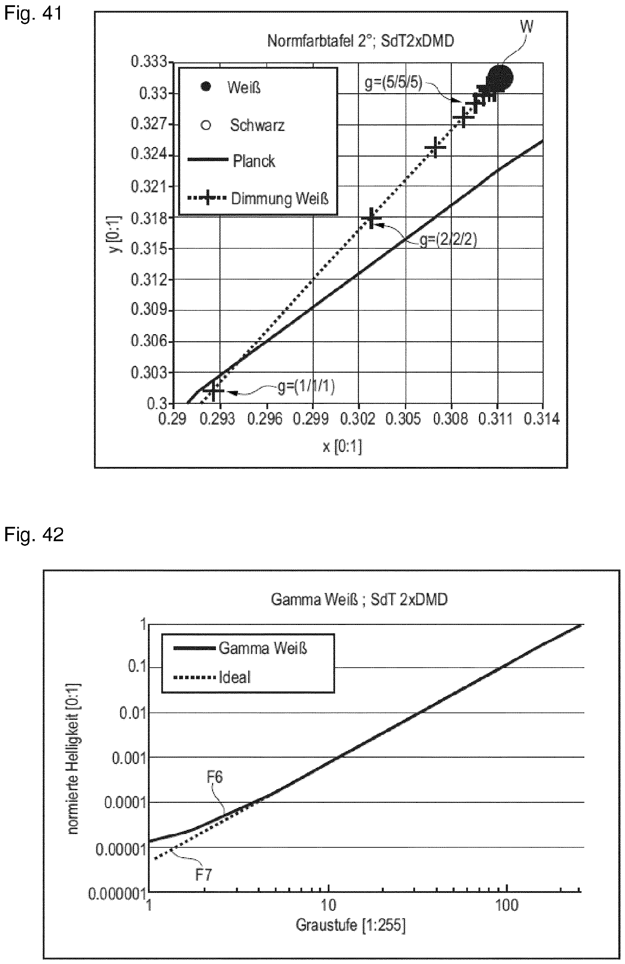

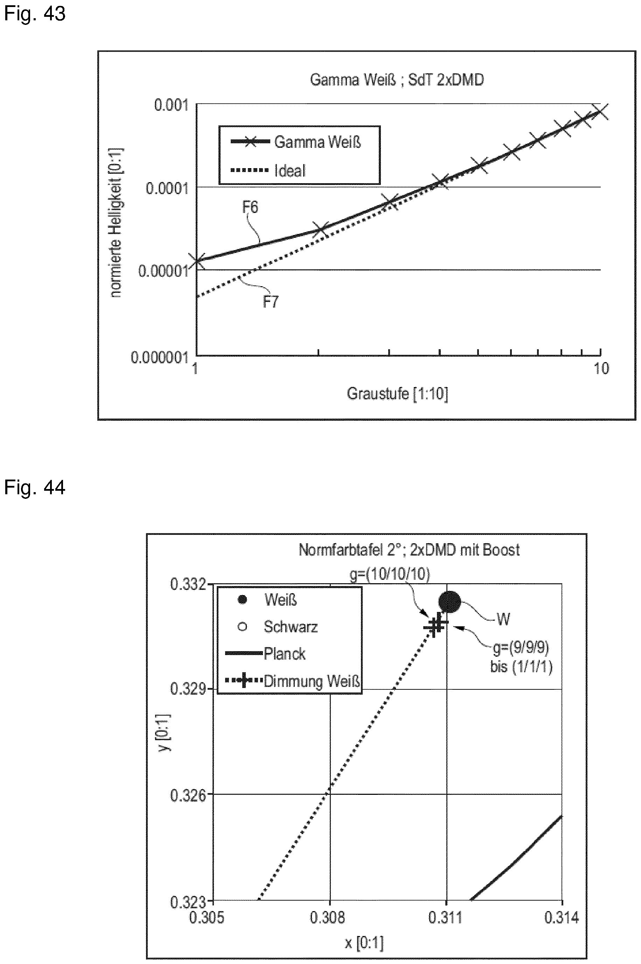

Mit der angegeben Formel (19) lässt sich berechnen, welche Farborte und Helligkeiten sich für eine Dimmung des Weißtripels (255/255/255) ergeben. In Fig. 41 ist aus dem Farbraum von Fig. 40 der Bereich für 0,333 ≤ y ≤ 0,3 und 0,29 ≤ x ≤ 0,314 vergrößert dargestellt, wobei die Farborte für die Grautripel (5/5/5) bis (1/1/1) eingezeichnet sind. Aus dieser Darstellung ist ersichtlich, dass die Farbabweichungen (also die Änderungen des Farbortes) deutlich geringer sind als bei einer Einfachmodulation (Vergleich mit Fig. 37). Erst bei einem Grautripel von (5/5/5) sind die Farbabweichungen in x und y bei dem Modulator 201 mit Doppelmodulation größer als eine typischerweise angenommene Wahrnehmungsschwelle von 0,003 (bei einem Gamma von 2,2). Fig. 42 zeigt für den Modulator 201 mit Doppelmodulation in gleicher Weise wie in Fig. 38, dass die ideale Gamma-Kurve F7 bei dem Modulator 201 mit Doppelmodulation deutlich besser getroffen wird (Kurve F6) als bei einer Einfachmodulation. Die Abweichungen für dunkle Graustufen sind jedoch immer noch erheblich, wie Fig. 43 zu entnehmen ist, in der in gleicher Weise wie in Fig. 42, die Gamma-Kurven F6, F7 für weiß für die Grauwerte von 1 bis 10 gezeigt sind.

Für beide Beispiele nach dem Stand der Technik sind die resultierenden Farborte und Helligkeiten in nachfolgender Tabelle zusammengefasst (hierbei ist zur Abtrennung der Nachkommastellen "." statt einem "," verwendet, was in der vorliegenden Beschreibung als gleich angenommen wird):

| **RGB-Eingabe** | | | **Ideal** | **1xDMD SdT** | | | **2xDMD SdT** | | |
|---|---|---|---|---|---|---|---|---|---|
| **R** | **G** | **B** | **L** | **L** | **x** | **y** | **L** | **x** | **y** |
| 255 | 255 | 255 | 1 | 1 | 0.313 | 0.333 | 1 | 0.311 | 0.331 |
| 20 | 20 | 20 | 0.00370 | 0.00436 | 0.308 | 0.326 | 0.00371 | 0.311 | 0.331 |
| 10 | 10 | 10 | 0.00080 | 0.00147 | 0.300 | 0.312 | 0.00081 | 0.311 | 0.331 |
| 9 | 9 | 9 | 0.00064 | 0.0013 | 0.298 | 0.310 | 0.00065 | 0.311 | 0.331 |
| 8 | 8 | 8 | 0.00049 | 0.00116 | 0.296 | 0.307 | 0.00050 | 0.311 | 0.331 |
| 7 | 7 | 7 | 0.00037 | 0.00103 | 0.295 | 0.304 | 0.00038 | 0.310 | 0.330 |
| 6 | 6 | 6 | 0.00026 | 0.00093 | 0.293 | 0.301 | 0.00027 | 0.310 | 0.330 |
| 5 | 5 | 5 | 0.00018 | 0.00084 | 0.291 | 0.298 | 0.00018 | 0.310 | 0.329 |
| 4 | 4 | 4 | 0.00011 | 0.00077 | 0.289 | 0.296 | 0.00012 | 0.309 | 0.328 |
| 3 | 3 | 3 | 5.69E-05 | 0.00072 | 0.288 | 0.293 | 6.535E-05 | 0.307 | 0.325 |
| 2 | 2 | 2 | 2.33E-05 | 0.00069 | 0.287 | 0.292 | 3.176E-05 | 0.303 | 0.318 |
| 1 | 1 | 1 | 5.08E-06 | 0.00067 | 0.286 | 0.291 | 1.35E-05 | 0.293 | 0.301 |
| 0 | 0 | 0 | 0 | 0.00067 | 0.286 | 0.290 | 4.45E-07 | 0.259 | 0.242 |

Diese Tabelle zeigt eine Zusammenstellung der Farborte und Helligkeiten für die beiden Beispiel-Systeme 101, 201 nach dem Stand der Technik in Abhängigkeit von vorgegebenen RGB-Eingabewerten.

Für die farbrichtige Darstellung dunkler Bildinhalte ist es - z.B. in Multi-Projektor Anordnungen - notwendig, dass sowohl die Farborte über eine Dimmung erhalten bleiben, als auch dass die Helligkeiten möglich nah an der idealen Gamma-Kurve liegen.

Die beschriebene Schwierigkeit der Darstellung korrekter Helligkeiten für geringe Helligkeiten kann mit einem sogenannten "Boosten" überwunden werden, bei dem einer der beiden Modulatoren 3, 5 auf Schwarz geschaltet ist und der zweite Modulator lediglich ein nicht zu vermeidendes Restlicht des auf Schwarz geschalteten Modulators in vorteilhafter Weise so moduliert, dass geringe Helligkeitswerte genauer erzeugt werden können. Dieses Restlicht hat ferner eine spektrale Charakteristik, die vom jeweiligen Projektor 1 abhängt. Es wird daher erfindungsgemäß das Restlicht so modulieren, dass gleichzeitig zur korrekten Helligkeit auch die korrekten Farben wiedergegeben werden.

Dem Projektor 1 kann ein sogenannter "Schwarzpunkt" SW zugeordnet werden. Der Schwarzpunkt beschreibt den Farbort für ein schwarzes Bild. Typischerweise sind die Farborte von Weißpunkt W und Schwarzpunkt SW bei einem realen Projektor nicht identisch. Während sich der Weißpunkt W (in der Regel) aus den Primärfarben ergibt (aus der Summe der entsprechenden Farbwerte), resultiert der Schwarzpunkt SW aus einem endlichen Kontrast der Bildgeber 3, 5. Dieser Kontrast ist in der Regel wellenlängenabhängig. Bei Bildgebern 3, 5 auf Basis von Flüssigkristallen ist der Kontrast typischerweise im Blauen geringer als im Roten, so dass der Schwarzpunkt SW meist "blauer" ist als der Weißpunkt. Für Kippspiegel-Matrizen 3, 5, wie sie beim Projektor 1 gemäß Fig. 27 verwendet werden, wird der Kontrast durch die Fläche unter den Kippspiegeln sowie durch die Spiegelkanten beeinflusst. Auch hier gelangt in der Regel mehr blaues als rotes Licht zur Projektionsfläche 10.

Aufgrund dieser Eigenschaften verschiebt sich in unerwünschter Weise der Farbort einer jeden projizierten Farbe bei Dimmung in Richtung des Schwarzpunktes SW. Auch "reine" Farben - wie Rot, Grün oder Blau - besitzen z. B. bei einer Graustufe von 1 einen Farbort, der nicht mehr der Primärfarbe entspricht, sondern schon nahe beim Schwarzpunkt liegt.

Wenn einer der Modulatoren 3, 5 (z. B. der erste Modulator 3) auf Schwarz geschaltet ist, ergibt sich als resultierendes Spektrum aus (13) $\begin{matrix}{S}_{Doppel + Boost} \left(λ, {g}_{2 r}, {g}_{2 g}, {g}_{2 b}\right) = {\int }_{Frame} d t {\sum }_{Farben c ∈ \left(r, g, b\right)} I \left(λ\right) ⋅ {T}_{C} \left(c, λ\right) ⋅ {D}_{1} \left(λ,"black"\right) ⋅ \\ {D}_{2} \left(t, λ, {g}_{2 r}, {g}_{2 g}, {g}_{2 b}\right) ⋅ {T}_{O} \left(λ\right)\end{matrix}$

Analog zu den Gleichungen (3) bis (6) können auch hier die resultierenden Farbwerte ermittelt werden: $\begin{matrix}{\vec{X}}_{Doppel + Boost} \left({g}_{2 r}, {g}_{2 g}, {g}_{2 b}\right) = \left(\begin{matrix}{\int }_{λ} {dλS}_{Doppel + Boost} \left(λ, {g}_{2 r}, {g}_{2 g}, {g}_{2 b}\right) ⋅ \overline{x} \left(λ\right) \\ {\int }_{λ} {dλS}_{Doppel + Boost} \left(λ, {g}_{2 r}, {g}_{2 g}, {g}_{2 b}\right) ⋅ \overline{y} \left(λ\right) \\ {\int }_{λ} {dλS}_{Doppel + Boost} \left(λ, {g}_{2 r}, {g}_{2 g}, {g}_{2 b}\right) ⋅ \overline{z} \left(λ\right)\end{matrix}\right) \\ = \left(\begin{matrix}{X}_{Doppel + Boost} \left({g}_{2 r}, {g}_{2 g}, {g}_{2 b}\right) \\ {Y}_{Doppel + Boost} \left({g}_{2 r}, {g}_{2 g}, {g}_{2 b}\right) \\ {Z}_{Doppel + Boost} \left({g}_{2 r}, {g}_{2 g}, {g}_{2 b}\right)\end{matrix}\right)\end{matrix}$

Gesucht werden nun die Werte *g*_{2*r*}, *g*_{2*g*} und *g*_{2*b*}, die einen Zielfarbwert *X̅_{Ziel}* möglichst genau annähern. Es wird daher *g*_{2*r*},*g*_{2*g*},*g*_{2*b*} ∈ [0,1, ...,255] so bestimmt, dass ||*X̅_{Ziel}* - *X̅_{Doppel+Boost}*(*g*₂*ᵣ,g*₂*_{g},g*_{2*b*})∥ minimal wird. Die Steuereinheit 7 setzt daher bei einem vorgegebenen RGB-Tripel (bzw. Bilddaten BD) eines (dunklen) Bildpunktes (der z. B. einen Helligkeitswert aufweist, der kleiner ist als ein erster Schwellwert) eines darzustellenden Bildes das Signal (Beleuchtungssteuerdaten BS) für den ersten Bildgeber 3 auf Schwarz und bestimmt das Farbtripel *g*₂*ᵣ, g*_{2*g*} und *g*_{2*b*} und daraus die Bildsteuerdaten BD für den zweiten Modulator 5 so, dass der Farbabstand zum vorgegeben RGB-Tripel (bzw. zu den Bilddaten BD) minimal wird.

Dabei ist ∥▪∥ eine Norm, die den Abstand zweier Farbwerte beschreibt. Diese Norm kann beispielsweise als Betrag des Farbvektors definiert sein. Alternativ werden zunächst nach Formel (9) die Vektoren *L̅_{Doppel+Boost}*(*g*₂*ᵣ,*g₂*_{g},g*_{2*b*}) und *L̅_{Ziel}* berechnet und anschließend wiederum die Norm des Differenz-Vektors gebildet. Diese Norm ∥|*̅L̅*̅|∥ kann dabei die einzelnen Komponenten des Vektors unterschiedlich bewerten: $‖ \left|\vec{L}\right| ‖ = ‖ \left|\left(\begin{matrix}{L}_{1} \\ {L}_{2} \\ {L}_{3}\end{matrix}\right)\right| ‖ : = \sqrt{α ⋅ {\left({L}_{1}\right)}^{2} + β ⋅ {\left({L}_{2}\right)}^{2} + γ ⋅ {\left({L}_{3}\right)}^{2}}$

Um beispielsweise die Helligkeit (*L*₁) einer dargestellten Farbe anders zu gewichten als den Farbort (*L*₂ und *L*₃), kann man *α* ≠ 1 und *β* = γ = 1 wählen. Weiterhin können für *L*₂ und *L*₃ abweichend von (9) anstelle der xy-Farbkoordinaten auch u'v'-Farbkoordinaten nach DIN EN ISO 11664-5 verwendet werden.

Für die Bildmodulation mit den zwei Modulatoren 3, 5 mit Pulsweitenmodulation (PWM) ist somit in Gleichung (14) *t*_{10,*c*} = *t*_{11,*c*} = 0 und es ergibt sich für Gleichung (17): ${t}_{00 , c} + {t}_{01 , c} = {τ}_{c} mit c ∈ \left\{r, g, b\right\}$

Formel (14) vereinfacht sich dann zu: ${S}_{2 xDMD} \left(λ, {t}_{01 , r}, {t}_{01 , g}, {t}_{01 , b}\right) = \frac{1}{{τ}_{r} + {τ}_{g} + {τ}_{b}} ⋅ {\sum }_{c ∈ \left(r, g, b\right)} {τ}_{c} ⋅ I \left(λ\right) ⋅ {T}_{C} \left(c, λ\right) ⋅ {T}_{O} \left(λ\right) ⋅ \left\{\begin{matrix}\left({τ}_{c}-{t}_{01 , c}\right) ⋅ \\ {D}_{1} \left(λ,"black"\right) ⋅ {D}_{2} \left(λ,"black"\right) + {t}_{01 , c} ⋅ {D}_{1} \left(λ,"black"\right) ⋅ {D}_{2} \left(λ,"white"\right)\end{matrix}\right\}$

Gesucht sind nun die Zeiten *t*₀₁*_{,r}, t*_{01,}*_{g}, t*_{01,}*_{b},* die es erlauben, einen gesuchten Wert für *X̅_{Ziel}* darzustellen. Unter Verwendung der Gleichungen (3) bis (6) lässt sich obige Gleichung zu folgender Forderung umformen:
Finde *t*_{01,*c*} ∈ [0: τ*_{c}*] mit *c* ∈ {*r,g,b*}*,* so dass ∥*X̅_{Ziel}* - *̅X̅*̅_{2*xDMD*}(*t*₀₁*_{,r}, t*_{01,}*_{g}, t*_{01*,b*})∥ minimal wird mit ${\vec{X}}_{2 xDMD} \left({t}_{01 , r}, {t}_{01 , g}, {t}_{01 , b}\right) = \frac{1}{{τ}_{r} + {τ}_{g} + {τ}_{b}} ⋅ {\sum }_{c ∈ \left(r, g, b\right)} \left\{\left({τ}_{c}-{t}_{01 , c}\right)⋅{\vec{X}}_{00 , c}+{t}_{01 , c}⋅{\vec{X}}_{01 , c}\right\}$

Dabei sind ${\vec{X}}_{00 , c} = \frac{{τ}_{c}}{{τ}_{r} + {τ}_{g} + {τ}_{b}} \int dλ I \left(λ\right) ⋅ {T}_{C} \left(c, λ\right) ⋅ {D}_{1} \left(λ,"black"\right) ⋅ {D}_{2} \left(λ,"black"\right) ⋅ {T}_{O} \left(λ\right) ⋅ \left(\begin{matrix}\overline{x} \left(λ\right) \\ \overline{y} \left(λ\right) \\ \overline{z} \left(λ\right)\end{matrix}\right)$ ${\vec{X}}_{01 , c} = \frac{{τ}_{c}}{{τ}_{r} + {τ}_{g} + {τ}_{b}} \int dλ I \left(λ\right) ⋅ {T}_{C} \left(c, λ\right) ⋅ {D}_{1} \left(λ,"black"\right) ⋅ {D}_{2} \left(λ,"white"\right) ⋅ {T}_{O} \left(λ\right) ⋅ \left(\begin{matrix}\overline{x} \left(λ\right) \\ \overline{y} \left(λ\right) \\ \overline{z} \left(λ\right)\end{matrix}\right)$

Bei diesen Vektoren *̅X̅*̅_{00,*c*} und *̅X̅*̅_{01*,c*} handelt es sich um Größen, die beispielsweise experimentell für den Projektor 1 bestimmt werden können.

Verwendet man die Spektren für Lampe, DMDs, Optik und Farbfilter, wie sie beim Projektor 201 mit Doppelmodulation nach dem Stand der Technik angewendet wurden, so lassen sich die Zeiten *t*_{01,*r*}, *t*₀₁*_{,g}, t*_{01,*b*} berechnen, für die gegebenen Ziel-Farben projiziert werden können. Die Zeiten lassen sich über Gleichung (16) in Grauwerte (= On-Zeitdauer des entsprechenden Pixels des zweiten Modulators 5) der jeweiligen Farben umrechnen. In der Regel ergeben sich dabei keine natürlichen Zahlen zwischen 0 und 255. Hier sind entweder die nächsten natürlichen Zahlen als *g*_{2*r*},*g*_{2*g*},*g*_{2*b*} für den zweiten Modulator zu wählen (bzw. den nächsten darstellbaren Grauwert, falls der Modulator eine höhere Bit-Tiefe als 8-bit). Alternativ kann der erforderliche Grauwert über ein räumliches und/oder zeitliches Dithering dargestellt werden.

Für das Beispiel sind die errechneten Grauwerte an den beiden Modulatoren in nachfolgender Tabelle in Abhängigkeit von RGB-Eingabewerten zusammengestellt: Dabei wird wiederum von einer 8-Bit-Darstellung ausgegangen, wobei R1, G1, B1 die ON-Zeiten des ersten Modulators 3 für die jeweilige Farbe und R2, G2, B2 die ON-Zeiten des zweiten Modulators 5 für die jeweilige Farbe sind.

| **RGB-Eingabe** | | | **Ideal** | | | | | | | **2xDMD + Boost** | | | | | |
|---|---|---|---|---|---|---|---|---|---|---|---|---|---|---|---|
| **R** | **G** | **B** | **L** | **R1** | **G1** | **B1** | **R2** | **G2** | **B2** | **t01r/τr** | **t01g/τg** | **t01b/τb** | **L** | **x** | **y** |
| 255 | 255 | 255 | 1 | 255 | 255 | 255 | 255 | 255 | 255 | | | | 1 | 0.311 | 0.331 |
| 20 | 20 | 20 | 0.00370 | 20.1 | 20.1 | 20.1 | 20 | 20 | 20 | | | | 0.00371 | 0.311 | 0.331 |
| 10 | 10 | 10 | 0.00080 | 10.1 | 10.1 | 10.1 | 10 | 10 | 10 | | | | 0.00081 | 0.311 | 0.331 |
| 9 | 9 | 9 | 0.00064 | 9.05 | 9.05 | 9.05 | 9 | 9 | 9 | | | | 0.00065 | 0.311 | 0.331 |
| 8 | 8 | 8 | 0.00049 | 0 | 0 | 0 | 158.7 | 134.7 | 64.7 | 0.8062 | 0.7481 | 0.5362 | 0.00050 | 0.311 | 0.331 |
| 7 | 7 | 7 | 0.00037 | 0 | 0 | 0 | 83.1 | 70.5 | 33.9 | 0.6008 | 0.5575 | 0.3994 | 0.00037 | 0.311 | 0.331 |
| 6 | 6 | 6 | 0.00026 | 0 | 0 | 0 | 39.4 | 33.4 | 16.0 | 0.4278 | 0.3970 | 0.2843 | 0.00026 | 0.311 | 0.331 |
| 5 | 5 | 5 | 0.00018 | 0 | 0 | 0 | 16.3 | 13.8 | 6.6 | 0.2863 | 0.2656 | 0.1900 | 0.00018 | 0.311 | 0.331 |
| 4 | 4 | 4 | 0.00011 | 0 | 0 | 0 | 5.5 | 4.7 | 2.2 | 0.1750 | 0.1623 | 0.1159 | 0.00011 | 0.311 | 0.331 |
| 3 | 3 | 3 | 5.69E-05 | 0 | 0 | 0 | 1.4 | 1.2 | 0.5 | 0.0926 | 0.0859 | 0.0611 | 5.77E-05 | 0.311 | 0.331 |
| 2 | 2 | 2 | 2.33E-05 | 0 | 0 | 0 | 0.2 | 0.2 | 0.1 | 0.0376 | 0.0348 | 0.0245 | 2.36E-05 | 0.311 | 0.331 |
| 1 | 1 | 1 | 5.08E-06 | 0 | 0 | 0 | 0.006 | 0.005 | 0.002 | 0.0077 | 0.0071 | 0.0046 | 5.14E-06 | 0.311 | 0.331 |
| 0 | 0 | 0 | 0 | 0 | 0 | 0 | 0 | 0 | 0 | 0 | 0 | 0 | 4.45E-07 | 0.259 | 0.242 |

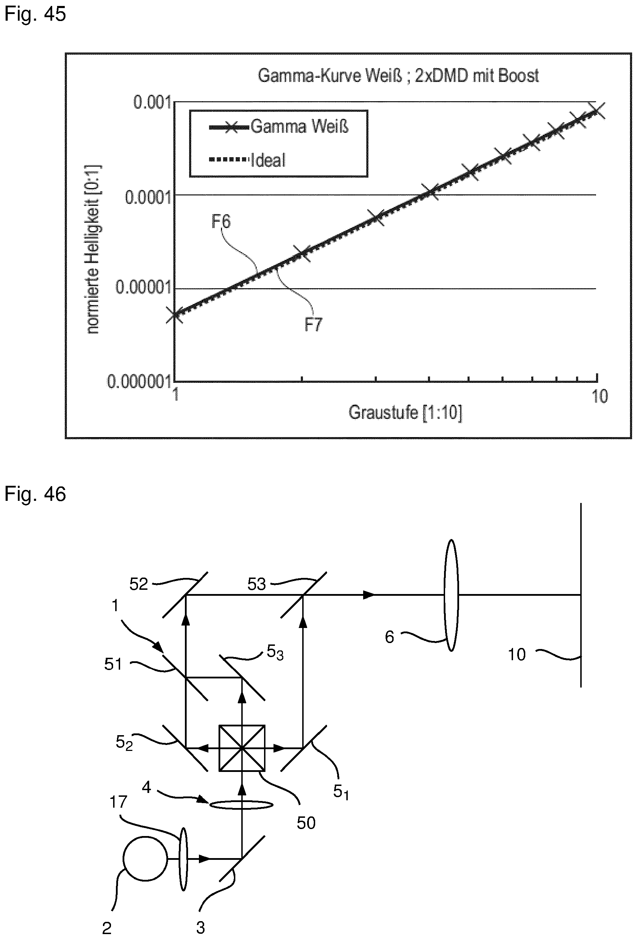

Es zeigt sich, dass gegenüber den Lösungen nach dem Stand der Technik die Farborte weniger variieren bzw. vom idealen Wert abweichen (im Beispiel wurde als Ziel-Farbe die Koordinaten der letzten nicht-geboosteten Farbe (9/9/9) verwendet). Dies ist in Fig. 44 in gleicher Weise wie in Fig. 37 und Fig. 41 für die Grautripel (10/10/10) bis (1/1/1) dargestellt. Daraus ergibt sich, dass die Grautripel (9/9/9) bis (1/1/1) am selben Farbort liegen und das Grautripel (10/10/10) sehr nah an diesem Farbort liegt, so dass die Farbabweichungen unterhalb einer Wahrnehmungsschwelle von 0,003 liegen. Weiterhin werden zusätzlich die Helligkeiten gemäß der idealen Gamma-Kurve F7 deutlich besser getroffen, wie in Fig. 45 in gleicher Weise wie in Fig. 37, 42 und 43 gezeigt ist. So liegt die mit durchgezogener Linie gezeichnete Gamma-Kurve F6 für weiß für die Grauwerte von 1 bis 10 auf die idealen in Gamma-Kurve F7, die als gepunktete Linie gezeichnet ist. Das dazu durchgeführte "Boosten" ist ebenfalls dieser Tabelle zu entnehmen. Für z. B. eine RGB-Eingabe von (7/7/7) wird das entsprechende Pixel des ersten Modulators 3 auf schwarz bzw. OFF geschaltet mit (0/0/0) und das entsprechende Pixel des zweiten Modulators 5 wird dagegen stark erhöht bzw. geboostet auf (83,1/70,5/33,9) (bzw. auf ganze Zahlen gerundet (83/71/34), was deutlich größer ist als der RGB-Eingabewert (7/7/7). Der zweite Modulator 5 moduliert für diese Pixel somit das nicht zu vermeidende Restlicht des ersten Modulators 3.

Wenn in diesem Fall eine Helligkeitsänderung wegen Blending in gleicher Weise wie in Verbindung mit Fig. 21 beschrieben wurde, durchgeführt werden, würde dies bei einer 8-Bit Auflösung für z.B. den Helligkeitswert von 7 für das Pixel Nr. 10 des Projektors P1 gemäß Fig. 22 zu einer Verringerung um 10% und somit auf 6,67 führen, das in 8-Bit wieder als 7 dargestellt werden würde. Dieser Helligkeitsänderung wäre somit nicht darstellbar. Erfindungsgemäß kann sie aber mit dem Boosten mit erhöhter Auflösung, wie in Verbindung mit Fig. 21-26 beschrieben wurde, dargestellt werden. Daher wird das Boosten mit erhöhter Auflösung auch bei den hier beschriebenen Ausführungsbeispielen der farbtreuen Darstellung bei geringen Helligkeitswerten eingesetzt.

Für Farben, die nicht "zu nahe" an den Primärfarben sind, lässt sich ∥*X̅_{Ziel}* - *X̅_{2xDMD}*(*t*₀₁*_{,r},t*₀₁*_{,g},t*_{01*,b*})∥ = 0 erfüllen. Dies ist dann der Fall, wenn die Matrix-Gleichung zu Lösungen für *t*_{01,*c*} ∈ [0,τ*_{c}*] führt. Dies wird klar, wenn man die Forderung umformt zu: $\begin{matrix}\frac{1}{{τ}_{r} + {τ}_{g} + {τ}_{b}} ⋅ {\left(\begin{matrix}{\vec{X}}_{01 , r} - {\vec{X}}_{00 , r} & {\vec{X}}_{01 , g} - {\vec{X}}_{00 , g} & {\vec{X}}_{01 , b} - {\vec{X}}_{00 , b}\end{matrix}\right)}^{T} ⋅ \left(\begin{matrix}{t}_{01 , r} \\ {t}_{01 , g} \\ {t}_{01 , b}\end{matrix}\right) = {\vec{X}}_{Ziel} - \frac{1}{{τ}_{r} + {τ}_{g} + {τ}_{b}} ⋅ \\ {\sum }_{c ∈ \left(r, g, b\right)} {τ}_{c} ⋅ {\vec{X}}_{00 , c}\end{matrix}$

Dieser Ausdruck lässt sich invertieren und gibt die Lösungen für die Zeiten *t*_{01,*r*}, *t*_{01,*g*}, *t*_{01,*b*}: $\left(\begin{matrix}{t}_{01 , r} \\ {t}_{01 , g} \\ {t}_{01 , b}\end{matrix}\right) = {\hat{M}}^{- 1} ⋅ \vec{X}$

Mit $\hat{M} = \frac{1}{{τ}_{r} + {τ}_{g} + {τ}_{b}} ⋅ {\left(\begin{matrix}{\vec{X}}_{01 , r} - {\vec{X}}_{00 , r} & {\vec{X}}_{01 , g} - {\vec{X}}_{00 , g} & {\vec{X}}_{01 , b} - {\vec{X}}_{00 , b}\end{matrix}\right)}^{T}$ und $\vec{X} = {\vec{X}}_{Ziel} - \frac{1}{{τ}_{r} + {τ}_{g} + {τ}_{b}} ⋅ {\sum }_{c ∈ \left(r, g, b\right)} {τ}_{c} ⋅ {\vec{X}}_{00 , c}$

Der erfindungsgemäße Projektor 1 weist aufgrund der beschriebenen zeitsequentiellen farbigen Beleuchtung der beiden Modulatoren 3, 5 einen roten Farbkanal, einen grünen Farbkanal und einen blauen Farbkanal auf, wobei alle Farbkanäle die beiden Modulatoren 3, 5 und die Abbildungsoptik 4 aufweisen. Sie unterscheiden sich nur durch die Stellung des Farbrades 15, die dafür sorgt, dass rotes, grünes oder blaues Licht auf die Modulatoren 3, 5 fällt. Jeder dieser Farbkanäle weist aufgrund der beschriebenen Wellenlängenabhängigkeit des Kontrastes der Modulatoren 3, 5 die unerwünschte Eigenschaft auf, dass sich der erzeugte Farbort in Abhängigkeit der eingestellten Helligkeit verschiebt. Dies ist gerade bei geringen zu erzeugenden Helligkeitswerten von Nachteil und wird in der beschriebenen Art und Weise erfindungsgemäß kompensiert.

Bei einem zweiten Ausführungsbeispiel des Projektors 1 wird, wie in Fig. 46 gezeigt, das Licht zunächst über einen ersten Modulator 3 ("Beleuchtung") gelenkt. Anschließend wird das Licht mittels eines Farbteilerwürfels 50 in einen roten, einen grünen und einen blauen Farbanteil aufgespaltet. Die Farbanteile werden jeweils über einen weiteren Modulator 5₁, 5₂, 5₃ gelenkt (der Abbildungsmodulator 5₁ moduliert den roten Farbanteil, der Abbildungsmodulator 5₂ moduliert den grünen Farbanteil und der Abbildungsmodulator 5₃ moduliert den blauen Farbanteil). Anschließend wird das modulierte Licht über die Spiegel 51, 52, 53 zusammengeführt und über eine Projektionsoptik 6 an eine Projektionsfläche 10 gelenkt. Bei den Modulatoren 3, 5₁, 5₂, 5₃ handelt es sich in diesem Beispiel um vier DMDs. Zur Vereinfachung der Darstellung ist die Steuereinheit 7 nicht eingezeichnet.

Bei einer solchen "1 →3"-Anordnung lässt sich Gleichung (21) schreiben als: $\begin{matrix}{S}_{1 \to 3} \left(λ, {g}_{1}, {g}_{2 r}, {g}_{2 g}, {g}_{2 b}\right) = {\int }_{Frame} d t I \left(λ\right) ⋅ {D}_{1} \left(t, λ, {g}_{1}\right) ⋅ {T}_{O} \left(λ\right) ⋅ \\ {\sum }_{Farben c ∈ \left(r, g, b\right)} {T}_{C , c} \left(λ\right) ⋅ {D}_{2 c} \left(t, λ, {g}_{2 c}\right)\end{matrix}$

Hierbei sei in *T_{C,c}*(*λ*) die Transmission für den Farbkanal *c* ∈ (*r*,*g,b*) inklusive der Farbteiler 50 und Farbvereiniger 51-53. *D*_{2*c*}(*t,λ,g*_{2*c*}) beschreibt die Reflektivitäten der drei Abbildungs-DMDs 5₁-5₃.

Für die Darstellung von hellen Bildinhalten muss der Beleuchtungs-DMD 3 mindestens zu den Zeiten auf Weiß stehen, wenn einer der Abbildungs-DMDs 5₁-5₃ auf Weiß steht. Das führt insbesondere in dunkleren Szenen dazu, dass die Primärfarben - oder sehr farbige Bildinhalte - farblich entsättigt werden.

Für die Darstellung dunkler Bildinhalte kann, wie schon im ersten Ausführungsbeispiel, ein Boosten durchgeführt werden, wobei z. B. der Beleuchtungs-DMD 3 auf Schwarz gestellt wird und das Boosten über die drei Abbildungs-DMD 5₁-5₃ erfolgt.

Schreibt man Gleichung (29) in einer Darstellung mit DMD-Zeiten, so gilt für die Darstellung dunkler Bildinhalte mittels Boost (analog zu (25) im ersten Ausführungsbeispiel): ${S}_{1 \to 3 DMD} \left(λ, {t}_{01 , r}, {t}_{01 , g}, {t}_{01 , b}\right) = \frac{1}{τ} ⋅ I \left(λ\right) ⋅ {T}_{O} \left(λ\right) ⋅ {D}_{1} \left(λ,"black"\right) ⋅ {\sum }_{c ∈ \left(r, g, b\right)} {T}_{C , c} \left(λ\right) ⋅ \left\{\begin{matrix}\left(τ-{t}_{01 , c}\right) ⋅ \\ {D}_{2 c} \left(λ,"black"\right) + {t}_{01 , c} ⋅ {D}_{2 c} \left(λ,"white"\right)\end{matrix}\right\}$

Dabei ist *τ* = τ*ᵣ* = τ*_{g}* = τ*_{b}.*

Gesucht sind nun wieder die Zeiten *t*₀₁*_{,r}, t*₀₁*_{,g}, t*₀₁*_{,b},* die es erlauben, einen gesuchten Wert für *X̅_{Ziel}* darzustellen. Unter Verwendung der Gleichungen (3) bis (6) lässt sich obige Gleichung zu folgender Forderung umformen:
Finde *t*_{01,*c*} ∈ [0: τ*_{c}*] mit *c* ∈ {*r,g,b*}*,* so dass ∥*X̅_{Ziel}* - *̅X̅*̅_{1→3*DMD*}(*t*₀₁*_{,r}, t*_{01,}*g, t*_{01,*b*})∥ minimal wird mit ${\vec{X}}_{1 \to 3 DMD} \left({t}_{01 , r}, {t}_{01 , g}, {t}_{01 , b}\right) = \frac{1}{τ} ⋅ {\sum }_{c ∈ \left(r, g, b\right)} \left\{\left({τ}_{c}-{t}_{01 , c}\right)⋅{\vec{X}}_{00 , c}+{t}_{01 , c}⋅{\vec{X}}_{01 , c}\right\}$

Dabei sind ${\vec{X}}_{00 , c} = \int dλ I \left(λ\right) ⋅ {T}_{O} \left(λ\right) ⋅ {D}_{1} \left(λ,"black"\right) ⋅ {D}_{2 c} \left(λ,"black"\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$ ${\vec{X}}_{01 , c} = \int dλ I \left(λ\right) ⋅ {T}_{O} \left(λ\right) ⋅ {D}_{1} \left(λ,"black"\right) ⋅ {D}_{2 c} \left(λ,"white"\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$

Bei diesen Vektoren *̅X̅*̅_{00,*c*} und *̅X̅*̅_{01,*c*} handelt es sich um Größen, die beispielsweise experimentell für den Projektor 1 bestimmt werden können.

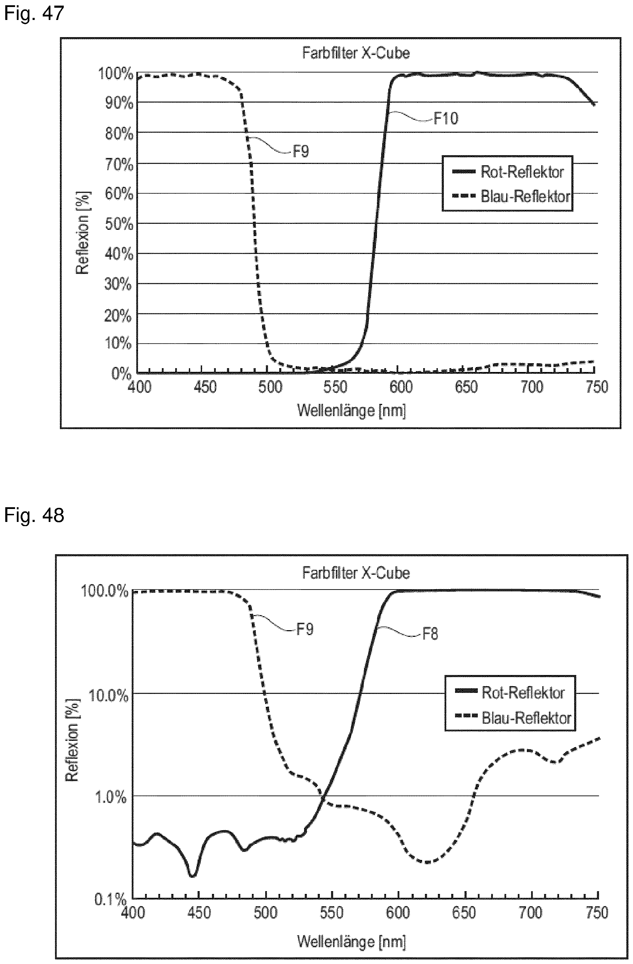

Verwendet man wieder die Spektren für Lampe, DMDs und Optik, wie sie beim Projektor 201 mit Doppelmodulation nach dem Stand der Technik angewendet wurden (die Spektren der Farbkanäle des Farbteilerwürfels 50 bzw. des X-Cubes 50 sind in Fig. 47 und 48 dargestellt; daraus lässt sich *T_{C,c}*(*λ*) errechnen), so lassen sich die Zeiten *t*₀₁*_{,r}, t*_{01,}*_{g}, t*_{01*,b*} berechnen, um die gegebenen Ziel-Farben dann möglichst genau zu projizieren. In Fig. 47 und 48 ist die Reflexion des Rot-Reflektors als durchgezogene Linie F8 und die Reflexion des Blau-Reflektors als gepunktete Linie F9 eingezeichnet, wobei die Wellenlänge in nm entlang der x-Achse und die Reflexion entlang der y-Achse aufgetragen ist. In Fig. 47 ist die Reflexion linear aufgetragen und in Fig. 48 ist die Reflexion logarithmisch aufgetragen.

Die Zeiten lassen sich wieder über Gleichung (16) in Grauwerte der jeweiligen Farben umrechnen. In der Regel ergeben sich dabei keine natürlichen Zahlen zwischen 0 und 255. Hier sind entweder die nächsten natürlichen Zahlen als *g*_{2*r*},*g*_{2*g*},*g*_{2*b*} für den zweiten Modulator 5₁, 5₂, 5₃ zu wählen (bzw. den nächsten darstellbaren Grauwert, falls der Modulator eine höhere Bit-Tiefe als 8-bit). Alternativ kann der erforderliche Grauwert über ein räumliches und/oder zeitliches Dithering dargestellt werden.

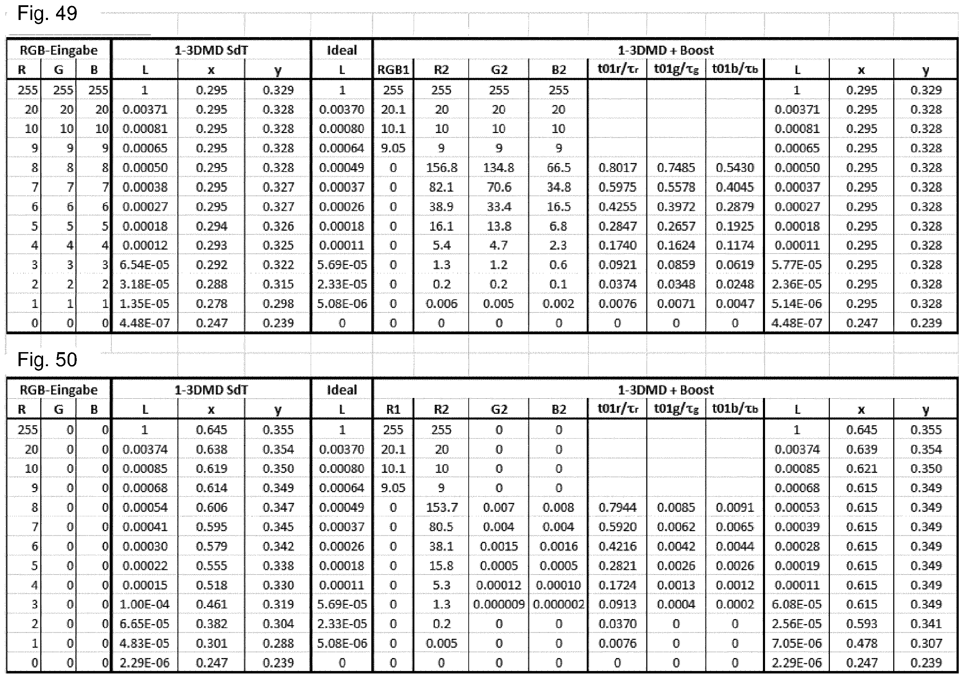

Die so errechneten Grauwerte für die Modulatoren 3, 5₁, 5₂, 5₃ sind in Fig. 49 für Weiß und in Fig. 50 für Rot in Abhängigkeit von RGB-Eingabewerten zusammengestellt. Dabei wird eine "1→3"-Anordnung ohne erfindungsgemäße Ansteuerung, die als 1-3 DMD SdT bezeichnet ist, mit dem erfindungsgemäßen Projektor 1 gemäß Fig. 46, der als 1-3 DMD + Boost bezeichnet ist, verglichen.

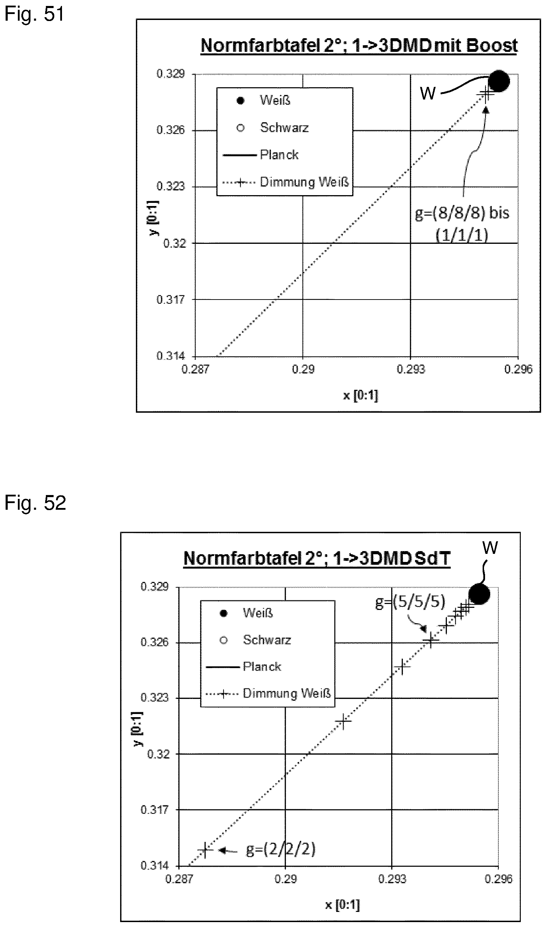

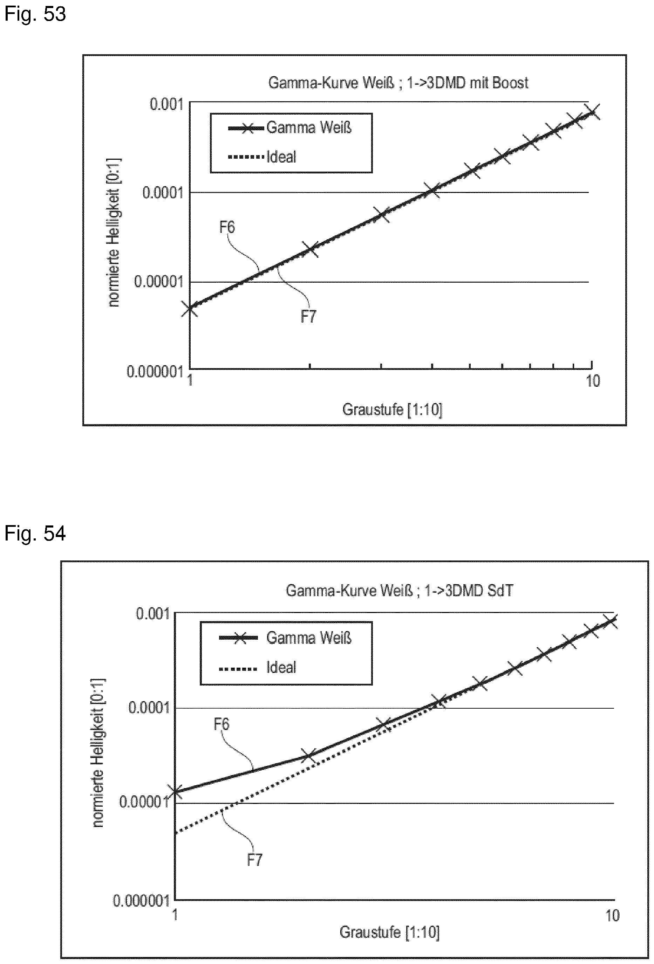

Die Stabilisierung des Farbortes bei dem erfindungsgemäßen Projektor 1 lässt sich auch einem Vergleich des relevanten Bereiches des Farbraums für die Dimmung von Weiß (255/255/255) nach Schwarz (0/0/0) für den Projektor 1 in Fig. 51 mit dem gleichen Bereich des Farbraums für einen Projektor mit "1→3"-Anordnung ohne die erfindungsgemäße Ansteuerung in Fig. 52 entnehmen. Die Darstellung in Fig. 51 und 26 entspricht z.B. der Darstellung in Fig. 41. Ein Vergleich der Gamma-Kurve für Weiß gemäß Fig. 53 für den erfindungsgemäßen Projektor 1 mit der entsprechenden Gamma-Kurve für Weiß für einen Stand der Technik "1 -3"-Projektor gemäß Fig. 54 für die Graustufen 1 bis 10 zeigt deutlich, wie gut mit dem erfindungsgemäßen Projektor 1 die ideale Gamma-Kurve F7 angenähert wird. In Fig. 53 und 54 sind die idealen Gamma-Kurven F7 jeweils gepunktet dargestellt und die tatsächlich erreichten Gamma-Kurven F6 mit durchgezogener Linie (in gleicher Weise wie z.B. in Fig. 42).

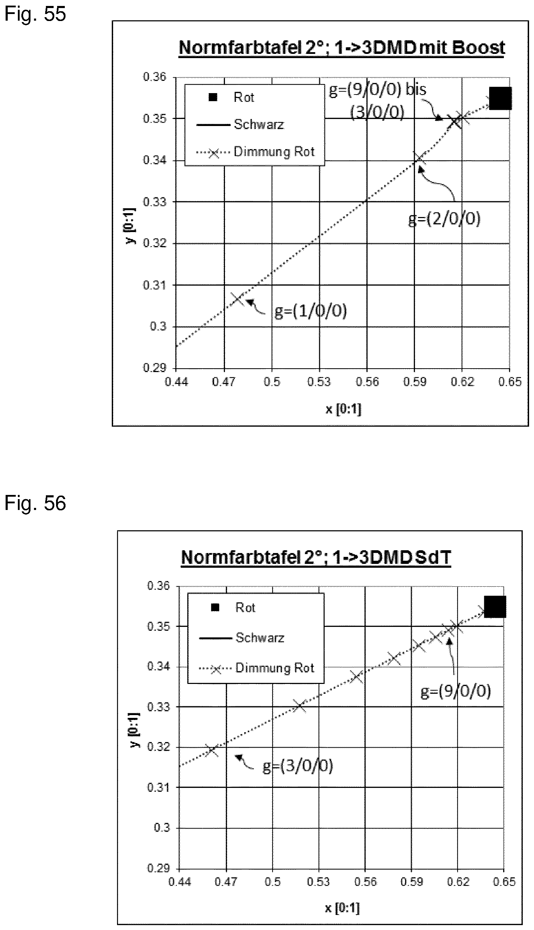

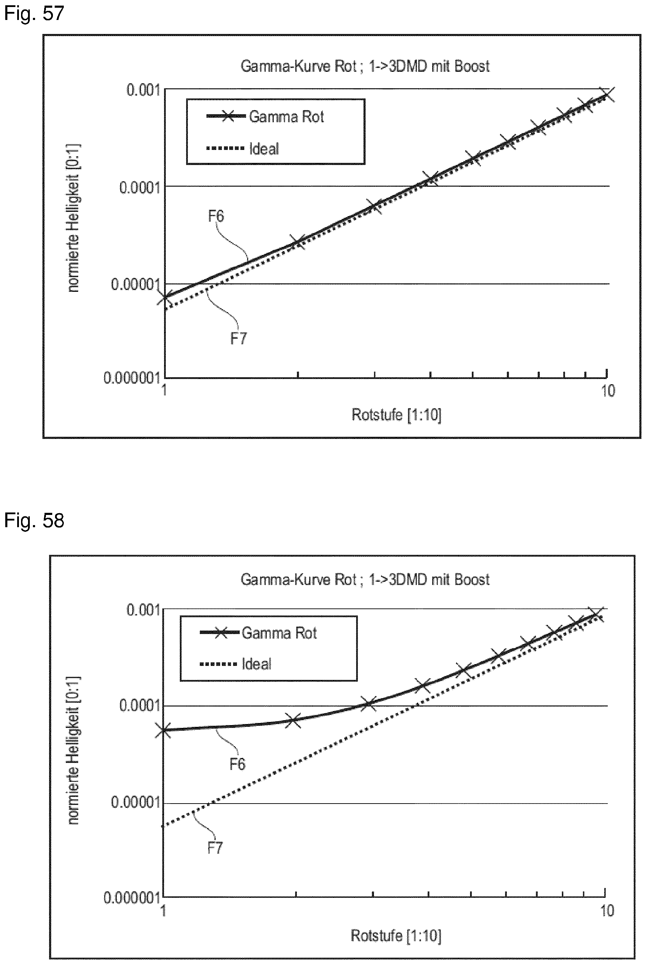

Bei diesem Ausführungsbeispiel zeigen sich noch einmal besonders die Vorteile der erfindungsgemäßen Lösung. Dies wird deutlich, wenn man die Dimmung von Farben betrachtet, die deutlich von Weiß verschieden sind. Für dunkle Rottöne beispielsweise wird - nach dem Stand der Technik - über den ersten Modulator 3 auch grünes und blaues Licht (entsprechend dem Kontrast in diesem Spektralbereich) weitergeleitet, das zu einer Entsättigung der Farben führt. Durch das hier vorgestellte Boosten bleibt der erste (für alle Farben gemeinsame) Modulator 3 auf Schwarz, während lediglich dessen Restlicht - in Farbkanäle aufgeteilt - von den zweiten Modulatoren manipuliert wird. Fig. 55 und 56 zeigen in gleicher Weise wie Fig. 51 und 52 nun die Dimmung von Rot (255/0/0) nach Schwarz (0/0/0) für den erfindungsgemäßen "1-3"-Projektor 1 (Fig. 55) und einem entsprechenden Stand der Technik "1-3"-Projektor in Fig. 56. Die Gamma-Kurve F6 für Rot für den erfindungsgemäßen "1-3"-Projektor 1 ist in Fig. 57 gezeigt. Die entsprechende Gamma-Kurve F6 für einen Stand der Technik "1 -3"-Projektor ist in Fig. 58 gezeigt. Hier sind wieder die tatsächlichen Gamma-Kurven F6 mit durchgezogener Linie und die idealen Gamma-Kurven F7 gepunktet in gleicher Weise, wie in Fig. 53 und 54 dargestellt. Ein Vergleich der Figuren 31 und 32 zeigt deutlich, welche Verbesserung mit dem erfindungsgemäßen Projektor 1 erreicht wird. Im Übrigen kann auf die Zahlen in Fig. 50 verwiesen werden.

Auch der Projektor 1 gemäß Fig. 46 weist einen roten, einen grünen und einen blauen Farbkanal auf, wobei der erste Modulator 3 Bestandteil von allen drei Farbkanälen ist. Der Abbildungsmodulator 5₁ ist Teil des roten Farbkanals, der Abbildungsmodulator 5₂ ist Teil des grünen Farbkanals und der Abbildungsmodulator 5₃ ist Teil des blauen Farbkanals.

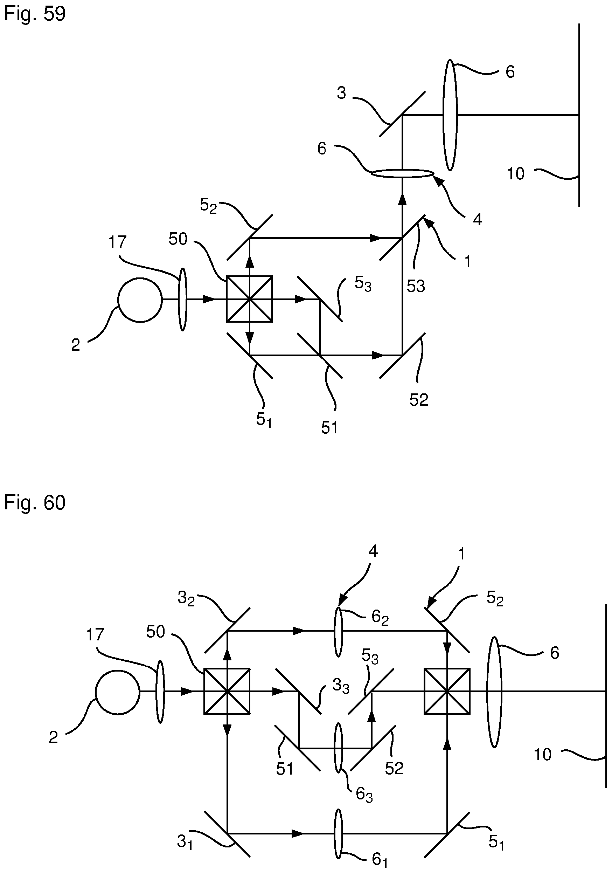

Das Licht der Lichtquelle 2 kann alternativ auch zunächst spektral aufgespalten werden, anschließend über drei Abbildungsmodulatoren 5₁, 5₂, 5₃ gelenkt, anschließend vereinigt und über einen "Clean-Up"-Modulator 3 geleitet und schließlich projiziert werden, wie in Fig. 59 (zur Vereinfachung der Darstellung ist die Steuereinheit 7 nicht eingezeichnet) gezeigt ist. In der obigen Beschreibung des Modulators 1 von Fig. 46 und den Formeln sind lediglich "Beleuchtungsmodulator" und "Clean-Up"-Modulator auszutauschen.

Bei diesem Ausführungsbeispiel ist der "Clean-Up"-Modulator 3 Teil in allen drei Farbkanälen. Der Abbildungsmodulator 5₁ ist Teil des roten Farbkanals, der Abbildungsmodulator 5₂ ist Teil des grünen Farbkanals und der Abbildungsmodulator 5₃ ist Teil des blauen Farbkanals.

In einem weiteren Ausführungsbeispiel wird ein Projektor 1 betrachtet (Fig. 60; zur Vereinfachung der Darstellung ist die Steuereinheit 7 nicht eingezeichnet), bei dem das Licht zunächst in einen roten, einen grünen und einen blauen Farbanteil aufgespalten wird. Anschließend wird das Licht über drei (farb-spezifische) Modulatoren 3₁, 3₂, 3₃ ("Beleuchtung") und nachfolgend über drei (ebenfalls farb-spezifische) Modulatoren 5₁, 5₂, 5₃ ("Abbildung") gelenkt. Darauf wird das Licht wieder zusammengeführt und über eine Projektionsoptik 6 an eine Projektionsfläche gelenkt 10. Bei den Modulatoren 3₁-3₃, 5₁-5₃ handelt es sich in diesem Beispiel um sechs DMDs. Bei diesem Ausführungsbeispiel sind die Modulatoren 3₁ und 5₁ Teil des roten Farbkanals, die Modulatoren 3₂ und 5₂ Teil des grünen Farbkanals und die Modulatoren 3₃ und 5₃ Teil des blauen Farbkanals.

Bei einer solchen "3→3"-Anordnung lässt sich Gleichung (21) schreiben als: $\begin{matrix}{S}_{3 \to 3} \left(λ, {g}_{1 r}, {g}_{1 g}, {g}_{1 b}, {g}_{2 r}, {g}_{2 g}, {g}_{2 b}\right) = {\int }_{Frame} d t I \left(λ\right) ⋅ {T}_{O} \left(λ\right) ⋅ \\ {\sum }_{Farben c ∈ \left(r, g, b\right)} {T}_{C , c} \left(λ\right) ⋅ {D}_{1 c} \left(t, λ, {g}_{1 c}\right) ⋅ {D}_{2 c} \left(t, λ, {g}_{2 c}\right)\end{matrix}$

Hierbei sei in *T_{C,c}*(*λ*) die Transmission für den Farbkanal c ∈ (*r,g,b*) inclusive der Farbteiler und Farbvereiniger. *D*_{1*c*}(*t,λ,g*_{1*c*}) und *D*_{2*c*}(*t,λ,g*_{2*c*}) beschreiben die Reflektivitäten der drei Beleuchtungs- und Abbildungs-DMDs 3₁-3₃, 5₁-5₃.

Für die Darstellung von hellen Bildinhalten werden die Beleuchtungs-DMDs 3₁-3₃ mindestens zu den Zeiten auf Weiß stehen, wenn der farblich zugeordnete *Abbildungs*-DMD 5₁-5₃ auf Weiß steht (analog zu einem 1→1DMD System).

Schreibt man Gleichung (29) in einer Darstellung mit DMD-Zeiten, so gilt für die Darstellung dunkler Bildinhalte mittels Boost (analog zu (25) im ersten Ausführungsbeispiel): ${S}_{3 \to 3 DMD} \left(λ, {t}_{01 , r}, {t}_{01 , g}, {t}_{01 , b}\right) = \frac{1}{τ} ⋅ I \left(λ\right) ⋅ {T}_{O} \left(λ\right) ⋅ {\sum }_{c ∈ \left(r, g, b\right)} {T}_{C , c} \left(λ\right) ⋅ {D}_{1 c} \left(λ,"black"\right) ⋅ \left\{\begin{matrix}\left(τ-{t}_{01 , c}\right) ⋅ \\ {D}_{2 c} \left(λ,"black"\right) + {t}_{01 , c} ⋅ {D}_{2 c} \left(λ,"white"\right)\end{matrix}\right\}$

Dabei ist *τ* = τ*ᵣ* = *τ_{g}* = τ*_{b}.*

Gesucht sind nun wieder die Zeiten *t*₀₁*_{,r}, t*_{01,*g*}, *t*_{01*,b*}, die es erlauben, einen gesuchten Wert für *X̅_{Ziel}* darzustellen. Unter Verwendung der Gleichungen (3) bis (6) lässt sich obige Gleichung zu folgender Forderung umformen:
Finde *t*_{01,*c*} ∈ [0: τ*_{c}*] mit *c* ∈ {*r,g,b*}*,* so dass ∥*X̅_{Ziel}* - *X̅_{3→3DMD}*(*t*₀₁*_{,r}, t*_{01*,g*}, *t*_{01*,b*})∥ minimal wird mit ${\vec{X}}_{3 \to 3 DMD} \left({t}_{01 , r}, {t}_{01 , g}, {t}_{01 , b}\right) = \frac{1}{τ} ⋅ {\sum }_{c ∈ \left(r, g, b\right)} \left\{\left({τ}_{c}-{t}_{01 , c}\right)⋅{\vec{X}}_{00 , c}+{t}_{01 , c}⋅{\vec{X}}_{01 , c}\right\}$

Dabei sind ${\vec{X}}_{00 , c} = \int dλ I \left(λ\right) ⋅ {T}_{O} \left(λ\right) ⋅ {D}_{1 c} \left(λ,"black"\right) ⋅ {D}_{2 c} \left(λ,"black"\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$ ${\vec{X}}_{01 , c} = \int dλ I \left(λ\right) ⋅ {T}_{O} \left(λ\right) ⋅ {D}_{1 c} \left(λ,"black"\right) ⋅ {D}_{2 c} \left(λ,"white"\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$

Bei diesen Vektoren *̅X̅*̅_{00,*c*} und *̅X̅*̅_{01,*c*} handelt es sich um Größen, die beispielsweise experimentell für einen Projektor 1 gemäß Fig. 60 bestimmt werden können.

Nachfolgend werden Ausführungsbeispiele beschrieben, bei denen Bildgeber bzw. Modulatoren verwendet werden, die die Helligkeiten über eine Dämpfung einstellen. Für solche Bildgeber, die während eines gesamten Frames Licht in Abhängigkeit des Grauwertes dämpfen, kann auf eine Zeitabhängigkeit in den Formeln verzichtet werden. Typischerweise handelt es sich hier um Systeme mit LCD- oder LCoS- Bildgebern.

Die Transmission (oder Reflektivität bei einem LCoS) kann man vereinfacht dadurch beschreiben, dass es eine Untergrund-Transmission *U* gibt sowie einen modulierte Transmission *T_{D}*(*λ*): ${D}_{D} \left(λ, g\right) = U \left(λ\right) + {\left(\frac{g}{255}\right)}^{γ} ⋅ {T}_{D} \left(λ\right)$

Es gibt keine Zeitabhängigkeit, da während eines Frames die Transmission konstant bleibt (der Einfachheit halber nehmen wir an, dass "gebrochene" Grauwerte *g* über ein zeitliches Dithering darstellen kann; eine explizite Zeitabhängigkeit kann so entfallen). *y* entspricht dem Wert für Gamma, der in nachfolgenden Beispiel als 2,2 gewählt wird und den Zusammenhang zwischen Eingabe-Graustufe und der resultierenden Helligkeit wiedergibt.

Analog zu Gleichung (13) für Bildgeber mit Pulsweitenmodulation lässt sich eine Doppelmodulation für dämpfende Bildgeber schreiben als: $\begin{matrix}{S}_{D , Doppel} \left(λ, {g}_{1 r}, {g}_{1 g}, {g}_{1 b}, {g}_{2 r}, {g}_{2 g}, {g}_{2 b}\right) = {\sum }_{Farben c ∈ \left(r, g, b\right)} I \left(λ\right) ⋅ {T}_{C} \left(c, λ\right) ⋅ {D}_{D 1} \left(t, λ, {g}_{1 c}\right) ⋅ \\ {D}_{D 2} \left(t, λ, {g}_{2 c}\right) ⋅ {T}_{O} \left(λ\right)\end{matrix}$

Eine mögliche Anordnung ist analog zum Projektor 1 gemäß Fig. 46 und besitzt einen ersten Modulator 3, der drei weitere (farbige) Modulatoren 5₁, 5₂, 5₃ (Modulatoren für die Farben Rot, Grün und Blau) beleuchtet. Die Modulatoren 3 und 5₁-5₃ von Fig. 46 sind bei dem nun beschriebenen Ausführungsbeispiel LCD- oder LCoS-Modulatoren. Es ergibt sich: ${S}_{D , 1 \to 3} \left(λ, {g}_{1}, {g}_{2 r}, {g}_{2 g}, {g}_{2 b}\right) = I \left(λ\right) ⋅ {D}_{D 1} \left(λ, {g}_{1}\right) ⋅ {T}_{O} \left(λ\right) ⋅ {\sum }_{Farben c ∈ \left(r, g, b\right)} {T}_{C , c} \left(λ\right) ⋅ {D}_{D 2 c} \left(λ, {g}_{2 c}\right)$

Für dunkle Bildinhalte kann auch hier geboostet werden, indem der erste (gemeinsame) Modulator 3 auf Schwarz geschaltet wird. Unter Verwendung von (43) ergibt sich: ${S}_{D , 1 \to 3} \left(λ, {g}_{2 r}, {g}_{2 g}, {g}_{2 b}\right) = I \left(λ\right) ⋅ {U}_{1} \left(λ\right) ⋅ {T}_{O} \left(λ\right) ⋅ {\sum }_{c ∈ \left(r, g, b\right)} {T}_{C , c} \left(λ\right) ⋅ \left\{{U}_{2 c}\left(λ\right)+{\left(\frac{{g}_{2 c}}{255}\right)}^{γ}⋅{T}_{D 2 c}\left(λ\right)\right\}$

Gesucht sind nun die Größen *g*_{2*r*},*g*_{2*g*},*g*_{2*b*}, die es erlauben, einen gesuchten Wert für *X̅_{Ziel}* darzustellen. Unter Verwendung der Gleichungen (3) bis (6) lässt sich obige Gleichung zu folgender Forderung umformen:
Finde *g*_{2,*c*} ∈ [0:255] mit *c* ∈ {*r,g,b*}*,* so dass ∥*X̅_{Ziel}* -*̅X̅*̅_{*D*,1→3}(*g*_{2*r*},*g*_{2*g*},*g*_{2*b*})∥ minimal wird mit ${\vec{X}}_{D , 1 \to 3} \left({g}_{2 r}, {g}_{2 g}, {g}_{2 b}\right) = {\sum }_{c ∈ \left(r, g, b\right)} \left\{\left(1-{\left(\frac{{g}_{2 c}}{255}\right)}^{γ}\right)⋅{\vec{X}}_{00 , c}+{\left(\frac{{g}_{2 c}}{255}\right)}^{γ}⋅{\vec{X}}_{01 , c}\right\}$

Dabei sind ${\vec{X}}_{00 , c} = \int dλ I \left(λ\right) ⋅ {T}_{O} \left(λ\right) ⋅ {U}_{1} \left(λ\right) ⋅ {U}_{2 c} \left(λ\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$ ${\vec{X}}_{01 , c} = \int dλ I \left(λ\right) ⋅ {T}_{O} \left(λ\right) ⋅ {U}_{1} \left(λ\right) ⋅ {T}_{D 2 c} \left(λ\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$

Bei diesen Vektoren *̅X̅*̅_{00,*c*} und *̅X̅*̅_{01,*c*} handelt es sich um Größen, die beispielsweise experimentell für den Projektor 1 bestimmt werden können.

Es handelt sich hier also wieder um ein lineares Gleichungssystem für die Größen ${\left(\frac{{g}_{2 r}}{255}\right)}^{γ}$ , ${\left(\frac{{g}_{2 g}}{255}\right)}^{γ}$ und ${\left(\frac{{g}_{2 b}}{255}\right)}^{γ}$, das nach den gesuchten Grauwerten *g*_{2*r*},*g*_{2*g*},*g*_{2*b*} aufgelöst werden kann.

Die Ausführungen gelten Analog für eine Anordnung, bei der das Licht zunächst aufgespalten und über drei Bildgeber 5₁, 5₂, 5₃ geführt wird, um anschließend vereinigt und über einen "Clean-Up"-Modulator 3 geleiten zu werden (wie z. B. in Fig. 60).

Eine weitere mögliche Anordnung für LCD- oder LCoS-Modulatoren ist analog zum Projektor 1 gemäß Fig. 60 und besitzt drei erste (farbige) Modulatoren 3₁, 3₂, 3₃, denen drei weitere (farbige) Modulatoren 5₁, 5₂, 5₃ nachgeordnet sind. Es ergibt sich: $\begin{matrix}{S}_{D , 3 \to 3} \left(λ, {g}_{1 r}, {g}_{1 g}, {g}_{1 b}, {g}_{2 r}, {g}_{2 g}, {g}_{2 b}\right) = I \left(λ\right) ⋅ {T}_{O} \left(λ\right) ⋅ {\sum }_{Farben c ∈ \left(r, g, b\right)} {D}_{D 1 c} \left(λ, {g}_{1 c}\right) . \\ {T}_{C , c} \left(λ\right) ⋅ {D}_{D 2 c} \left(λ, {g}_{2 c}\right)\end{matrix}$

Für dunkle Bildinhalte kann auch hier geboostet werden, indem die ersten Modulatoren 3₁-3₃ auf Schwarz geschaltet werden. Unter Verwendung von (43) ergibt sich: ${S}_{D , 3 \to 3} \left(λ, {g}_{2 r}, {g}_{2 g}, {g}_{2 b}\right) = I \left(λ\right) ⋅ {U}_{1 c} \left(λ\right) ⋅ {T}_{O} \left(λ\right) ⋅ {\sum }_{c ∈ \left(r, g, b\right)} {T}_{C , c} \left(λ\right) ⋅ \left\{{U}_{2 c}\left(λ\right)+{\left(\frac{{g}_{2 C}}{255}\right)}^{γ}⋅{T}_{D 2 c}\left(λ\right)\right\}$

Gesucht sind nun wieder die Größen *g*_{2*r*},*g*_{2*g*},*g*_{2*b*}, die es erlauben, einen gesuchten Wert für *X̅_{Ziel}* darzustellen. Unter Verwendung der Gleichungen (3) bis (6) lässt sich obige Gleichung zu folgender Forderung umformen:
Finde *g*_{2,*c*} ∈ [0:255] mit *c* ∈ {*r,g,b*}*,* so dass ∥*X̅_{Ziel}* -*̅X̅*̅_{*D*,3→3}(*g*_{2*r*},*g*_{2*g*},*g*_{2*b*})∥ minimal wird mit ${\vec{X}}_{D , 3 \to 3} \left({g}_{2 r}, {g}_{2 g}, {g}_{2 b}\right) = {\sum }_{c ∈ \left(r, g, b\right)} \left\{\left(1-{\left(\frac{{g}_{2 C}}{255}\right)}^{γ}\right)⋅{\vec{X}}_{00 , c}+{\left(\frac{{g}_{2 C}}{255}\right)}^{γ}⋅{\vec{X}}_{01 , c}\right\}$

Dabei sind ${\vec{X}}_{00 , c} = \int dλ I \left(λ\right) ⋅ {T}_{O} \left(λ\right) ⋅ {U}_{1 c} \left(λ\right) ⋅ {U}_{2 c} \left(λ\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$ ${\vec{X}}_{01 , c} = \int dλ I \left(λ\right) ⋅ {T}_{O} \left(λ\right) ⋅ {U}_{1 c} \left(λ\right) ⋅ {T}_{D 2 c} \left(λ\right) ⋅ {T}_{C , c} \left(λ\right) ⋅ \left(\begin{matrix}\overline{x} \left(λ\right) \\ \overline{y} \left(λ\right) \\ \overline{z} \left(λ\right)\end{matrix}\right)$

Bei diesen Vektoren *̅X̅*̅_{00,*c*} und *̅X̅*̅_{01,*c*} handelt es sich um Größen, die beispielsweise experimentell für ein Projektionssystem 1 bestimmt werden können.

Es handelt sich hier also wieder um ein lineares Gleichungssystem für die Größen ${\left(\frac{{g}_{2 r}}{255}\right)}^{γ}$ , ${\left(\frac{{g}_{2 g}}{255}\right)}^{γ}$ und ${\left(\frac{{g}_{2 b}}{255}\right)}^{γ}$, das nach den gesuchten Grauwerten *g*_{2*r*},*g*_{2*g*},*g*_{2*b*} aufgelöst werden kann.

In der Beschreibung wurde in den Beispielen nur auf ein Dimmen von Weiß und Rot eingegangen. Generell ermöglicht eine Doppelmodulation auch eine geringere Entsättigung der Primärfarben bei Dimmung. Der Effekt ist umso besser, je kürzer die Beleuchtung für dunkle Farben sein kann. Deutlich wird der Vorteil insbesondere bei 1->3DMDs-Anordnung (siehe z. B. Fig. 49 und 24).

Bei dem Projektor 201 mit Doppelmodulation gemäß Fig. 39 nach dem Stand der Technik wird keine Modulation von Restlicht durchgeführt; dort sind für nicht-schwarze Bildinhalte beide Bildgeber nicht auf Schwarz gestellt.

Sollte ein Boosten so durchgeführt werden, dass für die geboosteten Grauwerte lediglich ein Faktor angegeben ist, um den diese Grauwerte größer sein müssen, würde die gewünschte Korrektur der Farbortvariation zu schlechten Ergebnissen führen. Gründe dafür sind:
Selbst die geboosteten Primärfarben besitzen einen anderen Farbort als die originalen Primärfarben. Ein Faktor kann daher nur die Helligkeitsunterschiede und nicht die Farbe berücksichtigen.

Auch der zweite Modulator (der, der boostet) besitzt einen endlichen Kontrast. Daher müssen dunkle geboostete Werte dunkler dargestellt werden, als es sich über den Faktor ergibt.

Die beiden genannten Gründe werden umso wichtiger, je mehr der Schwarzpunkt vom Weißpunkt abweicht und je geringer der Kontrast des zweiten (boostenden) Modulators ist.

Es sollten wenigstens Faktoren vorgegeben werden, die für jede Farbe anders sind.

Um die Helligkeiten bei dunklen aber nicht-geboosteten Werten richtig zu erzeugen (die typischerweise zu hell sind, wenn man auf den zweiten Bildgeber direkt die RGB-Eingabewerte weiterleitet), kann man auch hier schon die auf den zweiten Bildgeber ausgegebenen Wert dämpfen. Das lässt sich auch schon aus dem beschriebenen Formalismus nach Gleichung (11) ableiten.

Die vorgestellt Lösung ist auch für Systeme anwendbar, die Sekundärfarben (oder Spokes) aufweisen. Die Lösungen für eine Ansteuerung der geboosteten Werte bleiben eindeutig, wenn man sich auf ein Boosten über die Primärfarben beschränkt (linearer Zusammenhang zwischen drei Werte von Farbvalenzen der Zielfarbe und drei Grauwerte für Primärfarben).

In den Ausführungsbeispielen mit DMDs als Modulatoren ist es nicht notwendig, dass es sich bei allen Modulatoren um DMDs handelt. Da einer der Modulatoren der Doppelmodulation auf Schwarz steht, kann es sich bei diesem auch um einen Modulator auf Basis von Dimmung (wie z.B. LCD oder LCoS) handeln. Lediglich die Betrachtungen zu den ON- und OFF-Zeiten sind DMD-spezifisch.

Es ist nicht notwendig, nur dann zu Boosten, wenn alle drei Farbanteile geboostet werden können (also dunkler sind als der Kontrast des ersten Modulators). Vielmehr kann der Formelapparat auch dann verwendet werden, wenn lediglich eine oder zwei der drei Farben geboostet werden können. In diesem Fall, sind die Zeiten *t*_{11,*c*} und *t*_{10,*c*} der entsprechenden Farbe c ungleich Null. Aufgrund der Diskretisierung bei einer Darstellung von Farben gibt es auch hier eine Lösung für die (mehr als drei gesuchten Zeiten), die zu einer minimalen Farb- und Helligkeits-Abweichung führt (bzw. eine Lösung, die besser ist als nach dem Stand der Technik).

Prinzipiell kann man auch mit LCD oder LCoS eine farbsequenzielle Bildgebung durchführen. In dem Fall kann in den Formeln die relative Dauer der Farben über einen Vorfaktor berücksichtigt werden.

Der Formelapparat lässt sich auch auf Systeme übertragen, bei denen die Farben über farbige Lichtquellen (wie Laser, LED, Laser-Phosphor, ...) erzeugt werden. In diesem Fall sind oben genannten Spektren für Lichtquelle und Farbfilter in einem einzigen Spektrum für die farbige Lichtquelle zusammenzufassen.

## Patentansprüche

1. Projektor zum Projizieren eines Bildes, mit
einen erstem Modulator (3), der mehrere erste Pixel (K1) aufweist, die mit Licht einer Lichtquelle (2) beaufschlagbar sind,
einem zweiten Modulator (5), der dem ersten Modulator (3) nachgeordnet ist und mehrere zweite Pixel (K2) aufweist,
und einer Abbildungsoptik (4), die den ersten Modulator (3) auf den zweiten Modulator (5) abbildet,
wobei die ersten und zweiten Pixel (K1, K2) voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar sind, um das Licht zur Erzeugung des Bildes pixelindividuell zu modulieren,
wobei der Projektor (1) ferner eine Projektionsoptik (6), die vom zweiten Modulator (5) kommendes Licht auf eine Projektionsfläche (10) abbildet, um das Bild zu projizieren, wodurch jedes zweite Pixel einem Bildpunkt des projizierten Bildes zugeordnet ist,
und eine Steuereinheit (7), die die beiden Modulatoren (3, 5) anhand von zugeführten Bilddaten (BD) ansteuert, aufweist,
wobei die Steuereinheit die Modulatoren (3, 5) für den Bereich der minimal möglichen bis maximal möglichen Helligkeit der Bilddaten (BD) mit einer ersten Auflösung von NN Stufen ansteuert, wobei NN eine ganze Zahl größer als eins ist,
wobei jedem zweiten Pixel (K2) mindestens ein erstes Pixel (K1) in der Art zugeordnet ist, dass die Abbildungsoptik (4) das zweite Pixel (K2)
a) mit Licht vom jeweils zugeordneten ersten Pixel (K1) beaufschlagt, wenn das zugeordnete erste Pixel (K1) in den ersten Zustand geschaltet ist, um das zweite Pixel (K2) aktiv zu beleuchten, und
b) nicht mit Licht vom jeweils zugeordneten ersten Pixel (K1) beaufschlagt, wenn das zugeordnete erste Pixel (K1) in den zweiten Zustand geschaltet ist, um das zweite Pixel (K2) nicht aktiv zu beleuchten, so dass nur nicht zu vermeidendes Restlicht auf das zweite Pixel (K2) fällt, wobei die Steuereinheit (7) die Modulatoren (3, 5) so ansteuert, dass für mindestens ein zweites Pixel, das einem Bildpunkt zugeordnet ist, der basierend auf den Bilddaten (BD) einen Helligkeitswert aufweisen soll, der größer als Null ist,
c) das mindestens eine zweite Pixel in den zweiten Zustand geschaltet wird und das bzw. die zugeordneten ersten Pixel (K1) nur während des oder der Zeitabschnitte, in denen das mindestens eine zweite Pixel (K2) in den zweiten Zustand geschaltet wird, zur Helligkeitsmodulation in den ersten Zustand geschaltet wird bzw. werden, so dass dann vom mindestens einen zweiten Pixel moduliertes Restlicht ausgeht, das zur Bilderzeugung beiträgt, wobei die Steuereinheit (7) das bzw. die zugeordneten ersten Pixel (K1) basierend auf einem erhöhten Helligkeitswert ansteuert, oder
d) das bzw. die zugeordneten ersten Pixel (K1) mindestens zu den Zeitabschnitten, in denen das mindestens eine zweite Pixel (K2) in den ersten Zustand geschaltet wird, in den zweiten Zustand geschaltet ist bzw. sind, so dass keine aktive Beleuchtung erfolgt und das mindestens eine zweite Pixel (K2) das Restlicht moduliert, wobei die Steuereinheit (7) das das Restlicht modulierende zweite Pixel (K2) basierend auf einem erhöhten Helligkeitswert ansteuert,
**dadurch gekennzeichnet, dass**
die Steuereinheit (7)
A) eine vorgegebene Helligkeitsänderung auf den Helligkeitswert gemäß den Bilddaten (BD) für den Bildpunkt so anwendet, dass ein geänderter Helligkeitswert mit einer zweiten Auflösung, die größer ist als die erste Auflösung, berechnet wird, und
B) den geänderten Helligkeitswert so in den erhöhten Helligkeitswert umsetzt, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten (BD) angewendet wird, so dass die Steuereinheit (7) einen der Modulatoren (3, 5) im Schritt c) oder d) mit dem erhöhten Helligkeitswert mit der ersten Auflösung ansteuert.

2. Projektor nach Anspruch 1, bei dem die Berechnungseinheit zur Berechnung des geänderten Helligkeitswertes den Helligkeitswert gemäß den Bilddaten (BD) mit einem die Helligkeitsänderung bestimmenden Wert multipliziert.

3. Projektor nach Anspruch 1 oder 2, bei dem für jeden Bildpunkt eine individuelle Helligkeitsänderung hinterlegt ist, auf die Berechnungseinheit bei der Berechnung des geänderten Helligkeitswertes zugreift.

4. Projektor nach einem der obigen Ansprüche, bei dem die Helligkeitsänderung eine Helligkeitsreduzierung ist.

5. Projektor nach einem der obigen Ansprüche, bei dem die Helligkeitsänderung angewendet wird, um eine Anpassung der Helligkeit in einem Bildfeld-Überlappungsbereich mit einem weiteren Projektor und/oder ein Anpassung an die Helligkeit eines weiteren Projektors durchzuführen.

6. Projektor nach einem der obigen Ansprüche, bei dem die Helligkeitsänderung angewendet wird, um eine durch eine Variation der Größe der auf die Projektionsfläche abgebildeten zweiten Pixeln bedingte Variation der Helligkeit der abgebildeten zweiten Pixel zu kompensieren.

7. Projektor nach einem der obigen Ansprüche, bei dem der erhöhte Helligkeitswert mindestens das 10-fache des Helligkeitswerts des Vergleichswertes beträgt, wenn NN gleich 256 ist.

8. Projektor nach einem der obigen Ansprüche, bei dem die Steuereinheit (7) die beiden Modulatoren (3, 5) mittels pulsweitenmodulierter Steuerdaten (MS, WS) ansteuert.

9. Projektor nach einem der obigen Ansprüche, bei dem Steuereinheit (7)
im Schritt A) eine vorgegebene Helligkeitsänderung auf den Helligkeitswert gemäß den Bilddaten (BD) für jeden Bildpunkt so anwendet, dass ein geänderter Helligkeitswert mit einer zweiten Auflösung, die größer ist als die erste Auflösung, berechnet wird, und den geänderten Helligkeitswert mit einem Boost-Schwellwert vergleicht und,
wenn der geänderte Helligkeitswert kleiner als der Boost-Schwellwert ist, den Schritt B) ausführt.

10. Projektor nach Anspruch 9, bei dem die Steuereinheit (7), wenn der geänderte Helligkeitswert gleich groß oder größer als der Boost-Schwellwert, den geänderten Helligkeitswert in einen Helligkeitswert mit der ersten Auflösung umsetzt, ohne eine zusätzliche Erhöhung durchzuführen.

11. Projektor nach Anspruch 9 oder 10, bei dem die Steuereinheit (7) das zumindest eine zweite Pixel (K2), das das Restlicht gemäß Schritt c) moduliert, durch folgende Schritte bestimmt:
I) es wird zumindest ein zweites Pixel (K2) ausgewählt, das einem Bildpunkt zugeordnet ist, dessen durch die Bilddaten (BD) und der vorgegebenen Helligkeitsänderung vorgegebener Helligkeitswert größer als Null und kleiner oder gleich dem Boost-Schwellwert ist, und
II) es wird ein ausgewähltes zweites Pixel (K2) als ein das Restlicht modulierendes zweites Pixel (K2) dann bestimmt, wenn alle zugeordneten ersten Pixel (K1) aufgrund der Bilddaten (BD) und der vorgegebenen Helligkeitsänderung jeweils gemäß eines Helligkeitswertes angesteuert werden, der kleiner ist als ein vorbestimmter zweiter Schwellwert,
wobei der zweite Schwellwert so gewählt ist, dass sich der bzw. die Zeitabschnitte, zu denen die ersten Pixel (K1) in den ersten Zustand zu schalten sind, nicht mit dem oder den Zeitabschnitten überlappen, zu denen das das Restlicht modulierende zweite Pixel in den ersten Zustand zu schalten ist, um das Restlicht zu modulieren.

12. Projektor nach Anspruch 11, bei dem die Steuereinheit (7) den Schritt II) für ein im Schritt I) ausgewähltes zweites Pixel (K2) nur ausführt, wenn zumindest eines von k Nachbarpixeln (K2) des ausgewählten zweiten Pixels (K2) einem Bildpunkt zugeordnet ist, dessen durch die Bilddaten (BD) und der vorgegebenen Helligkeitsänderung vorgegebenen Helligkeitswert größer als der Boost-Schwellwert ist, wobei k eine natürliche Zahl größer oder gleich 1 ist.

13. Projektor nach einem der obigen Ansprüche, mit
mehreren Farbkanälen, um Farbteilbilder des zu projizierenden Bildes zu erzeugen, wobei ein erster Farbkanal den ersten Modulator (3), den zweiten Modulator (5) und die Abbildungsoptik (4) aufweist und
wobei jeder weitere Farbkanal
- den ersten Modulator oder einen weiteren ersten Modulator (3), der mehrere erste Pixel aufweist, die voneinander unabhängig ansteuerbar sind, um Licht, mit dem der erste Modulator (3) beaufschlagbar ist, zu modulieren,
- die Abbildungsoptik (4) oder eine weitere Abbildungsoptik (4) und
- den zweiten Modulator (5) oder einen weiteren zweiten Modulator (5), der mehrere zweite Pixel aufweist, die voneinander unabhängig ansteuerbar sind, und der mit dem vom ersten Modulator (3) modulierten Licht mittels der Abbildungsoptik (4) beaufschlagbar ist und dieses mittels der zweiten Pixel moduliert, um ein Farbteilbild zu erzeugen, umfasst,
wobei die Steuereinheit (7) jeden Farbkanal so ansteuert, dass eines der Farbteilbilder erzeugt wird, und
die Projektionsoptik (6) die erzeugten Farbteilbilder so auf eine Projektionsfläche (10) abbildet, dass die Farbteilbilder als ein projiziertes mehrfarbiges Bild wahrnehmbar sind,
wobei jeder Farbkanal für die Erzeugung eines Farbteilbildes einer vorbestimmten Grundfarbe ausgebildet ist,
wobei der Farbort der vorbestimmten Grundfarbe mit der zur erzeugenden Helligkeit variiert und
wobei die Steuereinheit (7) jeden Farbkanal so ansteuert, dass für mindestens einen Bildpunkt im mehrfarbigen Bild, der gemäß den Bilddaten einen vorbestimmten Zielfarbort und eine vorbestimmte Zielhelligkeit aufweisen soll, die durch den Farbkanal oder die Farbkanäle bedingte Farbortverschiebung des vorbestimmten Zielfarborts unter Beibehaltung der Zielhelligkeit kompensiert wird.

14. Projektor nach Anspruch 13, bei dem
die Steuereinheit (7) bei der Ansteuerung der Farbkanäle mit abnehmender Zielhelligkeit eine größere Kompensation bewirkt.

15. Projektor nach Anspruch 13 oder 14, bei dem
die Steuereinheit (7) für mittels des Projektors (1) erzeugbare Zielfarborte mit zugeordneten Zielhelligkeiten vorbestimmte und abgespeicherte Korrekturwerte für die Farbkanäle aufweist, wobei die Steuereinheit (7) die Korrekturwerte bei der Ansteuerung der Farbkanäle zur Kompensation verwendet.

16. Projektor zum Projizieren eines Bildes, mit
einen erstem Modulator (3), der mehrere erste Pixel (K1) aufweist, die mit Licht einer Lichtquelle (2) beaufschlagbar sind,
einem zweiten Modulator (5), der dem ersten Modulator (3) nachgeordnet ist und mehrere zweite Pixel (K2) aufweist,
und einer Abbildungsoptik (4), die den ersten Modulator (3) auf den zweiten Modulator (5) abbildet,
wobei die ersten und zweiten Pixel (K1, K2) voneinander unabhängig jeweils in einen ersten Zustand, in dem auf sie treffendes Licht zur Bilderzeugung verwendet wird, und in einen zweiten Zustand, in dem auf sie treffendes Licht nicht zur Bilderzeugung dient, schaltbar sind, um das Licht zur Erzeugung des Bildes pixelindividuell zu modulieren,
wobei der Projektor (1) ferner eine Projektionsoptik (6), die vom zweiten Modulator (5) kommendes Licht auf eine Projektionsfläche (10) abbildet, um das Bild zu projizieren, wodurch jedes erste Pixel einem Bildpunkt des projizierten Bildes zugeordnet ist,
und eine Steuereinheit (7), die die beiden Modulatoren (3, 5) anhand von zugeführten Bilddaten (BD) ansteuert, aufweist,
wobei die Steuereinheit die Modulatoren (3, 5) für den Bereich der minimal möglichen bis maximal möglichen Helligkeit der Bilddaten (BD) mit einer ersten Auflösung von NN Stufen ansteuert, wobei NN eine ganze Zahl größer als eins ist,
wobei jedem ersten Pixel (K1) mindestens ein zweites Pixel (K2) in der Art zugeordnet ist, dass die Abbildungsoptik (4),
a) wenn das erste Pixel (K1) in den ersten Zustand geschaltet ist, das mindestens eine zweite Pixel (K2) mit Licht vom ersten Pixel (K1) beaufschlagt, um das zweite Pixel (K2) aktiv zu beleuchten, und
b) wenn das erste Pixel (K1) in den zweiten Zustand geschaltet ist, das mindestens eine zweite Pixel (K2) nicht mit Licht vom ersten Pixel Z (K1) beaufschlagt, um das zweite Pixel (K2) nicht aktiv zu beleuchten, so dass nur nicht zu vermeidendes Restlicht auf das zweite Pixel (K2) fällt, wobei die Steuereinheit (7) die Modulatoren (3, 5) so ansteuert, dass für mindestens ein erstes Pixel (K1), das einem Bildpunkt zugeordnet ist, der basierend auf den Bilddaten (BD) einen Helligkeitswert aufweisen soll, der größer als Null ist,
c) das mindestens eine erste Pixel (K1) in den zweiten Zustand geschaltet wird und das bzw. die zugeordneten zweiten Pixel (K2) nur während des oder der Zeitabschnitte, in denen das mindestens eine erste Pixel (K1) in den zweiten Zustand geschaltet wird, in den ersten Zustand geschaltet wird bzw. werden, so dass keine aktive Beleuchtung erfolgt und das bzw. die zugeordneten zweiten Pixel (K2) das Restlicht modulieren, wobei die Steuereinheit (7) das bzw. die das Restlicht modulierenden zweiten Pixel (K2) basierend auf einem erhöhten Helligkeitswert ansteuert, oder
d) das bzw. die zugeordneten zweiten Pixel (K2) mindestens zu den Zeitabschnitten, in denen das mindestens eine erste Pixel (K1) in den ersten Zustand geschaltet wird, zur Helligkeitsmodulation in den zweiten Zustand geschaltet ist bzw. sind, so dass dann von dem bzw. den zugeordneten zweiten Pixeln (K2) moduliertes Restlicht ausgeht, das zur Bilderzeugung beiträgt, wobei die Steuereinheit (7) das mindestens eine erste Pixel (K1) basierend auf einem erhöhten Helligkeitswert ansteuert,
**dadurch gekennzeichnet, dass**
die Steuereinheit (7)
A) eine vorgegebene Helligkeitsänderung auf den Helligkeitswert gemäß den Bilddaten (BD) für den Bildpunkt so anwendet, dass ein geänderter Helligkeitswert mit einer zweiten Auflösung, die größer ist als die erste Auflösung, berechnet wird, und
B) den geänderten Helligkeitswert so in den erhöhten Helligkeitswert umsetzt, dass er die erste Auflösung aufweist und größer ist als ein gedachter Vergleichswert mit der ersten Auflösung, der sich ergibt, wenn die vorgegebene Helligkeitsänderung auf den Helligkeitswert gemäß den Bilddaten (BD) angewendet wird, so dass die Steuereinheit (7) einen der Modulatoren (3, 5) im Schritt c) oder d) mit dem erhöhten Helligkeitswert mit der ersten Auflösung ansteuert.

## Claims

1. A projector for projecting an image, comprising
a first modulator (3), which has a plurality of first pixels (K1) capable of being impinged on by light from a light source (2),
a second modulator (5), which is disposed downstream of the first modulator (3) and has a plurality of second pixels (K2),
and an imaging optical unit (4), which images the first modulator (3) onto the second modulator (5),
wherein the first and second pixels (K1, K2) are switchable independently of one another in each case into a first state, in which light incident on them is used for image generation, and into a second state, in which light incident on them does not serve for image generation, in order pixel-individually to modulate the light for generating the image,
wherein the projector (1) furthermore has a projection optical unit (6), which images light coming from the second modulator (5) onto a projection surface (10) in order to project the image, as a result of which each second pixel is assigned to an image point of the projected image,
and a control unit (7), which drives the two modulators (3, 5) on the basis of supplied image data (BD),
wherein the control unit drives the modulators (3, 5) for the range of the minimum possible to the maximum possible brightness of the image data (BD) with a first resolution of NN levels, wherein NN is an integer greater than one,
wherein each second pixel (K2) is assigned at least one first pixel (K1) in such a way that the imaging optical unit (4) causes the second pixel (K2)
a) to be impinged on by light from the respectively assigned first pixel (K1) if the assigned first pixel (K1) is switched into the first state, in order actively to illuminate the second pixel (K2), and
b) not to be impinged on by light from the respectively assigned first pixel (K1) if the assigned first pixel (K1) is switched into the second state, in order not actively to illuminate the second pixel (K2), with the result that only unavoidable residual light is incident on the second pixel (K2),
wherein the control unit (7) drives the modulators (3, 5) such that for at least one second pixel which is assigned to an image point which, on the basis of the image data (BD), is intended to have a brightness value which is greater than zero,
c) the at least one second pixel is switched into the second state and the assigned first pixel(s) (K1) is or are switched into the first state for brightness modulation only during the time segment(s) in which the at least one second pixel (K2) is switched into the second state, with the result that residual light modulated by the at least one second pixel then emanates and contributes to the image generation, wherein the control unit (7) drives the assigned first pixel(s) (K1) on the basis of an increased brightness value, or
d) the assigned first pixel(s) (K1) is or are switched into the second state at least at the time segments in which the at least one second pixel (K2) is switched into the first state, with the result that no active illumination is effected and the at least one second pixel (K2) modules the residual light, wherein the control unit (7) drives the residual-light-modulating second pixel (K2) on the basis of an increased brightness value,
**characterized in that**
the control unit (7)
A) applies a predefined brightness change to the brightness value in accordance with the image data (BD) for the image point such that a changed brightness value having a second resolution, which is greater than the first resolution, is calculated, and
B) converts the changed brightness value into the increased brightness value such that it has the first resolution and is greater than a notional comparison value having the first resolution that arises if the predefined brightness change is applied to the brightness value in accordance with the image data (BD), with the result that the control unit (7) drives one of the modulators (3, 5) in step c) or d) with the increased brightness value having the first resolution.

2. The projector as claimed in claim 1, wherein the calculation unit for calculating the changed brightness value multiplies the brightness value in accordance with the image data (BD) by a value that determines the brightness change.

3. The projector as claimed in claim 1 or 2, wherein an individual brightness change is stored for each image point, and is accessed by the calculation unit during the calculation of the changed brightness value.

4. The projector as claimed in any of the preceding claims, wherein the brightness change is a brightness reduction.

5. The projector as claimed in any of the preceding claims, wherein the brightness change is applied in order to carry out an adaptation of the brightness in an image field overlap region with a further projector and/or an adaptation to the brightness of a further projector.

6. The projector as claimed in any of the preceding claims, wherein the brightness change is applied in order to compensate for a variation of the brightness of the imaged second pixels, said variation being caused by a variation of the size of the second pixels imaged onto the projection surface.

7. The projector as claimed in any of the preceding claims, wherein the increased brightness value is at least 10 times the brightness value of the comparison value if NN is equal to 256.

8. The projector as claimed in any of the preceding claims, wherein the control unit (7) drives the two modulators (3, 5) by means of pulse-width-modulated control data (MS, WS).

9. The projector as claimed in any of the preceding claims, wherein the control unit (7)
in step A) applies a predefined brightness change to the brightness value in accordance with the image data (BD) for each image point such that a changed brightness value having a second resolution, which is greater than the first resolution, is calculated, and compares the changed brightness value with a boost threshold value and,
if the changed brightness value is less than the boost threshold value, performs step B).

10. The projector as claimed in claim 9, wherein the control unit (7), if the changed brightness value is equal to or greater than the boost threshold value, converts the changed brightness value into a brightness value having the first resolution, without carrying out an additional increase.

11. The projector as claimed in claim 9 or 10, wherein the control unit (7) determines the at least one second pixel (K2) that modulates the residual light in accordance with step c) by means of the following steps:
I) at least one second pixel (K2) is selected which is assigned to an image point whose brightness value predefined by the image data (BD) and the predefined brightness change is greater than zero and less than or equal to the boost threshold value, and
II) a selected second pixel (K2) is determined as a residual-light-modulating second pixel (K2) if all assigned first pixels (K1), on account of the image data (BD) and the predefined brightness change, are driven in each case in accordance with a brightness value that is less than a predetermined second threshold value,
wherein the second threshold value is chosen such that the time segment(s) when the first pixels (K1) are to be switched into the first state does or do not overlap the time segment(s) when the residual-light-modulating second pixel is to be switched into the first state, in order to modulate the residual light.

12. The projector as claimed in claim 11, wherein the control unit (7) performs step II) for a second pixel (K2) selected in step I) only if at least one of k neighboring pixels (K2) of the selected second pixel (K2) is assigned to an image point whose brightness value predefined by the image data (BD) and the predefined brightness change is greater than the boost threshold value, wherein k is a natural number greater than or equal to 1.

13. The projector as claimed in any of the preceding claims, comprising
a plurality of color channels in order to generate color partial images of the image to be projected,
wherein a first color channel has the first modulator (3), the second modulator (5) and the imaging optical unit (4), and
wherein each further color channel comprises
- the first modulator or a further first modulator (3), which has a plurality of first pixels capable of being driven independently of one another in order to modulate light capable of impinging on the first modulator (3),
- the imaging optical unit (4) or a further imaging optical unit (4) and
- the second modulator (5) or a further second modulator (5), which has a plurality of second pixels capable of being driven independently of one another and which, by means of the imaging optical unit (4), is capable of being impinged on by the light modulated by the first modulator (3) and modulates this light by means of the second pixels in order to generate a color partial image,
wherein the control unit (7) drives each color channel such that one of the color partial images is generated, and
the projection optical unit (6) images the generated color partial images onto a projection surface (10) such that the color partial images are perceptible as a projected multicolored image,
wherein each color channel is configured for generating a color partial image of a predetermined primary color,
wherein the color locus of the predetermined primary color varies with the brightness to be generated, and
wherein the control unit (7) drives each color channel such that for at least one image point in the multicolored image which, in accordance with the image data, is intended to have a predetermined target color locus and a predetermined target brightness, the color locus shift of the predetermined target color locus that is caused by the color channel or the color channels is compensated for with the target brightness being maintained.

14. The projector as claimed in claim 13, wherein
the control unit (7) brings about a greater compensation during the driving of the color channels with decreasing target brightness.

15. The projector as claimed in claim 13 or 14, wherein
the control unit (7) has, for target color loci generatable by means of the projector (1) with assigned target brightnesses, predetermined and stored correction values for the color channels, wherein the control unit (7) uses the correction values for compensation during the driving of the color channels.

16. A projector for projecting an image, comprising
a first modulator (3), which has a plurality of first pixels (K1) capable of being impinged on by light from a light source (2),
a second modulator (5), which is disposed downstream of the first modulator (3) and has a plurality of second pixels (K2),
and an imaging optical unit (4), which images the first modulator (3) onto the second modulator (5),
wherein the first and second pixels (K1, K2) are switchable independently of one another in each case into a first state, in which light incident on them is used for image generation, and into a second state, in which light incident on them does not serve for image generation, in order pixel-individually to modulate the light for generating the image,
wherein the projector (1) furthermore has a projection optical unit (6), which images light coming from the second modulator (5) onto a projection surface (10) in order to project the image, as a result of which each first pixel is assigned to an image point of the projected image,
and a control unit (7), which drives the two modulators (3, 5) on the basis of supplied image data (BD),
wherein the control unit drives the modulators (3, 5) for the range of the minimum possible to the maximum possible brightness of the image data (BD) with a first resolution of NN levels, wherein NN is an integer greater than one,
wherein each first pixel (K1) is assigned at least one second pixel (K2) in such a way that the imaging optical unit (4),
a) if the first pixel (K1) is switched into the first state, causes the at least one second pixel (K2) to be impinged on by light from the first pixel (K1), in order actively to illuminate the second pixel (K2), and
b) if the first pixel (K1) is switched into the second state, causes the at least one second pixel (K2) not to be impinged on by light from the first pixel (K1), in order not actively to illuminate the second pixel (K2), with the result that only unavoidable residual light is incident on the second pixel (K2),
wherein the control unit (7) drives the modulators (3, 5) such that for at least one first pixel (K1) which is assigned to an image point which, on the basis of the image data (BD), is intended to have a brightness value which is greater than zero,
c) the at least one first pixel (K1) is switched into the second state and the assigned second pixel(s) (K2) is or are switched into the first state only during the time segment(s) in which the at least one first pixel (K1) is switched into the second state, with the result that no active illumination is effected and the assigned second pixel(s) (K2) modulate(s) the residual light, wherein the control unit (7) drives the residual-light-modulating second pixel(s) (K2) on the basis of an increased brightness value,
or
d) the assigned second pixel(s) (K2) is or are switched into the second state for brightness modulation at least at the time segments in which the at least one first pixel (K1) is switched into the first state, with the result that residual light modulated by the assigned second pixel(s) (K2) then emanates and contributes to the image generation, wherein the control unit (7) drives the at least one first pixel (K1) on the basis of an increased brightness value,
**characterized in that**
the control unit (7)
A) applies a predefined brightness change to the brightness value in accordance with the image data (BD) for the image point such that a changed brightness value having a second resolution, which is greater than the first resolution, is calculated, and
B) converts the changed brightness value into the increased brightness value such that it has the first resolution and is greater than a notional comparison value having the first resolution that arises if the predefined brightness change is applied to the brightness value in accordance with the image data (BD), with the result that the control unit (7) drives one of the modulators (3, 5) in step c) or d) with the increased brightness value having the first resolution.

## Revendications

1. Projecteur permettant de projeter une image, comprenant
un premier modulateur (3) qui présente plusieurs premiers pixels (K1) qui peuvent être soumis à la lumière d'une source de lumière (2),
un deuxième modulateur (5) qui est placé en aval du premier modulateur (3) et présente plusieurs deuxièmes pixels (K2),
et une optique de reproduction (4) qui reproduit le premier modulateur (3) sur le deuxième modulateur (5) ,
les premiers et deuxièmes pixels (K1, K2) pouvant être commutés indépendamment les uns des autres respectivement vers un premier état dans lequel la lumière incidente sur ceux-ci est utilisée pour générer une image, et vers un deuxième état dans lequel la lumière incidente sur ceux-ci n'est pas utilisée pour générer une image, afin de moduler individuellement par pixel la lumière servant à générer l'image,
le projecteur (1) présentant en outre une optique de projection (6) qui reproduit la lumière provenant du deuxième modulateur (5) sur une surface de projection (10) afin de projeter l'image de manière à ce qu'un pixel sur deux soit affecté à un point d'image de l'image projetée,
et une unité de commande (7) qui excite les deux modulateurs (3, 5) à l'aide de données d'image (BD) fournies,
l'unité de commande excitant les modulateurs (3, 5) pour la plage de la luminosité minimale possible à la luminosité maximale possible des données d'image (BD) avec une première résolution de NN niveaux, NN étant un nombre entier supérieur à un,
au moins un premier pixel (K1) étant associé à chaque deuxième pixel (K2) de telle sorte que l'optique de reproduction (4)
a) soumet le deuxième pixel (K2) à la lumière provenant du premier pixel (K1) respectivement associé si le premier pixel associé (K1) est commuté vers le premier état afin d'illuminer activement le deuxième pixel (K2), et
b) ne soumet pas le deuxième pixel (K2) à la lumière provenant du premier pixel (K1) respectivement associé si le premier pixel associé (K1) est commuté vers le deuxième état afin de ne pas illuminer activement le deuxième pixel (K2) de sorte que seule une lumière résiduelle inévitable tombe sur le deuxième pixel (K2),
l'unité de commande (7) excitant les modulateurs (3, 5) de telle sorte que pour au moins un deuxième pixel qui est associé à un point d'image qui doit présenter sur la base des données d'image (BD) une valeur de luminosité qui est supérieure à zéro,
c) ledit au moins un deuxième pixel est commuté vers le deuxième état et le ou les premiers pixels (K1) associés ne sont commutés vers le premier état pour la modulation de luminosité que pendant le ou les intervalles de temps dans lesquels ledit au moins un deuxième pixel (K2) est commuté vers le deuxième état de sorte qu'ensuite du au moins un deuxième pixel émane une lumière résiduelle modulée qui contribue à la génération d'image, l'unité de commande (7) excitant le ou les premiers pixels (K1) associés sur la base d'une valeur de luminosité augmentée,
ou
d) le ou les premiers pixels (K1) associés sont commutés vers le deuxième état au moins pendant les intervalles de temps dans lesquels ledit au moins un deuxième pixel (K2) est commuté vers le premier état de sorte qu'aucune illumination active n'a lieu et ledit au moins un deuxième pixel (K2) module la lumière résiduelle, l'unité de commande (7) excitant le deuxième pixel (K2) modulant la lumière résiduelle sur la base d'une valeur de luminosité augmentée,
**caractérisé en ce que** l'unité de commande (7)
A) applique une modification de luminosité prédéfinie à la valeur de luminosité selon les données d'image (BD) pour le point d'image de telle sorte qu'une valeur de luminosité modifiée ayant une deuxième résolution qui est supérieure à la première résolution est calculée, et
B) convertit la valeur de luminosité modifiée en valeur de luminosité augmentée de telle sorte qu'elle présente la première résolution et est supérieure à une valeur de comparaison imaginaire ayant la première résolution qui résulte si la modification de luminosité prédéfinie est appliquée à la valeur de luminosité selon les données d'image (BD) de sorte que l'unité de commande (7) excite l'un des modulateurs (3, 5) à l'étape c) ou d) avec la valeur de luminosité augmentée ayant la première résolution.

2. Projecteur selon la revendication 1, dans lequel l'unité de calcul multiplie la valeur de luminosité selon les données d'image (BD) par une valeur déterminant la modification de luminosité afin de calculer la valeur de luminosité modifiée.

3. Projecteur selon la revendication 1 ou 2, dans lequel pour chaque point d'image, une modification de luminosité individuelle est stockée à laquelle accède l'unité de calcul lors du calcul de la valeur de luminosité modifiée.

4. Projecteur selon l'une quelconque des revendications précédentes, dans lequel la modification de luminosité est une réduction de luminosité.

5. Projecteur selon l'une quelconque des revendications précédentes, dans lequel la modification de luminosité est appliquée pour effectuer une adaptation de la luminosité dans une zone de chevauchement de champ d'image avec un autre projecteur et/ou une adaptation à la luminosité d'un autre projecteur.

6. Projecteur selon l'une quelconque des revendications précédentes, dans lequel la modification de luminosité est appliquée pour compenser une variation de la luminosité des deuxièmes pixels reproduits, due à une variation de la taille des deuxièmes pixels reproduits sur la surface de projection.

7. Projecteur selon l'une quelconque des revendications précédentes, dans lequel la valeur de luminosité augmentée est au moins égale à 10 fois la valeur de luminosité de la valeur de comparaison si NN est égal à 256.

8. Projecteur selon l'une quelconque des revendications précédentes, dans lequel l'unité de commande (7) excite les deux modulateurs (3, 5) au moyen de données de commande (MS, WS) modulées en largeur d'impulsion.

9. Projecteur selon l'une quelconque des revendications précédentes, dans lequel l'unité de commande (7) applique à l'étape A) une modification de luminosité prédéfinie à la valeur de luminosité selon les données d'image (BD) pour chaque point d'image de telle sorte qu'une valeur de luminosité modifiée ayant une deuxième résolution qui est supérieure à la première résolution est calculée, et compare la valeur de luminosité modifiée avec une valeur seuil d'amplification, et effectue l'étape B) si la valeur de luminosité modifiée est inférieure à la valeur seuil d'amplification.

10. Projecteur selon la revendication 9, dans lequel, si la valeur de luminosité modifiée est égale ou supérieure à la valeur seuil d'amplification, l'unité de commande (7) convertit la valeur de luminosité modifiée en une valeur de luminosité ayant la première résolution sans procéder à une augmentation supplémentaire.

11. Projecteur selon la revendication 9 ou 10, dans lequel l'unité de commande (7) détermine ledit au moins un deuxième pixel (K2) qui module la lumière résiduelle selon l'étape c) par les étapes suivantes :
I) d'abord, au moins un deuxième pixel (K2) est sélectionné qui est associé à un point d'image dont la valeur de luminosité prédéfinie par les données d'image (BD) et la modification de luminosité prédéfinie est supérieure à zéro et inférieure ou égale à la valeur seuil d'amplification, et
II) un deuxième pixel (K2) sélectionné est déterminé comme un deuxième pixel (K2) modulant la lumière résiduelle lorsque tous les premiers pixels (K1) associés sont excités en raison des données d'image (BD) et de la modification de luminosité prédéfinie respectivement selon une valeur de luminosité qui est inférieure à une deuxième valeur seuil prédéterminée,
la deuxième valeur seuil étant sélectionnée de telle sorte que le ou les intervalles de temps auxquels les premiers pixels (K1) sont à commuter vers le premier état ne se chevauchent pas avec le ou les intervalles de temps auxquels le deuxième pixel modulant la lumière résiduelle est à commuter vers le premier état pour moduler la lumière résiduelle.

12. Projecteur selon la revendication 11, dans lequel l'unité de commande (7) n'effectue l'étape II) pour un deuxième pixel (K2) sélectionné à l'étape I) que si au moins l'un de k pixels voisins (K2) du deuxième pixel (K2) sélectionné est associé à un point d'image dont la valeur de luminosité prédéfinie par les données d'image (BD) et la modification de luminosité prédéfinie est supérieure à la valeur seuil d'amplification, où k est un nombre naturel supérieur ou égal à 1.

13. Projecteur selon l'une quelconque des revendications précédentes, comprenant
plusieurs canaux de couleur pour générer des trames chromatiques de l'image à projeter, un premier canal de couleur présentant le premier modulateur (3), le deuxième modulateur (5) et l'optique de reproduction (4), et
dans lequel chaque canal de couleur supplémentaire comprend
- le premier modulateur ou un autre premier modulateur (3) qui présente plusieurs premiers pixels qui peuvent être excités indépendamment les uns des autres afin de moduler la lumière à laquelle le premier modulateur (3) peut être soumis,
- l'optique de reproduction (4) ou une autre optique de reproduction (4), et
- le deuxième modulateur (5) ou un autre deuxième modulateur (5) qui présente plusieurs deuxièmes pixels qui peuvent être excités indépendamment les uns des autres, et qui peut être soumis à la lumière modulée par le premier modulateur (3) au moyen de l'optique de reproduction (4) et qui la module au moyen des deuxièmes pixels afin de générer une trame chromatique,
dans lequel l'unité de commande (7) excite chaque canal de couleur de façon à générer l'une des trames chromatiques, et
l'optique de projection (6) reproduit les trames chromatiques générées sur une surface de projection (10) de telle sorte que les trames chromatiques sont perceptibles comme une image multicolore projetée,
chaque canal de couleur étant réalisé pour générer une trame chromatique d'une couleur primaire prédéterminée,
la localisation chromatique de la couleur primaire prédéterminée variant avec la luminosité à générer, et
l'unité de commande (7) excitant chaque canal de couleur de telle sorte que pour au moins un point d'image sur l'image multicolore qui doit présenter selon les données d'image une localisation chromatique prédéterminée et une luminosité cible prédéterminée, le décalage de localisation chromatique, dû au canal de couleur ou aux canaux de couleur, de la localisation chromatique prédéterminée est compensé en conservant la luminosité cible.

14. Projecteur selon la revendication 13, dans lequel, lors de l'excitation des canaux de couleur, l'unité de commande (7) provoque une compensation plus élevée à luminosité cible décroissante.

15. Projecteur selon la revendication 13 ou 14, dans lequel l'unité de commande (7) présente pour des localisations chromatiques, pouvant être générées au moyen du projecteur (1), avec des luminosités cible associées des valeurs de correction prédéterminées et stockées pour les canaux de couleur, l'unité de commande (7) utilisant les valeurs de correction lors de l'excitation des canaux de couleur pour la compensation.

16. Projecteur permettant de projeter une image, comprenant
un premier modulateur (3) qui présente plusieurs premiers pixels (K1) qui peuvent être soumis à la lumière d'une source de lumière (2),
un deuxième modulateur (5) qui est placé en aval du premier modulateur (3) et présente plusieurs deuxièmes pixels (K2),
et une optique de reproduction (4) qui reproduit le premier modulateur (3) sur le deuxième modulateur (5) ,
les premiers et deuxièmes pixels (K1, K2) pouvant être commutés indépendamment les uns des autres respectivement vers un premier état dans lequel la lumière incidente sur ceux-ci est utilisée pour générer une image, et vers un deuxième état dans lequel la lumière incidente sur ceux-ci n'est pas utilisée pour générer une image, afin de moduler individuellement par pixel la lumière servant à générer l'image,
le projecteur (1) présentant en outre une optique de projection (6) qui reproduit la lumière provenant du deuxième modulateur (5) sur une surface de projection (10) afin de projeter l'image de manière à ce que chaque premier pixel soit affecté à un point d'image de l'image projetée,
et une unité de commande (7) qui excite les deux modulateurs (3, 5) à l'aide de données d'image (BD) fournies,
l'unité de commande excitant les modulateurs (3, 5) pour la plage de la luminosité minimale possible à la luminosité maximale possible des données d'image (BD) avec une première résolution de NN niveaux, NN étant un nombre entier supérieur à un,
au moins un deuxième pixel (K2) étant associé à chaque premier pixel (K1) de telle sorte que l'optique de reproduction (4),
a) lorsque le premier pixel (K1) est commuté vers le premier état, soumet ledit au moins un deuxième pixel (K2) à la lumière provenant du premier pixel (K1) afin d'illuminer activement le deuxième pixel (K2), et
b) lorsque le premier pixel (K1) est commuté sur le deuxième état, ne soumet pas ledit au moins un deuxième pixel (K2) à la lumière provenant du premier pixel (K1) afin de ne pas illuminer activement le deuxième pixel (K2) de sorte que seule une lumière résiduelle inévitable tombe sur le deuxième pixel (K2),
l'unité de commande (7) excitant les modulateurs (3, 5) de telle sorte que pour au moins un premier pixel (K1) qui est associé à un point d'image qui doit présenter sur la base des données d'image (BD) une valeur de luminosité qui est supérieure à zéro,
c) ledit au moins un premier pixel (K1) est commuté vers le deuxième état et le ou les deuxièmes pixels (K2) associés ne sont commutés vers le deuxième état pour la modulation de luminosité que pendant le ou les intervalles de temps dans lesquels ledit au moins un premier pixel (K1) est commuté vers le deuxième état de sorte qu'aucune illumination action n'a lieu et le ou les deuxièmes pixels (K2) associés modulent la lumière résiduelle, l'unité de commande (7) excitant le ou les deuxièmes pixels (K2) modulant la lumière résiduelle sur la base d'une valeur de luminosité augmentée,
ou
d) le ou les deuxièmes pixels (K2) associés sont commutés vers le deuxième état pour la modulation de luminosité au moins pendant les intervalles de temps dans lesquels ledit au moins un premier pixel (K1) est commuté vers le premier état de sorte qu'ensuite du ou des deuxièmes pixels (K2) associés émane une lumière résiduelle modulée qui contribue à la génération d'image, l'unité de commande (7) excitant ledit au moins un premier pixel (K1) sur la base d'une valeur de luminosité augmentée,
**caractérisé en ce que** l'unité de commande (7)
A) applique une modification de luminosité prédéfinie à la valeur de luminosité selon les données d'image (BD) pour le point d'image de telle sorte qu'une valeur de luminosité modifiée ayant une deuxième résolution qui est supérieure à la première résolution est calculée, et
B) convertit la valeur de luminosité modifiée en valeur de luminosité augmentée de telle sorte qu'elle présente la première résolution et est supérieure à une valeur de comparaison imaginaire ayant la première résolution qui résulte si la modification de luminosité prédéfinie est appliquée à la valeur de luminosité selon les données d'image (BD) de sorte que l'unité de commande (7) excite l'un des modulateurs (3, 5) à l'étape c) ou d) avec la valeur de luminosité augmentée ayant la première résolution.
